(19) 

Europäisches
Patentamt
European
Patent Office
Office européen
des brevets

(11) **EP 2 341 500 A1**

(12) **EUROPEAN PATENT APPLICATION**
published in accordance with Art. 153(4) EPC

(43) Date of publication:
**06.07.2011 Bulletin 2011/27**

(21) Application number: **09823257.2**

(22) Date of filing: **19.10.2009**

(51) Int Cl.:
**G11B 7/007** (2006.01)       **G11B 7/004** (2006.01)
**G11B 7/0045** (2006.01)       **G11B 7/125** (2006.01)

(86) International application number:
**PCT/JP2009/005457**

(87) International publication number:
**WO 2010/050143 (06.05.2010 Gazette 2010/18)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **27.10.2008   JP 2008276156
28.11.2008   JP 2008304475**

(71) Applicant: **Panasonic Corporation
Kadoma-shi
Osaka 571-8501 (JP)**

(72) Inventors:
• **NAKAMURA, Atsushi**
  **Osaka 540-6207 (JP)**
• **MIYAGAWA, Naoyasu**
  **Osaka 540-6207 (JP)**
• **FURUMIYA, Shigeru**
  **Osaka 540-6207 (JP)**
• **HINO, Yasumori**
  **Osaka 540-6207 (JP)**
• **ITO, Motoshi**
  **Osaka 540-6207 (JP)**
• **SHOJI, Mamoru**
  **Osaka 540-6207 (JP)**
• **TAKAHASHI, Yoshihisa**
  **Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **INFORMATION RECORDING MEDIUM, RECORDING DEVICE AND REPRODUCING DEVICE**

(57)    An information recording medium according to the present invention includes three or more information recording layers. Each of the plurality of information recording layers includes a test recording area usable for adjusting a recording condition. One of the plurality of information recording layers includes a reproduction-only management data area in which management data usable for managing the information recording medium is pre-recorded. One information recording layer includes a recordable management data area in which management data usable for managing the information recording medium is newly writable. Each of the other two or more information recording layers among the plurality of information recording layers includes a test recording area at a radial position overlapping the radial position of a part of the reproduction-only management data area. In the one recording layer including the recordable management data area, the recordable management data area is provided at two positions, i.e., one on the inner side and the other on the outer side to the test recording area.

FIG.17

EP 2 341 500 A1

**Description**

## TECHNICAL FIELD

The present invention relates to a multilayer optical information recording medium including a plurality of information recording layers each having a test recording area (OPC area) usable for finding an optimal recording condition (recording power and/or write strategy), and a recording apparatus and a reproducing apparatus for performing recording on and/or reproduction from the multilayer optical information recording medium.

## BACKGROUND ART

Conventionally, there are standards for optical recording mediums such as BD-R, BD-RE, DVD-RAM, DVD-R, DVD-RW, CD-RW and the like, and there are technologies for recording or reproducing data by irradiating an optical disc conformed to such a standard with laser beam.

One example of such an optical disc uses a phase change recording material for a recording layer. Information recording on a phase change optical disc is performed as follows. An optical disc is irradiated with a laser beam ray, and an atomic bond state of a substance forming a thin film on a recording layer face is locally changed by an energy injected thereto by the laser beam ray. Then, an optical disc is irradiated with a laser beam having a sufficiently lower power than the power used for recording. At this point, a reflectance of the light is changed by the above-mentioned difference in the physical state. By detecting such a change of the reflectance, information can be read.

A phase change optical disc is available, in addition to as a rewritable optical disc using GeSbTe for a recording material of a recording layer, as a write-once optical disc using another recording material. Examples of recording materials for write-once optical discs are disclosed in the following document. Patent Document No. 1 discloses a document which describes using a material containing Te-O-M (where M indicates at least one element selected from metal elements, semi-metal elements and semiconductor elements). A recording material Te-O-M is a material containing Te, O and M and is a composite material containing fine particles of Te, Te-M and M dispersed totally randomly in a matrix of $TeO_2$ immediately after a layer of such a recording material is formed. When a thin film formed of this recording material is irradiated with a collected laser beam, the film is melt and Te or Te-M crystals having a large diameter are deposited. A difference in the optical state occurring at this point can be detected as a signal. Thus, so-called write-once recording, i.e., recording which can be performed only once, is realized.

Beside the above-mentioned write-once optical disc, there are other write-once optical discs in which recording marks are formed by the following systems, for example. In one example, two thin films formed of different materials are overlapped with each other and are heated to be melted by laser. As a result, the two materials are mixed together to form an alloy, and thus a recording mark is formed. This system provides, for example, write-once discs using alloy type materials containing inorganic type materials. In another example, a layer of an organic colorant type material is heated by laser irradiation to thermally decompose the organic colorant. The refractive index of the thermally decomposed part is lowered. As compared with a non-recorded part, the layer part through which the light has been transmitted appears to have a shorter optical path. For incident light, the light transmission part appears like convex and concave pits of a reproduction-only CDs or the like. By this, information is recorded.

For recording a mark edge on these write-once optical discs, the discs are irradiated with a laser beam modulated into a multi-pulse form. By changing the physical state of the recording material in this manner, a recording mark is formed. Information is read by detecting a change of the reflectance between the recorded mark and the space.

Recently, the capacity of optical discs are increasing. The recording capacity of optical discs can be increased by one of the following manners. The length of marks and spaces and track pitch are decreased to raise the recording density of each recording layer; or the number of information recording layers on which information is write-once, or from which information is readable, from the side of a laser beam incident face is raised to increase the recording capacity.

The number of recording layers can be raised to increase the recording capacity by, for example, providing an information recording medium semi-transparent to the laser beam on the laser beam incidence side (the side of the optical disc closer to the laser beam source) and also providing an information recording layer on the opposite side of the optical disc from the laser beam incidence side. An optical disc having a plurality of information recording layers needs to be able to realize recording or reproduction in an appropriate state in all the stacked information recording layers, regardless of the recording state of the information recording layer(s) through which the light has been transmitted. Therefore, it has become more and more important to guarantee the reliability of recording or reproduction signals.

In order to guarantee such reliability, a test recording area, which is also referred to as an "OPC (Optimum Power Control) area", for calibrating the recording power is provided in an inner zone on an inner periphery side or an outer zone on an outer periphery side of the optical disc. "OPC" means a process of optimizing the power level of the laser pulse irradiating the optical disc (recording power calibration), the generation timing and length of the laser pulse (write strategy calibration) or the like by performing test recording on a recordable optical disc. The OPC is performed before regular recording is conducted, or in order to calibrate a change of power caused by a temperature change or the like. Specifically, when an optical disc is loaded on a recording/reproducing apparatus (optical disc apparatus), the optical disc apparatus performs test recording repeatedly in an OPC area provided in the optical disc to calculate a recording power optimal for the optical disc.

However, in the process of performing the recording power calibration, a test recording may possibly be performed in the OPC area at a recording power excessively higher than the appropriate power for recording data. When test recording is performed in an OPC area of an information recording layer close to the laser beam incidence side at an excessively high recording power, the laser beam which is transmitted through such an information recording layer is influenced by the recording state of the OPC area to exert an adverse effect on the recording/reproduction signal quality of an information recording layer farther from the laser beam incidence side. Specifically, the recording power may be deviated from the optimal recording power, an error may occur in reading a reproduction signal, or a tracking error signal or a focusing error signal may be distorted to make the tracking servo or focusing servo unstable.

In order to solve these problems, technologies have been proposed for improving the physical format of an OPC area of, or the recording method for, a multilayer optical disc in order to increase the reliability of the OPC area (for example, Patent Documents Nos. 2, through 7, and Non-patent Document No. 1).

## CITATION LIST

### PATENT LITERATURE

Patent Document No. 1: Japanese Laid-Open Patent Publication No. 2004-362748
Patent Document No. 2: Japanese Laid-Open Patent Publication No. 2005-38584
Patent Document No. 3: International Publication 2002/023542 pamphlet
Patent Document No. 4: PCT National Phase Japanese Laid-Open Patent Publication No. 2007-521606
Patent Document No. 5: PCT National Phase Japanese Laid-Open Patent Publication No. 2007-526595
Patent Document No. 6: PCT National Phase Japanese Laid-Open Patent Publication No. 2007-521589
Patent Document No. 7: PCT National Phase Japanese Laid-Open Patent Publication No. 2008-527602

### NON-PATENT LITERATURE

Non-patent Document No. 1: "Illustrated Blu-ray Disc Reader" ("Zukai Blu-ray Disc Dokuhon") published by Ohmsha, Ltd.

## SUMMARY OF INVENTION

### TECHNICAL PROBLEM

When test recording is performed in an OPC area of an information recording layer close to the laser beam incidence side at an excessively high recording power, the laser beam which is transmitted through such an information recording layer is influenced by the recording state of the OPC area to exert an adverse effect on the recording/reproduction signal quality of an information recording layer farther from the laser beam incidence side. For the purpose of preventing this, Patent Documents Nos. 2 through 7 mainly disclose a physical format of an OPC area of the following multilayer optical disc. The multilayer optical disc includes at least two information recording layers. Each of the information recording layers includes an inner zone, a data zone and an outer zone. At least one OPC area is provided in at least one of the inner zone and the outer zone area. The OPC areas provided in all the plurality of information recording layers or adjacent information recording layers are not physically located at the same position with respect to the scanning direction of the light beam.

Nonetheless, in the case where the OPC areas in the odd-numbered or even-numbered information recording layers are overlapped with each other, light which has been transmitted through an information recording layer close to the light incidence side is influenced by the recording state of such a layer and exerts an adverse effect on the recording or reproduction signal quality of an information recording layer farther from the light incidence side. Even with an optical disc in which presence/absence of recorded data on an information recording layer close to the light incidence side does not influence the recording quality of an information recording layer farther from the light incidence side, if test recording is performed in an OPC area of an information recording layer close to the light incidence side at an excessively high power, the laser beam is influenced when passing through such an information recording layer; for example, the intensity of the laser beam is changed. As a result, the optimal recording power may not be derived by the OPC in such an information recording layer far from the light incidence side.

Meanwhile, if the OPC areas are located such that none of the OPC areas are overlapped with each other, the following is required when the number of information recording layers to be stacked increases. In order to prevent the OPC areas from being located physically at the same position with respect to the scanning direction of the light beam, the physical size of the OPC area in each layer needs to be decreased, or the inner zone or outer zone needs to be enlarged. By either method, the number of times of OPC needs to be decreased, or the size of the user data zone in the optical disc which is used by the user for the original purpose of recording data, needs to be decreased. As understood from these, the above-described problems have not been solved.

Especially, even if the OPC areas can be located such that the OPC areas are not overlapped with each other between adjacent information recording layers or among any of the information recording layers without enlarging the inner zone or the outer zone, the physical size (number of clusters) of the OPC areas needs to be decreased as the number of information recording layers increases. Especially in an optical disc medium allowing recording to be done only once, such as a write-once optical disc, as the physical size of the OPC area is decreased, the number of times the recording power or the recording pulse conditions can be calibrated is decreased. The possibility that the OPC area is used up is also increased. When this occurs, there may be a high possibility that the recording to an optical disc needs to be stopped for the reason that test recording cannot be performed despite the user data zone is not full.

Especially in an optical disc having a higher recording density per face while having a larger number of information recording layers (for example, a BD having a recording capacity of 33.4 GB or 32 GB per layer as a result of increasing the line density), the size of recording marks or spaces becomes significantly smaller than the size of an optical spot. As a result, the inter-code interferences of reproduction signals or thermal interferences between recording marks increase, which generates conspicuous edge shifts between recording marks and spaces. Write strategy adjustment performed for correcting these edge shifts to improve the recording signal quality needs to be performed more accurately by increasing the number of time of test recording. Namely, with a physical format of locating the test recording areas in the inner zone or outer zone so as not to be overlapped with each other as described above, the physical size of the test areas of the information recording layers needs to be decreased and thus many test recording areas cannot be provided.

A test recording area is required to have random accessibility, i.e., the information recording layers should be used freely instead of sequentially.

In the case of a write-once or rewritable optical disc, the recording is not necessarily performed sequentially from the information recording layer farthest from the laser beam incidence side toward the information recording layer closest to the laser beam incidence side like **L0** → **L1** → **L2** → **L3.** Recording needs to be done in a continuous area of each information recording layer while access is being made freely from one information recording layer to another information recording layer. As an example in which recording needs to be done while access is being made freely from one information recording layer to another information recording layer, defect management and file system management will be described.

For an optical disc according to the present invention, an area called a "spare area", to which data can be retracted, is defined on each of an inner periphery side and an outer periphery side of an area used for recording user data. Such areas are respectively referred to as an "ISA (Inner Spare Area)" and an "OSA (Outer Spare Area)". According to defect management, when it becomes impossible to perform recording on an optical disc during data recording for some reason, the optical disc apparatus records data, which was to be recorded in a block now unrecordable, in an unused area in such a spare area. Then, the optical disc apparatus registers a pair of addresses, i.e., an address of a block in which the data was to be recorded (defect block) and an address of an area in which the data was actually recorded (spare area), as spare information in a list called a "defect list" used for managing the spare information. The defect list is secured in the DMA in the inner zone or the outer zone. For reproducing the data, the optical disc apparatus reads the information registered in the defect list. If nothing is registered, the optical disc apparatus reads data from the specified area. If spare information is registered, the optical disc apparatus reads data from the area in which the data is actually written based on the spare information.

With the above-mentioned defect management system, the logical address information is managed on the file system side. Therefore, spare processing may occasionally not reflect the physical structure. Namely, the following can occur: while data is being recorded in the user data zone of **L0,** spare processing is performed; and so, when the spare area of **L0** is full, the data is written in an unrecorded spare area of an information recording layer other than **L0.** In this manner, the recording may possibly be performed continuously over a plurality of information recording layers physically.

According to one type of file system for managing the information in the disc, when the start address and the end address of a logical address are put into sequential correspondence and the start address and the end address of a physical address are put into sequential correspondence, information is recorded sequentially from the start side of the logical address and management information is recorded from the end side of the logical address. In the case of such a file system, it is possible that an instruction is made by the host to record data on the end address side. The end address of the logical address is in the information recording layer **L3** in which the physical end address of the optical disc is located. Accordingly, the data is physically recorded over a plurality of information recording layers.

For this reason, regarding the optimization of the recording power in the OPC area, it is not sufficient to perform the optimization in the OPC area sequentially from the information recording layer farthest from the laser beam incidence side toward the information recording layer closest to the laser beam incidence side. It is necessary to optimize the recording power, the recording pulse conditions and the servo conditions for all the information recording layers beforehand.

The present invention, made in light of the above-described problems, has an object of providing an information recording medium, which minimizes the influence exerted by test recording performed in an OPC area of an information recording layer on test recording performed in an OPC area of another information recording layer and also has OPC areas located in inner areas and/or outer areas efficiently; and a recording apparatus and a reproducing apparatus compatible to such an information recording medium.

**SOLUTION TO PROBLEM**

An information recording medium according to the present invention includes three or more information recording layers. Each of the plurality of information recording layers includes a test recording area usable for adjusting a recording condition; one of the plurality of information recording layers includes a reproduction-only management data area in which management data usable for managing the information recording medium is pre-recorded; and each of the other two or more information recording layers among the plurality of information recording layers includes a test recording area at a radial position partially overlapping the radial position of the management data area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. One of the plurality of information recording layers includes a reproduction-only management data area in which management data usable for managing the information recording medium is pre-recorded; and each of the other two or more information recording layers among the plurality of information recording layers includes a write-prohibited area, in which writing is prohibited, at a radial position at least partially overlapping the radial position of the reproduction-only management data area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the reproduction-only management data area and recording information on the information recording medium based on the management data.

An information recording medium according to the present invention includes three or more information recording layers Each of the plurality of information recording layers includes a test recording area usable for adjusting a recording condition; one of the plurality of information recording layers includes a recordable management data area in which management data usable for managing the information recording medium is newly writable and a test recording area; and the recordable management data area is located inner and outer to the test recording area.

A reproducing apparatus according to the present invention for reproducing information recorded on the above information recording includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. At least two of the plurality of information recording layers each include a recordable management data area in which management data usable for managing the information recording medium is newly writable; and the recordable management data area of one of the information recording layers and the recordable management data area of at least one other of the plurality of information recording layers are located at radial positions at least partially overlapping each other.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the recordable management data area and recording information on the information recording medium based on the management data.

An information recording medium according to the present invention includes three or more information recording layers. One of the plurality of information recording layers includes a plurality of blocks of recordable management data areas in which management data usable for managing the information recording medium is newly writable.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the recordable management data area and recording information on the information recording medium based on the management data.

An information recording medium according to the present invention includes three or more information recording layers. One of the plurality of information recording layers includes a plurality of recordable management data areas in which management data usable for managing the information recording medium is newly writable; and a test recording area usable for adjusting a recording condition is located between two of the recordable management data areas.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. One of the plurality of information recording layers includes a test recording area usable for adjusting a recording condition; a first write-prohibited area in which writing is prohibited, the first write-prohibited area being located adjacently inner to the test recording area; a second write-prohibited area in which writing is prohibited, the second write-prohibited area being located adjacently outer to the test recording area; a first area located adjacently inner to the first write-prohibited area; and a second area located adjacently outer to the second write-prohibited area; and information of the same attribute is recorded in the first area and the second area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers Each of at least one of the plurality of information recording layers includes first and second test recording areas usable for adjusting a recording condition; first test recording is performed in the first test recording area; after the first test recording, second test recording based on a result of the first test recording is performed in the second test recording area; and the second test recording area has a physical size larger than the physical size of the first test recording area.

Each of at least two of the plurality of information recording layers includes first and second test recording areas; and the test recording using the first test recording is performed sequentially from on the information recording layer farthest from a laser beam incidence face of the information recording medium.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the first and second test recording areas and recording information on the information recording medium with the adjusted recording condition.

**ADVANTAGEOUS EFFECTS OF INVENTION**

An information recording medium according to the present invention includes three or more information recording layers. Each of the plurality of information recording layers includes a test recording area usable for adjusting a recording condition. One of the plurality of information recording layers includes a reproduction-only management data area in which management data usable for managing the information recording medium is pre-recorded. Each of the other two or more information recording layers among the plurality of information recording layers includes a test recording area at a radial position partially overlapping the radial position of the management data area.

As described above, according to the present invention, a part of the reproduction-only management data area (for example, the PIC area) is located to overlap at least a part of the test recording area (for example, the OPC area) of each of at least two other information recording layers. In the zone having a limited size, the OPC areas are located to overlap the PIC area. Owing to such an arrangement, the degree at which the OPC areas are located at the same radial position can be minimized, and also a large size of space can be provided for the OPC areas to decrease the possibility of the OPC areas being used up. In the PIC area, the same information is recorded in repetition. Therefore, even if the OPC areas are damaged by the laser beam, information can be read with certainty from a part of the PIC area which does not overlap the damaged OPC areas.

An information recording medium according to the present invention includes three or more information recording layers. One of the plurality of information recording layers includes a reproduction-only management data area in which management data usable for managing the information recording medium is pre-recorded. Each of the other two or more information recording layers among the plurality of information recording layers includes a write-prohibited area, in which writing is prohibited, at a radial position at least partially overlapping the radial position of the reproduction-only management data area.

As described above, according to the present invention, at least a part of the reproduction-only management data area (for example, the PIC area) is located to overlap at least a part of the write-prohibited area (for example, the buffer area) of each of at least two other information recording layers. No data is written in the buffer area, and so the buffer area is not damaged by the laser beam. Therefore, information can be read with certainty from a part of the PIC area which overlaps the buffer area. If an area of another layer overlapping a part of the PIC area (for example, an OPC area) is damaged, information may possibly not be read from the part of the PIC area corresponding to the damaged area. However, even in such a case, information can be read with certainty from the part of the PIC area overlapping the buffer area because the same information is recorded in repetition in the PIC area. In the PIC area, disc management data on each information recording layer is recorded in units of blocks, and a unit block is recorded in the PIC area in repetition a plurality of times. Therefore, even if the disc management data in almost the entire area of the PIC area is made unreadable by the influence of the writing operation on the layer closer to the laser beam incidence side, this does not cause a problem. Namely, it is sufficient if the disc management data of at least one block among the plurality of blocks recorded in repetition is readable. It is sufficient if the disc management data in the PIC area at a position farther from the light beam incidence side than the buffer areas of **L1** through **L3** is readable with no problem. Namely, by locating the PIC area at a position farther from the light beam incidence side than the OPC areas of **L1** through **L3** and also locating the buffer areas of a sufficient size adjacent to the OPC areas of **L1** through **L3,** the space of the lead-in zone can be efficiently used such that the OPC areas of a sufficient size can be provided.

An information recording medium according to the present invention includes three or more information recording layers. Each of the plurality of information recording layers includes a test recording area usable for adjusting a recording condition. One of the plurality of information recording layers includes a recordable management data area in which management data usable for managing the information recording medium is newly writable and a test recording area. The recordable management data area is located inner and outer to the test recording area.

As described above, according to the present invention, by providing a recordable management data area (for example, TDMA) inner and outer to the OPC area, i.e., by providing two recordable management data areas in one information recording layer, the area size of a part of the OPC area overlapping the OPC area of another information recording layer can be reduced or made zero. If the recordable management data area (for example, TDMA) is provided as one block, the OPC area needs to be located as overlapping the OPC area of another information recording layer. However, where the recordable management data area is located inner and outer to the OPC area, i.e., at two positions in a divided manner, the degree at which the OPC areas are located at the same radial position can be minimized. In addition, a large size of space can be provided both for the OPC area and the recordable management data area. This decreases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

An information recording medium according to the present invention includes three or more information recording layers. At least two of the plurality of information recording layers each include a recordable management data area in which management data usable for managing the information recording medium is newly writable. The recordable management data area of one of the information recording layers and the recordable management data area of at least one other of the plurality of information recording layers are located at radial positions at least partially overlapping each other.

As described above, according to the present invention, the management data area (for example, DMA (TDMA)) of one information recording layer and the management data area (for example, DMA (TDMA)) of another information recording layer are located at radial positions overlapping each other at least partially. By locating the DMAs (TDMAs) to overlap each other, the zone having a limited size can be effectively used. For example, where both of the OPC area and the DMA (TDMA) of an information recording layer far from the laser beam irradiation face and the DMA (TDMA) of an information recording layer close to the laser beam irradiation face are located at radial positions overlapping each other, the zone of the information recording layer close to the laser beam irradiation face can be effective used. The DMA (TDMA) is irradiated with post-power adjustment laser beam, and thus is not damaged by an excessively high recording power. Therefore, even where the DMAs (TDMAs) overlap each other, information recorded on the information recording layer far from the laser beam irradiation face can be normally read. Even if the OPC area of the information recording layer far from the laser beam irradiation face is damaged by the laser beam, information can be read with no problem from the DMA (TDMA), of the information recording layer close to the laser beam irradiation face, at the radial position corresponding to the damaged OPC area.

An information recording medium according to the present invention includes three or more information recording layers. One of the plurality of information recording layers includes a plurality of blocks of recordable management data areas in which management data usable for managing the information recording medium is newly writable.

As described above, according to the present invention, by providing recordable management data areas (for example, TDMAs) at two positions in one information recording layer, the area size of a part of the OPC area in the one information recording layer overlapping the OPC area of another information recording layer can be reduced or made zero. If the recordable management data area (for example, TDMA) is provided as one block, the OPC area needs to be located as overlapping the OPC area of another information recording layer. However, where the recordable management data area is located as being divided into two locations sandwiching the OPC area, the degree at which the OPC areas are located at the same radial position can be minimized. In addition, a large size of space can be provided both for the OPC area and the recordable management data area. This decreases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

An information recording medium according to the present invention includes three or more information recording layers. One of the plurality of information recording layers includes a plurality of recordable management data areas in which management data usable for managing the information recording medium is newly writable. A test recording area usable for adjusting a recording condition is located between two of the recordable management data areas.

As described above, according to the present invention, an OPC area is located between two management data areas (for example, DMAs (TDMAs)). Owing to this, the OPC area can be located at a position far from the user data zone. Because of this arrangement, for example, an OPC area of an information recording layer far from the laser beam irradiation face and a DMA (TDMA) of an information recording layer close to the laser beam irradiation face may occasionally be located at radial positions overlapping each other. In this case, even if the OPC area of the information recording layer far from the laser beam irradiation face is damaged by the laser beam, information can be read with no problem from the DMA (TDMA) of the information recording layer close to the laser beam irradiation face.

In the case where the OPC area is located in the DMA (TDMA), the remaining area of the zone having a limited size can be effectively used by the area size of the DMA (TDMA).

An information recording medium according to the present invention includes three or more information recording layers. One of the plurality of information recording layers includes a test recording area usable for adjusting a recording condition, a first write-prohibited area in which writing is prohibited, the first write-prohibited area being located adjacently inner to the test recording area, a second write-prohibited area in which writing is prohibited, the second write-prohibited area being located adjacently outer to the test recording area, a first area located adjacently inner to the first write-prohibited area, and a second area located adjacently outer to the second write-prohibited area. Information of the same attribute is recorded in the first area and the second area.

As described above, according to the present invention, where the OPC area is located between two DMAs (TDMAs), a buffer area is located between each of the DMAs (TDMAs) and the OPC area. Owing to this, even if the OPC area is damaged by the laser beam, the DMAs (TDMAs) are protected against the damage. Since information of the same attribute is recorded in the two DMAs (TDMAs), even if one of the DMAs (TDMAs) is damaged and the information therein becomes unreadable, information can be read with certainty from the other DMA (TDMA).

By providing recordable management data areas (for example, TDMAs) at two positions sandwiching the OPC area in one information recording layer, the area size of a part of the OPC area overlapping the OPC area of another information recording layer can be reduced or made zero. If the recordable management data area (for example, TDMA) is provided as one block, the OPC areas need to be located as overlapping each other. However, where the recordable management data area is located as being divided into two locations sandwiching the OPC area, the degree at which the OPC areas are located at the same radial position can be minimized. In addition, a large size of space can be provided for the OPC area and the recordable management data area. This decreases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

An information recording medium according to the present invention includes three or more information recording layers. Each of at least one of the plurality of information recording layers includes first and second test recording areas usable for adjusting a recording condition. First test recording is performed in the first test recording area. After the first test recording, second test recording based on a result of the first test recording is performed in the second test recording area. The second test recording area has a physical size larger than the physical size of the first test recording area.

As described above, according to the present invention, first, laser beam power adjustment is performed using the first test recording area. After the power adjustment, a recording parameter other than the power, such as the pulse waveform or the like is performed using the second test recording area. Since the second test recording area is used after the power adjustment, the second test recording area can be prevented from being damaged. Owing to this, the test recording areas of a plurality of information recording layers can be located at radial positions overlapping each other. Thus, the zone having a limited size can be effectively used.

According to the present invention directed to a multilayer optical information recording medium, and a recording method, a reproducing method and a recording/reproducing apparatus for a multilayer optical information recording medium, the following is realized. For performing test recording in an OPC area in each of a plurality of information recording layers of an multilayer optical disc including the plurality of information recording layers in order to adjust the recording power or the write strategy to be optimal, highly precise recording power adjustment and write strategy adjustment are realized even in an information recording layer far from the laser beam incidence side regardless of the recording state of an information recording layer close to the laser beam incidence side. As a result, a highly reliable multilayer optical disc can be provided.

By arranging the physical format of the test recording areas in a devised manner, the physical size of the OPC areas of the information recording layers can be increased within a limited inner zone or outer zone. Therefore, highly reliable recording power adjustment and write strategy adjustment are realized without decreasing the number of times of test recording. Especially for an optical disc on which recording can be done only once, for example, a write-once optical disc, such a situation can be avoided that the OPC areas are used up although the user data zone is not full. Thus, the problem that, for example, the recording cannot be performed on the optical disc merely because test recording cannot be performed can be solved.

As a result, a large capacity and high density multilayer optical information recording medium is realized while a highly reliable information recording/reproducing apparatus is realized.

## BRIEF DESCRIPTION OF DRAWINGS

FIG. **1** shows an overall structure of an optical information recording/reproducing apparatus according to an embodiment of the present invention.

FIG. **2** shows a cross-sectional view of a track layout of each layer of a four-layer optical disc according to an embodiment of the present invention.

FIG. **3** shows an example of a physical format of OPC areas of each information recording layer according to Embodiment 1 of the present invention.

FIG. **4** shows an example of a physical format of OPC areas of each information recording layer according to Embodiment 2 of the present invention.

FIG. **5** shows an example of a physical format of OPC areas of each information recording layer according to Embodiment 3 of the present invention.

FIG. **6** shows an example of a physical format of OPC areas of each information recording layer according to Embodiment 4 of the present invention.

FIG. **7** shows an example of a physical format of OPC areas of each information recording layer according to Embodiment 5 of the present invention.

FIG. **8** is a flowchart showing a procedure of performing test recording in a test recording area of a four-layer optical disc according to one of Embodiments 1 through 4 of the present invention.

FIG. **9** shows an overview of a stacking structure of a four-layer optical disc according to an embodiment of the present invention.

FIG. **10** shows a planar area structure of a multilayer optical disc medium according to an embodiment of the present invention.

FIG. **11** is a flowchart showing a procedure of performing test recording in a test recording area of a four-layer optical disc according to Embodiment 5 of the present invention.

FIG. **12** schematically shows a reproduction signal according to Embodiment 8 of the present invention.

FIG. **13** shows the relationship of the logical product of the modulation signal degree and the recording power, with respect to the recording power.

FIG. **14** shows the directions in which the clusters in the OPC areas are used according to an embodiment of the present invention.

FIG. **15** shows a cross-sectional view of a track layout of each layer of a four-layer optical disc according to an embodiment of the present invention.

FIG. **16** is a flowchart showing a procedure for optimizing servo conditions of a four-layer optical disc according to Embodiment 9 of the present invention.

FIG. **17** shows another example of a physical format of OPC areas in each information recording layer according to Embodiment 5 of the present invention.

FIG. **18(a)** shows a write-once disc including two information recording layers according to an embodiment of the present invention, and FIG. **18(b)** shows a rewritable disc including two information recording layers according to an embodiment of the present invention.

FIG. **19** shows an example of a structure of a multi-layer disc according to an embodiment of the present invention.

FIG. **20** shows an example of a structure of a single layer disc according to an embodiment of the present invention.

FIG. **21** shows an example of a structure of a two-layer disc according to an embodiment of the present invention.

FIG. **22** shows an example of a structure of a three-layer disc according to an embodiment of the present invention.

FIG. **23** shows an example of a structure of a four-layer disc according to an embodiment of the present invention.

FIG. **24** shows a physical structure of an optical disc **1** according to an embodiment of the present invention.

FIG. **25(a)** shows an example of a 25 GB BD according to an embodiment of the present invention, and FIG. **25(b)** shows an example of an optical disc having a higher recording density than that of the 25 GB BD according to an embodiment of the present invention.

FIG. **26** shows how a mark sequence recorded on a track is irradiated with a light beam according to an embodiment of the present invention.

FIG. **27** shows the relationship between the OTF and the shortest recording mark when the recording capacity is 25GB according to an embodiment of the present invention.

FIG. **28** shows an example in which the spatial frequency of the shortest mark (2T) is higher than the OTF cutoff frequency and the amplitude of a 2T reproduction signal is 0 according to an embodiment of the present invention.

## **DESCRIPTION OF EMBODIMENTS**

Hereinafter, preferable embodiments of a multilayer optical information recording medium; and a recording method, a reproducing method and a recording/reproducing apparatus for a multilayer optical information recording medium according to the present invention will be described in detail with reference to the drawings.

In the embodiments of the present invention, a BD-R, which is a write-once optical disc having four layers will be described as a recording medium. This does not specifically limit the characteristics of the recording medium, and a BD-R is operable with a technology common to recording mediums, by which information is recorded by injecting an energy to a recording medium to form a mark or a pit which have different physical properties from those of an unrecorded area. An overview of the physical format of a Blu-ray disc (BD) used in these embodiments is also disclosed in Non-patent Document No. 1.

This technology is also common to a so-called hybrid multilayer optical information recording medium obtained by combining an information recording layer of a reproduction-only optical disc which includes a reflection layer formed on a substrate having concave and convex pits, and either one of an information recording layer of a write-once optical disc and an information recording layer of a rewritable optical disc.

Main optical conditions used in the optical disc, and the recording method, the reproducing method and the recording/reproducing apparatus for the optical disc according to the present invention are as follows. The wavelength of a laser beam is 400 nm to 410 nm, specifically, 405 nm; and the NA (Numerical Aperture) of the objective lens is 0.84 to 0.86, specifically, NA = 0.85. The physical structure of the multilayer optical disc medium is as follows: track pitch is 0.32 $\mu$m; four recordable or readable information recording layers are stacked from the laser beam incident face; and the distance from the laser incident face to each information recording face is 50 $\mu$m to 110 $\mu$m. Recording performed on the optical disc with the coding system of 17PP modulation and the shortest mark length (2T) of 0.112 $\mu$m to 0.124 $\mu$m, specifically 0.112 $\mu$m will be described as an example. When recording is performed with a line density providing a shortest mark length of 0.112 $\mu$m, the recording capacity of one layer of a BD having a diameter of 12 cm corresponds to about 33.4 GB. When three such layers are stacked, the recording capacity corresponds to about 100 GB; and when four such layers are stacked, the recording capacity corresponds to about 134 GB. When recording is performed with a line density providing a shortest mark length of 0.116 $\mu$m, the recording capacity of one layer of a BD having a diameter of 12 cm corresponds to about 32 GB. When three such layers are stacked, the recording capacity corresponds to about 96 GB; and when four such layers are stacked, the recording capacity corresponds to about 128 GB. When recording is performed with a line density providing a shortest mark length of 0.124 $\mu$lm, the recording capacity of one layer of a BD having a diameter of 12 cm corresponds to about 30 GB. When three such layers are stacked, the recording capacity corresponds to about 90 GB; and when four such layers are stacked, the recording capacity corresponds to about 120 GB.

In the following example, the recording speed corresponds to BD 2X with a channel rate of 132 MHz (Tw = 7.58 ns). The linear velocity is 7.38 m/sec.

The various parameters shown here (number of layers, layer thickness, recording density, recording capacity, recording speed, etc.) are one example, and the present invention is not limited to these numerical values.

In the present invention, an "OPC (Optimum Power Control) area" means an area assigned for performing test recording (or also referred to as "OPC") in an inner zone provided on the inner periphery side of a recording medium or an outer zone provided in an outer periphery side of the recording medium. "OPC (Optimum Power Control)" means a process, performed before data recording, of optimizing the recording power level of a laser beam which irradiates a recordable optical disc at the time of recording. Specifically, when an optical disc is loaded on a recording/reproducing apparatus (optical disc apparatus), the optical disc apparatus repeatedly executes a process of performing test recording in an OPC area in the optical disc and reproducing a recorded signal to calculate an optimal level for the recording power. The recording power determined in this process is set as the optimal recording power. For recording data, the optical disc is irradiated with a laser beam at the optimal recording power. Therefore, a recordable optical disc necessarily includes a test recording area.

In a multilayer optical disc, the transmittance of the laser beam through an information recording layer close to the laser beam incidence side influences the laser beam emission power for performing recording on an information recording layer farther from the laser beam incidence side. In addition, the optimal recording condition (optimal recording power, the optimal recording pulse conditions, etc.) are different among individual information recording layers by the difference in the structural elements such as, for example, the composition of the recording material used for the recording film of the information recording layer, and the thickness of the recording film, protective layer, reflection layer and the like. Therefore, all the information recording layers each need an OPC area for adjusting such recording conditions.

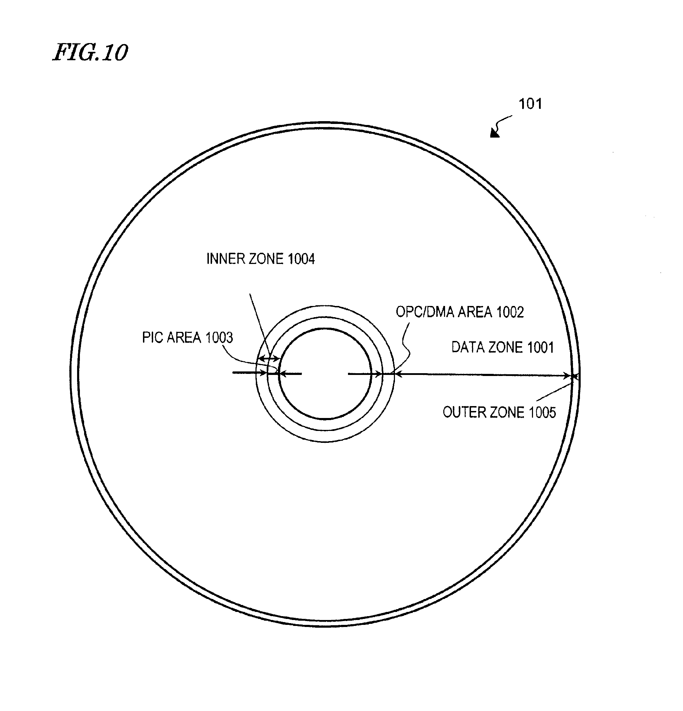

Now, a multilayer optical disc, which is an example of a multilayer optical information recording medium according to the present invention, will be described with reference to the drawings. FIG. **10** shows a planar area structure of a multilayer optical disc medium **101.** An inner zone **1004,** a data zone **1001,** and an outer zone **1005** are located from an inner periphery of the optical disc medium. In the inner zone **1004,** a PIC (Permanent Information & Control data) area **1003** and an OPC/DMA area **1002** are located. The OPC area is used for performing test recording, before data is recorded in the data zone **1001,** to obtain a recording power and recording pulse stream conditions which are optimal for the disc or for each information recording layer. The OPC area is occasionally referred to as a "calibration area". The OPC area is also used for performing test recording to make an adjustment for a change caused to the recording power or to the recording pulse stream by an individual variance of the optical disc, or an environmental changes such as a rapid temperature change, adherence of dirt or dust, or the like.

The PIC area **1003** is a reproduction-only area and has disc management information recorded therein by modulating a groove at high speed. The disc management information recorded in this area includes OPC parameters required to obtain the optimal recording power, write strategy type, recommended values for the generation timing, length and the like of laser pulses (recording pulse conditions), recording linear velocity, reproduction power, version number and the like. Although not shown in FIG. **10,** an area called a BCA (Burst Cutting Area) inner to the PIC area includes a unique number for medium identification recorded by burning the information face in a bar code form. The unique number is used for copyright protection or the like. The data zone **1001** is used for actually recording data specified by a user, and is also referred to as a "user data zone". In the outer zone, there is no reproduction-only PIC area, and an OPC/DMA area is located for test recording or for management information of the recorded data, like in the inner zone.

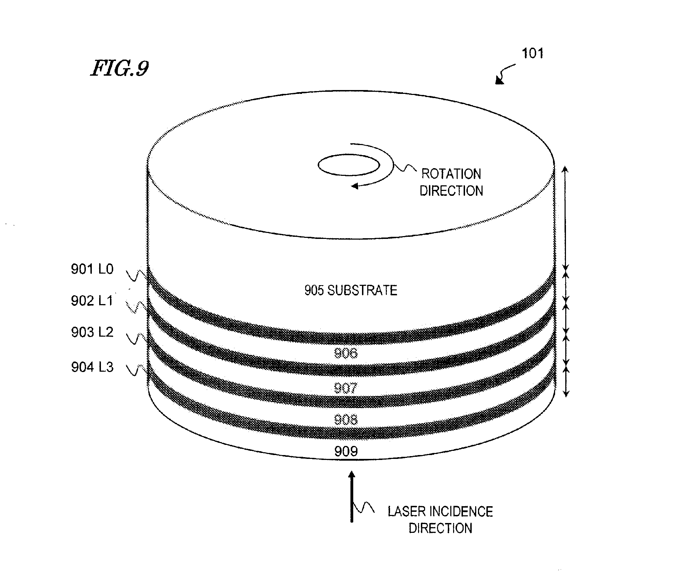

Now, FIG. **9** is a schematic view of a stacking structure of four-layer optical disc medium. Hereinafter, in the embodiments, the layers are numbered from the 0th information recording layer, instead of the first information recording layer, for the sake of convenience, i.e., in order to match the number (#) of each information recording layer and the abbreviated name thereof. Reference numeral **90** is a substrate, reference numeral **901** is a zeroth information recording layer **L0** (abbreviation of Layer0), reference numeral **902** is a first information recording layer **L1,** reference numeral **903** is a second information recording layer **L22,** and reference numeral **904** is a third information recording layer **L3.** Reference numeral **909** is a cover layer, and the laser beam is incident from the cover layer side.

The substrate **905** has a thickness of about 1.1 mm, and the cover layer **909** has a thickness of at least 40 $\mu$m. The information faces are separated from each other by transparent space layers **906, 907** and **908.** Specifically in this embodiment, the cover layer **909** has a thickness of 53 $\mu$m, a space layer between **L3** and **L2** has a thickness of 12 $\mu$m, a space layer between **L2** and **L1** has a thickness of 20 $\mu$m, and a space layer between **L1** and **L0** has a thickness of 15 $\mu$m. It is desirable that the gaps between the information recording layers separated by the space layers are designed so as to minimize the interference of diffracting light from the information recording layers (interlayer interference), and the gaps are not limited to the interlayer distances provided by the above-mentioned thicknesses of the space layers.

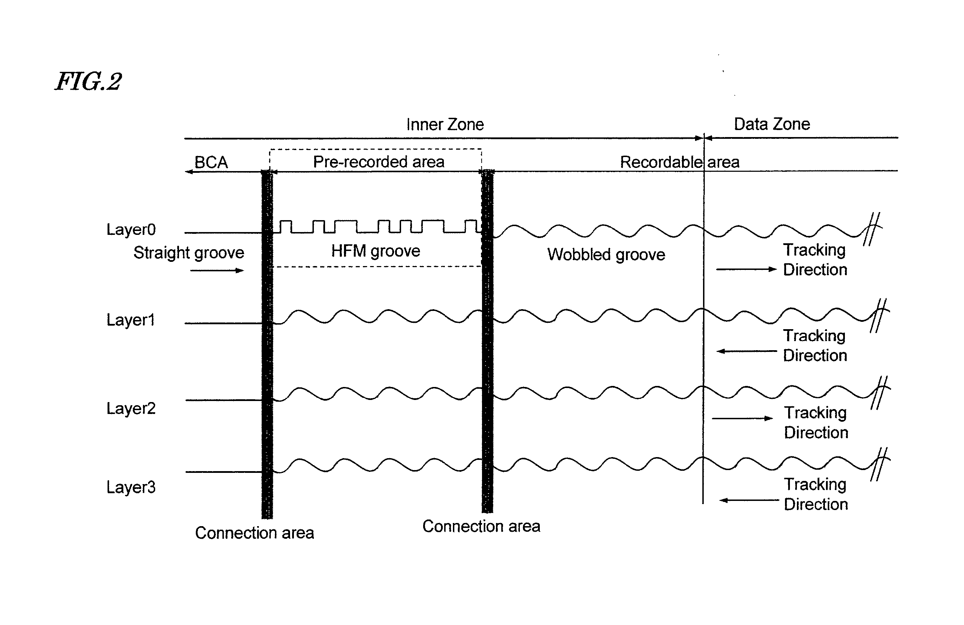

Now, FIG. **2** is a cross-sectional view of a track layout of each layer of the four-layer optical disc medium according to the present invention. As shown in FIG. **2,** on the zeroth information recording layer of the four-layer optical disc medium, a unique ID for the individual medium referred to as BCA is pre-recorded by, for example, burning the information face. The BCA is formed as bar code-like recording data by concentrically arranging recording marks, and is provided only on **L0.**

An area next to BCA is a PIC area. In the PIC area, information referred to as "disc management information" or "DI" (Disc Information) is recorded beforehand. The disc management information includes version number, layer number, maximum recording speed, disc type such as write-once type, rewritable type or the like, recommended recording power for each information recording layer, various parameters required for OPC, recording pulse conditions, write strategy, information used for copy right protection, and the like. In the PIC area, the disc management information is recorded by wobbling a guide groove formed spirally. Such pre-recorded information is non-rewritable, reproduction-only information which is pre-recorded at the time of production of the disc by a disc manufacturer. Namely, BCA and the PIC area are reproduction-only areas.

In an area next to the PIC area, an OPC area usable by the optical disc apparatus for performing test recording to obtain a recording power, recording pulse conditions or the like, and a disc management area (DMA), are provided. The OPC area is a test recording area usable for test recording performed to calibrate a change of the recording power or the recording pulse conditions when the disc is inserted into the optical disc apparatus or when a temperature change equal to or greater than a certain level occurs during the operation. The DMA (Disc Management Area) is an area usable for managing the disc management information or defect information.

An area having a radius of 24.0 mm to 58.0 mm is a data zone. The data zone is used for actually recording data desired by the user. In the data zone, an ISA (Inner Space Area) and an OSA (Outer Space Area) are set as exchangeable areas before and after a data area used for recording or reproduction of the user data. When, for example, the optical disc is used for a personal computer, a part of the data zone may become unrecordable or unreproduceable by a defect or the like. In such a case, the unrecordable or unreproduceable part (sector, cluster) is exchanged by such an exchangeable area. In real-time recording which needs a high transfer rate, such as video recording or reproduction, etc., such an exchangeable area may not be set occasionally. An area outer to the area having a radius of 58.0 mm is used as an outer zone. The outer zone includes an OPC area and a disc management area (DMA) substantially the same as those in the inner zone. The outer zone is also used as a buffer area for accommodating an overrun during a seek operation.

In the first through third information recording layers (**L1** through **L3**), an area corresponding to BCA is provided but the unique ID is not recorded. The reason is that even if BCA information including the unique ID is newly recorded in the first through third information recording layers (**L1** through **L3**), reliable recording may not be possibly performed. In other words, the reliability of the BCA in **L0** is improved by not recording BCA in the layers other than **L0.**

In the four-layer optical disc medium according to the present invention, the reproduction-only PIC area having the disc management information or the like recorded at the time of production of the disc is located only in the zeroth information face (**L0**). Thus, the optical disc apparatus can collectively read the disc management information on all the information faces of **L0** through **L3** and can shorten the starting time.

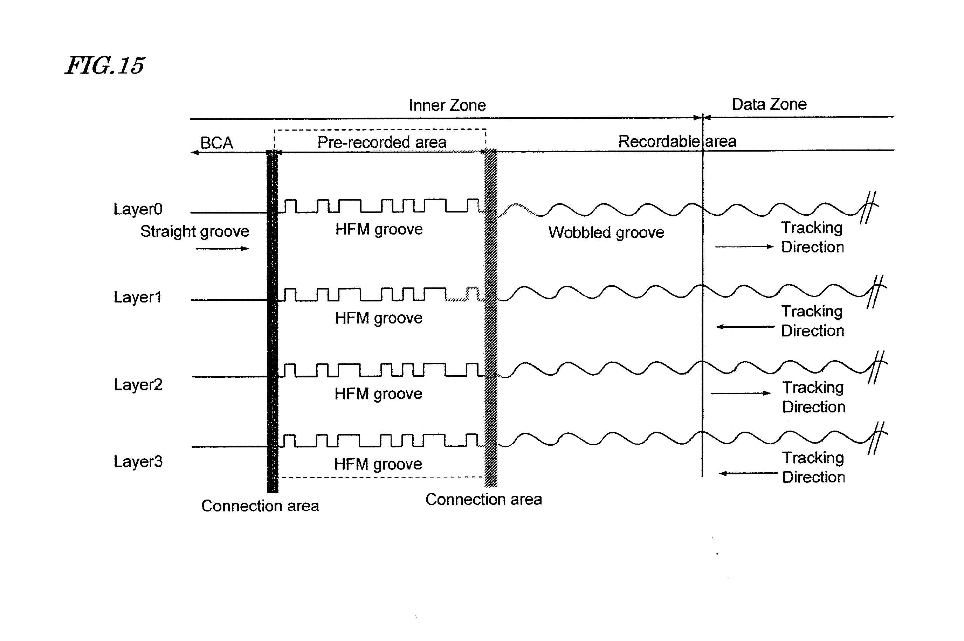

FIG. **15** shows a cross-sectional view of a track layout of each layer of another four-layer optical disc according to the present invention. Unlike the four-layer optical disc shown in FIG. **2,** in the four-layer optical disc shown in FIG. **15,** a reproduction-only PIC area having disc management information and the like pre-recorded at the time of production of the disc is located in the zeroth information face **(L0)** through the third information face (**L3**). Owing to this, the optical disc apparatus can record the data in each of the information recording layers **L0, L1, L2** and **L3** dispersedly. Therefore, even if the PIC information in one information recording layer is destroyed or deteriorated, the disc management information can be read from the PIC area of another information recording layer. This can improve the reliability. Since the PIC areas can be located dispersedly in the information recording layers, a space for the PIC area of one information recording layer can be decreased, and a space provided by this can be used for the OPC area. In this manner, the lead-in zone can be efficiently used.

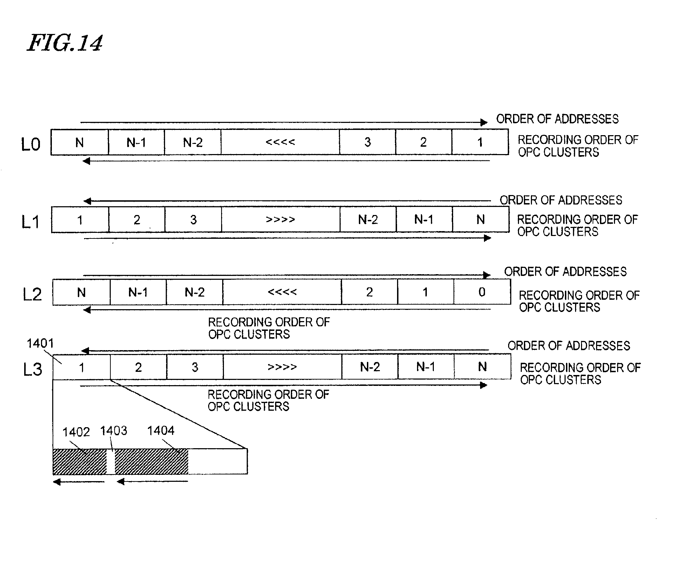

FIG. **14** shows the directions in which the clusters in the OPC area are used.

In the zeroth information recording layer **L0** and the second information recording layer **L2,** addresses are recorded in the direction from the inner periphery to the outer periphery, and data is recorded or reproduced from the inner periphery to the outer periphery along the order of the addresses.

In the first information recording layer **L1** and the third information recording layer **L3,** addresses are recorded in the direction from the outer periphery to the inner periphery, and data is recorded or reproduced from the outer periphery to the inner periphery.

Since recording or reproduction is performed in this manner in the data zone, a full seek from the outer periphery to the inner periphery is not necessary. Recording or reproduction can be performed sequentially from the layer farthest from the light incidence side toward the layer closest to the light incidence side, in the order of: the inner periphery to the outer periphery of the zeroth information recording layer (**L0**), then the outer periphery to the inner periphery of the first information recording layer (**L1**), et seq. In this manner, real-time recording with a high transfer rate, such as video recording or reproduction, etc. can be performed for a long time.

The clusters in the OPC area are used in the opposite direction from in the data zone. In **L0** and **L2,** the clusters are used from the outer periphery to the inner periphery; whereas in **L1** and **L3,** the clusters are used from the inner periphery to the outer periphery. For example, when OPC is performed with a cluster **1401** in **L3,** recording is performed in an area **1402** in the cluster **1401** by the first OPC, and then a marker is recorded in an area **1403.** Then, recording is performed in an area **1404** in the direction shown here by the second OPC.

(EMBODIMENT 1)

Hereinafter, a physical format, especially, positional arrangement of OPC areas, of a multilayer optical disc according to Embodiment 1 of the present invention will be described with reference to the drawings.

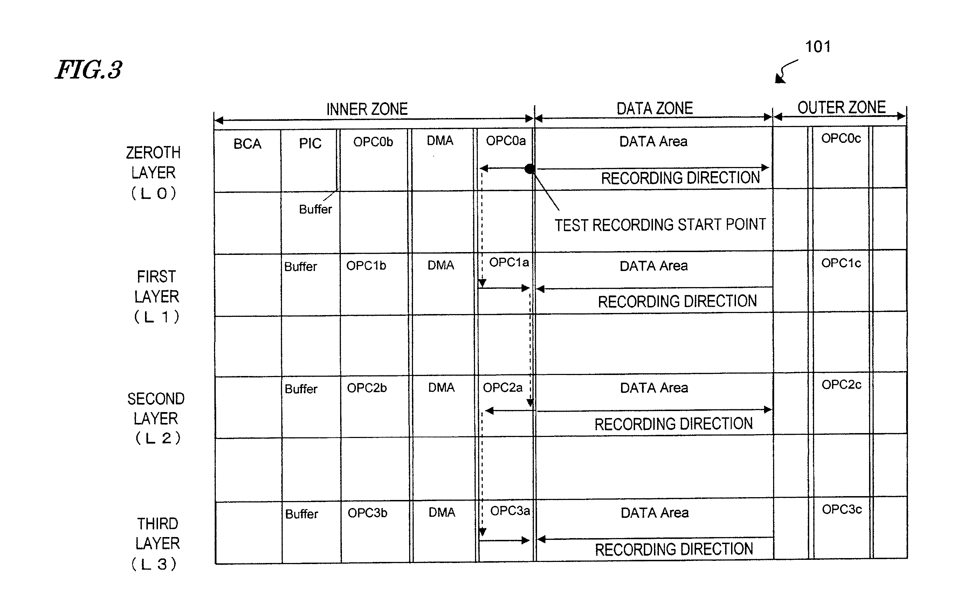

FIG. **3** shows an example of a physical format of OPC areas in each information recording layer according to Embodiment 1 of the present invention. FIG. **3** shows an example of a physical format, especially, positional arrangement of the OPC areas of the optical disc medium **101** including four information recording layers. The zeroth information recording layer (**L0**) is located farthest from the laser beam incidence side, and the first information recording layer (**L1**) is located closer, than the zeroth information recording layer, to the laser beam incidence side. The second information recording layer (**L2**) and the third information recording layer (**L3**) are sequentially located from the side of the first information recording layer toward the laser beam incidence side. These information recording layers include an inner zone, a data zone and an outer zone from the inner periphery side to the outer periphery side along the radial direction.

In the inner zone of the zeroth information recording layer, a BCA (Burst Cutting Area) and a PIC area (management data area) are provided from the inner periphery thereof. The BCA and the PIC area are reproduction-only areas which are formed at the time of production of the disc, and disc management information (control information) or the like is described therein. Areas from the inner periphery to the PIC area are read-only areas, and areas outer to the PIC area are recordable areas. Adjacently outer to the PIC area, a second test recording area (OPC0-B area) usable for performing test recording to obtain data recording and/or reproduction conditions, a DMA in which OPC area management information or the like is recorded, and a first test recording area (OPC0-A area) are located in this order. Adjacent to the test recording areas (OPC areas), protective areas called buffer areas (not shown) in which no data is recorded are provided.

The inner zone of each of the first through third information recording layers includes buffer areas, a second test recording area (OPC-B area), a DMA and a first test recording area (OPC-A). Adjacent to the test recording areas (OPC areas), buffer areas acting for alleviating interference between adjacent areas or acting as protective areas in which no data is written, namely, data write is prohibited, are provided although these areas are not shown.

The second test recording areas (OPC-B areas) in the zeroth through third information recording layers, i.e., **OPC0b, OPC1b, OPC2b** and **OPC3b,** are located at generally the same radial position. The expression "generally the same" is used because when the information recording layers are stacked during the production of the disc, it is not possible to align the areas of the layers with no radial positional error ($\pm 0$ $\mu$m). The expression "generally the same" indicates that the areas are located at the same radial position with a potential error of approximately a pre-defined eccentric amount. Similarly, the first test recording areas (OPC-A areas) in the zeroth through third information recording layers, i.e., **OPC0a, OPC1a, OPC2a** and **OPC3a,** are located at generally the same radial position.

Outer to the inner zone, the data zone is provided. User data is recordable in a data area in the data zone.

Outer to the data zone, the outer zone is located. The outer zones in the zeroth through third information recording layers include third test recording areas (**OPC-c** area), i.e., **OPCOc, OPC1c, OPC2c** and **OPC3c,** respectively. The third test recording areas (**OPC-C** areas) in the zeroth through third information recording layers, i.e., **OPCOc, OPC1c, OPC2c** and **OPC3c,** are located at generally the same radial position.

As shown in FIG. **3,** by locating the first test recording areas, the second test recording areas and the third test recording areas at generally the same radial position among the information recording layers, the limited inner zone and outer zone can be effectively used to improve the space efficiency. Even when the number of information recording layers is increased to eight or 16, instead of 4 as in this embodiment, the test recording areas can be provided with certainty without increasing the physical size of the inner zone. Namely, the test recording areas can be provided with certainty without suppressing the recording capacity of the data zone. In addition, as compared with the case where the test recording areas are located so as not to be overlapped with one another, the physical size of each OPC area can be increased in the limited inner zone or outer zone. Therefore, highly reliable recording power adjustment and write strategy adjustment are realized without decreasing the number of times of the test recording. Especially for an optical disc on which recording can be done only once, for example, a write-once optical disc, such a situation can be avoided that the OPC areas are used up despite the user data zone is not full. Thus, the possibility that the recording cannot be performed on the optical disc merely because test recording cannot be performed is decreased.

Now, how to categorize the first and second OPC areas will be described. First, how to use the first recording area (OPC-A area) will be described.

The first recording area (OPC-A area) is used with no limitation on the recording power for test recording. After the optical disc is loaded and parameters required for OPC are read from the PIC area, the first OPC is performed in the first test recording area. Until the OPC is performed and the optimal recording power is found, there is no guarantee that light is emitted from the laser at an accurate power level, due to the individual variance of the optical disc apparatus or the time-wise change. Or, due to the individual variance of the optical disc, the recording power may be deviated from the power predetermined at the time of production of the disc. It is possible to perform test recording as follows: test recording is performed once with a combination of a certain optical disc apparatus and a certain optical disc medium, and the optimal recording power found with such a combination is recorded on a memory of the optical disc apparatus or in a prescribed area of the optical disc medium; and the next time test recording is performed, this recording power is used. However, at the time of next test recording, light may not be accurately emitted at the proper recording power which is to be used, due to various reasons such as dust or dirt adhering to components of an optical system of the optical pickup, fingerprints adhering to the disc, a change of the temperature of the air which changes the laser characteristics, and the like.

In summary, in an OPC area, test recording in the process of recording power calibration may possibly be performed at a higher recording power than the recording power optimal for recording data. Even if test recording is performed using the history of past test recording performed with the same apparatus and the same medium, it is still possible that test recording is performed at a higher recording power than the optimal recording power because of elapse of time since the previous test recording. If test recording is performed in an OPC area in a layer close to the light incidence side at an excessively high recording power, it is conceivable that a laser beam is influenced when passing through such a layer and, for example, the intensity thereof is changed, and as a result, the optimal recording power cannot be derived by OPC in an information recording layer farther from the laser beam incidence side. Specifically, the recording power may be deviated from the optimal recording power, an error may occur in reading a reproduction signal, or a tracking error signal or a focusing error signal may be distorted to make the tracking servo or focusing servo unstable.

Because of various possibilities as described above, the OPC-A areas are used sequentially from an information recording layer farthest from the light incidence side to an information recording layer closest to the light incidence side. In addition, the OPC-A areas of the information recording layers are overlapped with one another. Therefore, even if test recording is performed on an information recording layer at an excessively recording power, this does not influence the reproduction signal quality of an information recording layer farther from the laser beam incidence side, for the following reason. On any information recording layer farther from the laser beam incidence side, test recording has already been performed. In the case of an information recording layer farthest from the light incidence side, there is no information recording layer still farther from the laser beam incidence side.

Now, how to use the second test recording area (OPC-B area) will be described. The OPC-B area is mainly used for write strategy adjustment, i.e., for finding conditions such as the generation timing and length of a recording pulse stream, using the optimal recording power determined in the OPC-A area. For the information recording layer for which the optimal value of the recording power has been found with the test recording performed in the OPC-A area, there is no possibility that recording in the OPC-B area is performed at an excessively high recording power deviated from the optimal recording power.

There may be a limitation on the recording power for the OPC-B area. Test recording in the OPC-B area is performed at the optimal recording power found in the OPC-A area of the same information recording layer. In the case where test recording was performed in the OPC-A area of a different information recording layer, an upper limit on the recording power usable for test recording in the OPC-B area is set based on the optimal recording power found in the OPC-A area.

The upper limit is determined based on a calculation value which is obtained by calculating the ratio between the optimal recording power determined in the OPC-A area and a recommended recording power predetermined at the time of production of the disc and pre-recorded in the management data area. Where the ratio between the optimal recording power and the recommended recording power is within a certain value range, the upper limit on the recording power usable for test recording in the OPC-B area is set based on the ratio. How to specifically find the upper limit will be described in detail in a later embodiment.

The features of the two different test recording areas (OPC-A area and OPC-B area) can be summarized as in Table 1. A test recording area is categorized as an area in which no upper limit is set on the recording power for test recording (OPC-A area) or as an area in which an upper limit is set on the recording power for test recording (OPC-B area). A test recording area in which test recording needs to be performed at a recording power equal to or lower than the determined upper limit is the OPC-B area, and a test recording area in which test recording may be performed with no upper limit on the recording power is the OPC-A area.

The recording order of layer is determined among the OPC areas of different categories. When test recording is performed for the first time after the multilayer optical disc medium is inserted into the optical disc apparatus, or when it is determined that there is a high possibility of writing being conducted at an excessively high power, first test recording is performed in the OPC-A area, and after the recording power is calibrated, the second or later test recording is performed in the OPC-B area of any information recording layer.

The recording order of layer is determined among the OPC-A areas of the same category but not among the OPC-B areas of the same category. As shown in FIG. **3,** the recording in the OPC-A area is sequentially performed from the test recording start point of the zeroth information recording layer (**L0**) farthest from the light incidence side. After the OPC-A area of **L0** is used up, test recording is performed in the OPC-A area of **L1** closer to the light incidence side by one layer. After the OPC-A area of **L1** is used up, test recording is performed in the OPC-A area of **L2**. In this manner, recording is performed from an information recording layer farthest from the laser beam incidence side toward an information recording layer closest to the laser beam incidence side.

The recording order of layer is not determined among the OPC-B areas. Test recording can be performed when necessary in the OPC-B area of any information recording layer.

As described above, by performing the second or later test recording in the OPC-B area, or by setting the upper limit on the recording power for the OPC-B area, data writing in the OPC-B area is prevented from being performed at an excessively high recording power. This allows random test recording to be made in the OPC-B area, and thus realizes recording performed while access is being made freely from one information recording layer to another information recording layer, which is required by the above-mentioned defect management or file system management.

The OPC-A areas are located in the information recording layers **L1** through **L3** in addition to the information recording layer **L0**. Therefore, even when the OPC-A area of **L0** is used up, the OPC-A areas of **L1** through **L3** can be used sequentially. For a write-once optical disc, such a situation can be avoided that the OPC areas are used up although the user data zone is not full. Thus, the problem that, for example, the recording cannot be performed on the optical disc merely because test recording cannot be performed can be solved.

(Table 1)

|  | Upper limit on recording power | Limitation on recording order of layer among OPC areas of different categories | Limitation on recording order of layer among OPC areas of the same category |
|---|---|---|---|
| OPC-a area | No | YES (inevitable for first recording; possible for second recording or later) | YES (sequentially from the farthest layer from light incidence side) |
| OPC-b area | YES (equal to or lower than upper limit) | YES (second test recording or later) | NO (recordable randomly) |

(EMBODIMENT 2)

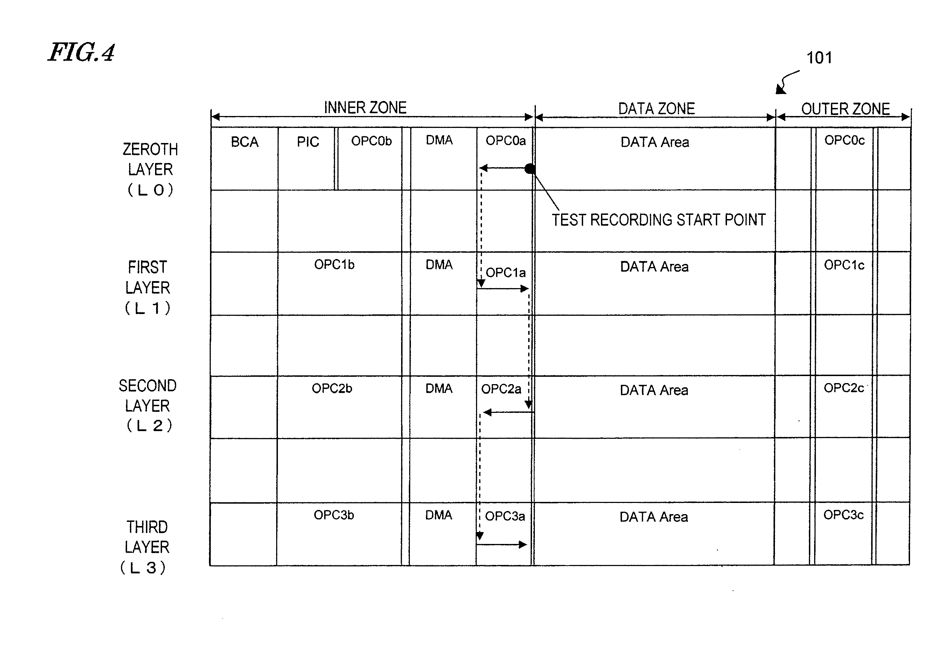

FIG. **4** shows an example of a physical format of OPC areas in each information recording layer according to Embodiment 2 of the present invention. Unlike the multilayer optical disc in Embodiment 1, as shown in FIG. **4,** the OPC-B area of each of **L1** through **L3** is partially located overlapped with the PIC area of the zeroth information recording layer, and the physical size of the OPC-B area is larger than the physical size of the OPC-A area in the same information recording layer, respectively.

Recording is not performed in the OPC-B area at an excessively high recording power. Therefore, when reproducing data from the PIC area of **L0,** the light beam passing through the OPC-B areas of **L1** through **L3** is scattered or diffracted and thus can suppress the decline of the quality of the PIC area reproduction signal.

By arranging the physical format of the test recording areas in a devised manner as described above, the OPC areas can be located in the information recording layers closer to the light incidence side than the information recording layer including the PIC area. Therefore, the physical size of the test recording areas of each layer can be increased in the limited physical size of the inner zone. Thus, the inner zone can be efficiently used.

The OPC-A areas are located in the information recording layers **L1** through **L3** in addition to the information recording layer **L0.** Therefore, even when the OPC-A area of **L0** is used up, the OPC-A areas of **L1** through **L3** can be used sequentially. For a write-once optical disc, such a situation can be avoided that the OPC areas are used up although the user data zone is not full. Thus, the problem that, for example, the recording cannot be performed on the optical disc merely because test recording cannot be performed can be solved.

Since the size of the OPC-B areas is increased, the number of times of the test recording for write strategy adjustment, which is mainly performed in the OPC-B areas, can be increased. Especially for performing high linear density recording with a recording mark or space shorter than the optical spot in a 33.4 GB or 32 GB disc, it is necessary to increase the number of times of the write strategy calibration to perform the write strategy adjustment more accurately. In the case where the physical size of the OPC-B area is larger than the physical size of the OPC-A area in the same information recording layer respectively as in this embodiment, highly reliable recording power adjustment and write strategy adjustment are realized without decreasing the number of times of the test recording.

(EMBODIMENT 3)

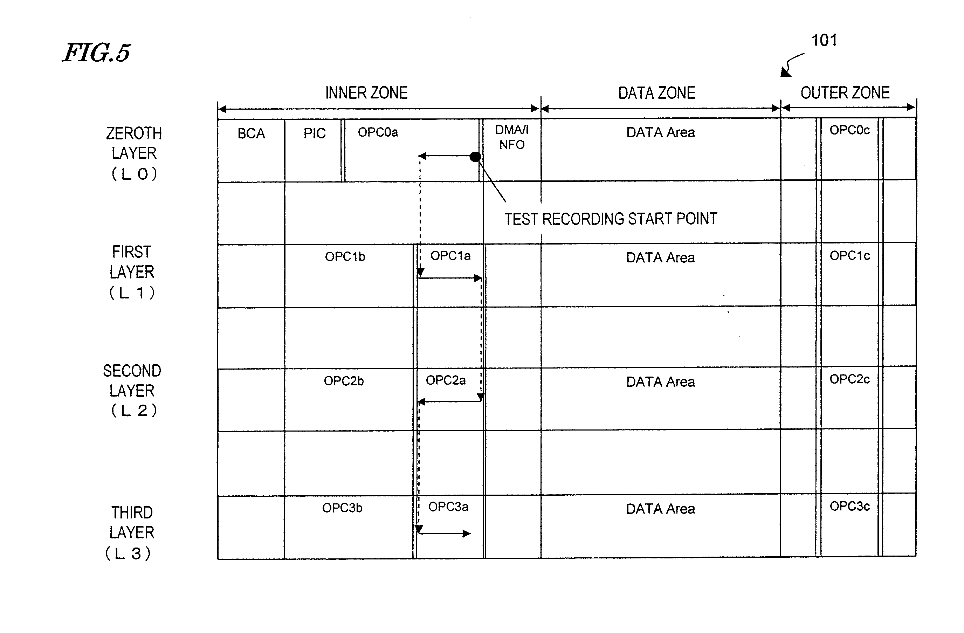

FIG. **5** shows an example of a physical format of OPC areas in each information recording layer according to Embodiment 3 of the present invention. As shown in FIG. **5, L0** includes only one test recording area (OPC-A area), whereas **L1** through **L3** each include two test recording areas, i.e., the OPC-A area and the OPC-B area. The OPC-B area of each of **L1** through **L3** is partially overlapped with the PIC area of **L0.** Recording is not performed in the OPC-B area at an excessively high recording power. Therefore, when reproducing data from the PIC area of **L0,** the light beam passing through the OPC-B areas of **L1** through **L3** is scattered or diffracted and thus can suppress the decline of the quality of the PIC area reproduction signal. The OPC-A areas of **L1** through **L3** are located at generally the same radial position in an overlapped manner with one another. The physical size of the OPC-A area of **L0** is larger than the physical size of the OPC-A area in each of **L1** through **L3.**

By arranging the physical format of the test recording areas in a devised manner as described above, the OPC areas can be located in the information recording layers closer to the light incidence side than the information recording layer including the PIC area. Therefore, the physical size of the test recording area(s) of each layer can be increased in the limited physical size of the inner zone. Thus, the inner zone can be efficiently used.

Since the test recording area of **L0** is entirely the OPC-A area, the buffer areas adjacent to the OPC area can be decreased as compared with the case where two test recording areas of the OPC-A area and the OPC-B area are provided. Thus, the inner zone can be more efficiently used.

Since a part of the OPC-A area of **L0** and the OPC-A areas of the **L1** through **L3** are located at generally the same radial position with an arrangement as shown in FIG. **5,** it is not necessary to provide a buffer area at the radial position of **L0** corresponding to the side of the OPC-A areas of **L1** through **L3.** Thus, the inner zone can be still more efficiently used.

The physical size of the OPC-A area of **L0** is larger than the physical size of the OPC-A area in each of **L1** through **L3.** Therefore, even if the optical disc is inserted into the optical disc apparatus and started a great number of times, the probability that the OPC-A area of **L0** is used up can be decreased. It is made possible to often perform the calibration at the time of start in **L0,** which shortens the starting time.

The OPC-A areas are located in the information recording layers **L1** through **L3** in addition to the information recording layer **L0.** Therefore, even when the OPC-A area of **L0** is used up, the OPC-A areas of **L1** through **L3** can be used sequentially. For a write-once optical disc, such a situation can be avoided that the OPC areas are used up although the user data zone is not full. Thus, the problem that, for example, the recording cannot be performed on the optical disc merely because test recording cannot be performed can be solved.

(EMBODIMENT 4)

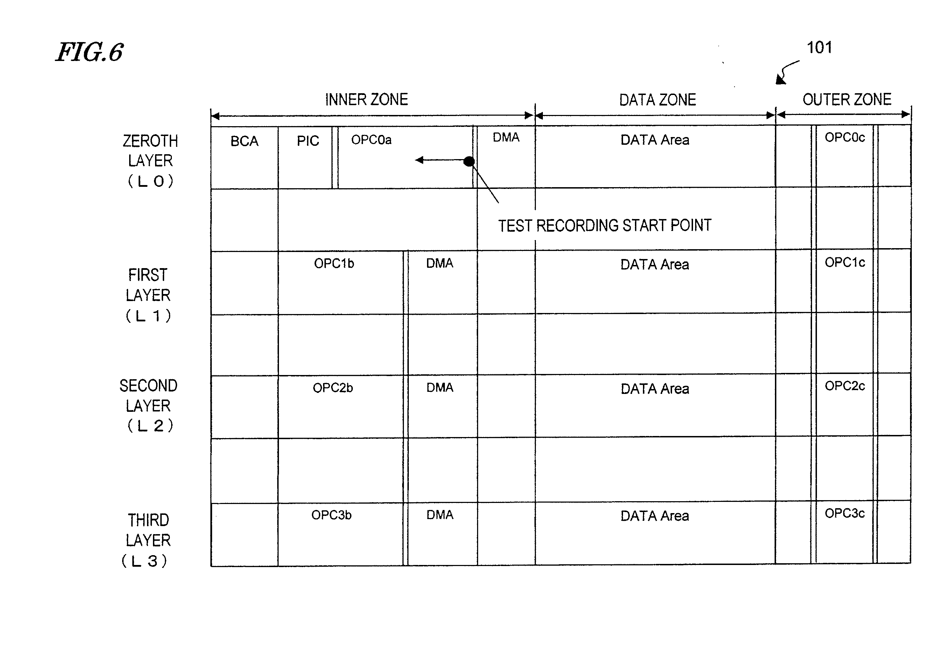

FIG. **6** shows an example of a physical format of OPC areas in each information recording layer according to Embodiment 4 of the present invention. In FIG. **6, L0** includes only one test recording area (OPC-A area), whereas **L1** through **L3** each include one recording area, i.e., the OPC-B area. The OPC-B area of each of **L1** through **L3** is partially overlapped with the PIC area of **L0.** Recording is not performed in the OPC-B area at an excessively high recording power. Therefore, when reproducing data from the PIC area of **L0,** the light beam passing through the OPC-B areas of **L1** through **L3** is scattered or diffracted and thus can suppress the decline of the quality of the PIC area reproduction signal. The OPC-B areas of **L1** through **L3** are located at generally the same radial position in an overlapped manner with one another.

By arranging the physical format of the test recording areas in a devised manner as described above, the OPC areas can be located in the information recording layers closer to the light incidence side than the information recording layer of the PIC area. Therefore, the physical size of the test recording area of each layer can be increased in the limited physical size of the inner zone. Thus, the inner zone can be efficiently used.

Since the test recording area of **L0** is entirely the OPC-A area, the buffer areas adjacent to the OPC area can be decreased as compared with the case where two test recording areas of the OPC-A area and the OPC-B area are provided. Thus, the inner zone can be more efficiently used.

Since a part of the OPC-A area of **L0** and the OPC-B areas of the **L1** through **L3** are located at generally the same radial position with an arrangement as shown in FIG. **6,** it is not necessary to provide a buffer area at the radial position of **L0** corresponding to the side of the OPC-B area of each of **L1** through **L3.** Thus, the inner zone can be still efficiently used.

(EMBODIMENT 5)

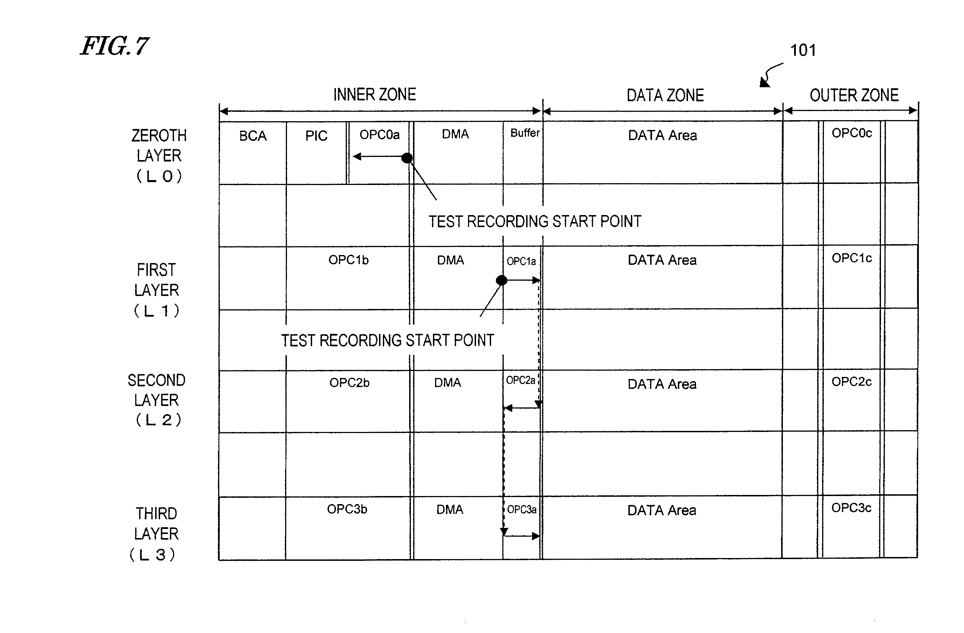

FIG. **7** shows an example of a physical format of OPC areas in each information recording layer according to Embodiment 5 of the present invention. In FIG. **7, L0** includes only one test recording area (OPC-A area), whereas **L1** through **L3** each include two test recording areas, i.e., the OPC-A area and the OPC-B area. The OPC-B area of each of **L1** through **L3** is partially overlapped with the PIC area of **L0.** Recording is not performed in the OPC-B area at an excessively high recording power. Therefore, when reproducing data from the PIC area of **L0,** the light beam passing through the OPC-B areas of **L1** through **L3** is scattered or diffracted and thus can suppress the decline of the quality of the PIC area reproduction signal. The OPC-B areas of **L1** through **L3** are located at generally the same radial position in an overlapped manner with one another. The OPC-A areas of **L1** through **L3** are located at generally the same radial position in an overlapped manner with one another.

In this case, test recording can be started using the OPC-A area of each of the two information recording layers **L0** and **L1.** For designing the recording film, the information recording layers **L1** through **L3** are restricted to be semi-transparent so that light is transmitted to the information recording layer(s) farther from the light incidence side than **L1** through **L3,** but there is no such restriction on the information recording layer **L0.** Namely, the recording material and the structure of the recording film are significantly different between **L0** and **L1** through **L3.** Because the recording films of **L0** and **L1** through **L3** have different properties, it is recommended to first perform test recording both in the OPC-A area of **L0** and the OPC-A area of **L1,** so that an upper limit on the recording power for test recording in **L2** and **L3** is found based on the optimal recording power found in **L1.** Where the recording films of **L2** and **L3** have substantially the same properties as the recording film of **L1,** the optimal recording powers for **L2** and **L3** can be found more precisely in this manner.

The OPC-A areas are located in the information recording layers **L1** through **L3** in addition to the information recording layer **L0.** Therefore, even when the OPC-A area of **L0** is used up, the OPC-A areas of **L1** through **L3** can be used sequentially. For a write-once optical disc, such a situation can be avoided that the OPC areas are used up although the user data zone is not full. Thus, the problem that, for example, the recording cannot be performed on the optical disc merely because test recording cannot be performed can be solved.

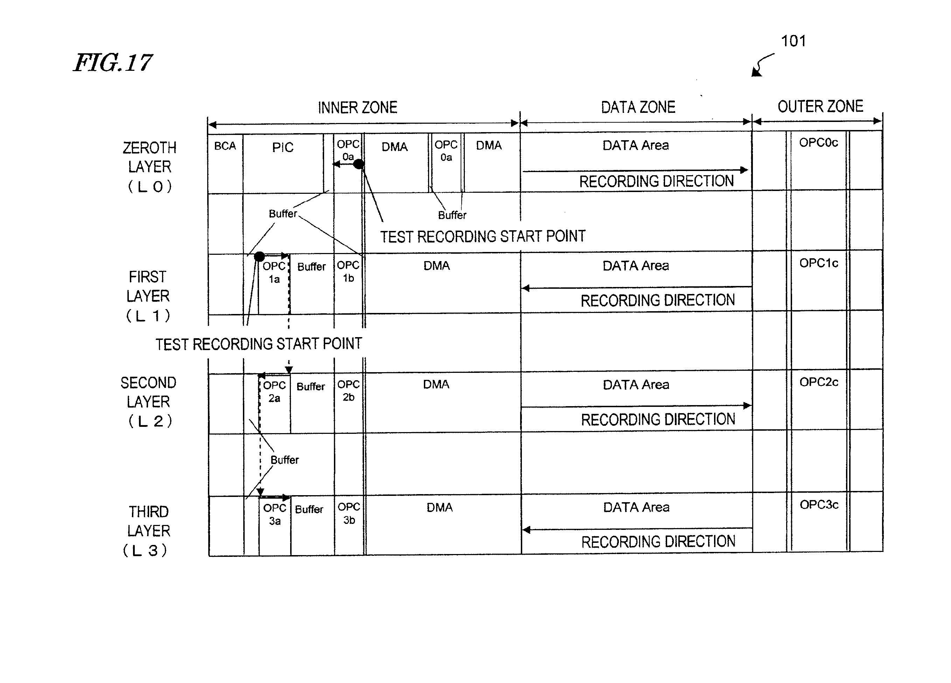

FIG. **17** shows another example of a physical format of OPC areas in each information recording layer according to Embodiment 5 of the present invention. In FIG. **17, L0** includes two test recording areas (OPC-A areas). **L1** through **L3** each include two test recording areas, i.e., the OPC-A area and the OPC-B area. The OPC-A area of each of **L1** through **L3** is partially overlapped with the PIC area of **L0.** The OPC-A areas of **L1** through **L3** are generally overlapped with one another. Recording may occasionally be performed in the OPC-A areas of **L1** through **L3** at an excessively high recording power. However, **L1** through **L3** each have a significantly large buffer area adjacent to the OPC-A area, and **L0** also has a PIC area at a position corresponding to the buffer areas. Accordingly, although the light beam passing **L1** through **L3** is scattered or diffracted during data reproduction from the PIC area of **L0,** the reproduction signal quality can be prevented from decreasing in the PIC area located farther from the light beam incidence side than the buffer areas. In the PIC area, disc management data on each information recording layer is recorded in units of blocks, and a unit block is recorded in the PIC area in repetition a plurality of times. Accordingly, it is not necessary that the disc management data in the entire PIC area should be readable. Namely, it is sufficient if the disc management data of at least one block among the plurality of blocks recorded in repetition is readable. It is sufficient if the disc management data in the PIC area at a position farther from the light beam incidence side than the buffer areas of **L1** through **L3** is readable with no problem. Namely, by locating the PIC area at a position farther from the light beam incidence side than the OPC areas of **L1** through **L3** and also locating the buffer areas of a sufficient size adjacent to the OPC areas of **L1** through **L3,** the space of the lead-in zone can be efficiently used such that the OPC areas of a sufficient size can be provided.

The PIC area is a reproduction-only area, and the disc management information is recorded therein by modulating the groove at high speed. The track pitch of the PIC area (0.35 μm) is wider than the track pitch of the data zone (0.32 μm). Therefore, the PIC area is originally designed to have a higher data reading reliability. Accordingly, even if test recording is performed in the OPC-A areas of **L1** through **L3,** closer to the laser beam incidence side than the PIC area, at an excessively high recording power, the reading performance on the data management information recorded in the PIC area is higher than the reading performance on data recorded in a write-once manner or rewritable manner. For this reason, even though the PIC area of **L0** and the OPC-A areas of **L1** through **L3** are located to overlap each other, the reading reliability of the disc management information recorded in the PIC area is not significantly deteriorated. By locating the PIC area and the OPC-A areas to overlap each other, the space of the lead-in zone can be efficiently used such that the OPC areas of a sufficient size can be provided.

In FIG. **17**, the OPC-B areas of **L1** through **L3** and the OPC-A area of **L0** are located to generally overlap each other at substantially the same radial position. In addition, the OPC-A areas of **L1** through **L3** are located to generally overlap one another at substantially the same radial position. Owing to this, two points in the OPC-A areas included in two information recording layers **L0** and **L1** can be used as the start points of test recording. For designing the recording film, the information recording layers **L1** through **L3** are restricted to be semi-transparent so that light is transmitted to the information recording layer(s) farther from the light incidence side than **L1** through **L3,** but there is no such restriction on the information recording layer **L0.** Namely, the recording material and the structure of the recording film are significantly different between **L0** and **L1** through **L3.** Because the recording films of **L0** and **L1** through **L3** have different properties, it is recommended to first perform test recording both in the OPC-A area of **L0** and the OPC-A area of **L1,** so that an upper limit on the recording power for test recording in **L2** and **L3** is found based on the optimal recording power found in **L1.** Where the recording films of **L2** and **L3** have substantially the same properties as the recording film of **L1,** the optimal recording powers for **L2** and **L3** can be found more precisely in this manner.

The OPC-A areas are located in the information recording layers **L1** through **L3** in addition to the information recording layer **L0.** Therefore, even if the OPC-A area of **L0** is used up, the OPC-A areas of **L1** through **L3** can be used sequentially. For a write-once optical disc, such a situation can be avoided that the OPC areas are used up although the user data zone is not full. Thus, the problem that, for example, the recording cannot be performed on the optical disc merely because test recording cannot be performed can be solved.

In FIG. **17,** the OPC-A area of **L0** is divided into two areas. Alternatively, one of the areas may be an OPC-B area, or the two areas may be combined together into one OPC-A area. Where the two areas are combined into one OPC-A area, there is no need for a buffer area, which improves the space efficiency of the lead-in zone.

Where the OPC area of **L0** is located so as to sandwich the buffer area with the PIC area, the connection zone between the HFM groove and the wobble groove can be used as the buffer area. This also improves the space efficiency of the lead-in zone.

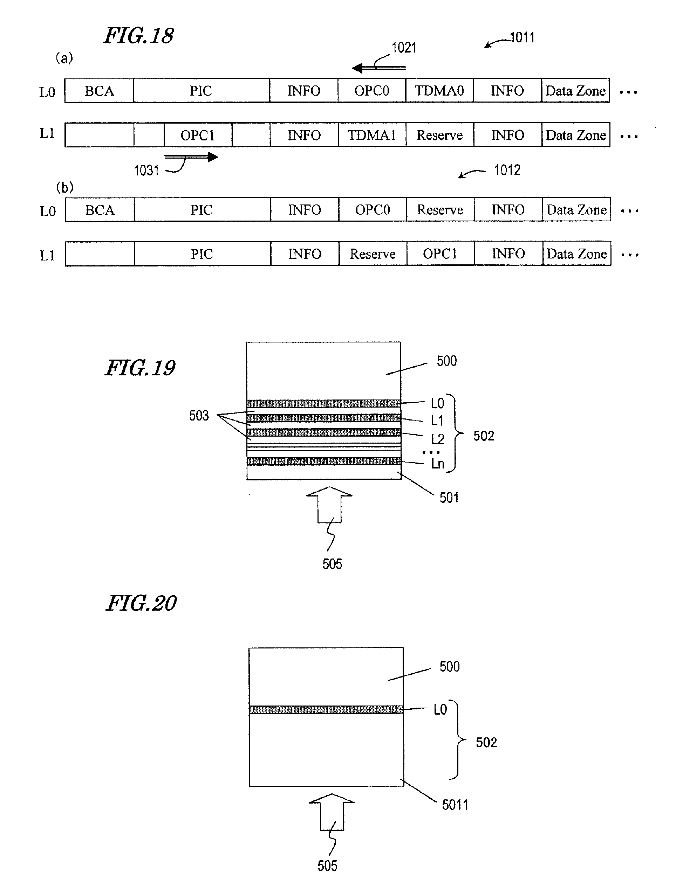

In order to make the features of the present invention clearer, an arrangement of OPC areas of an optical disc including two information recording layers will also be described with reference to FIG. **18.** FIG. **18(a)** shows a write-once disc **1011** including two information recording layers, and FIG. **18(b)** shows a rewritable disc **1012** including two information recording layers. In actuality, the discs include buffer areas and the like for absorbing eccentricity and interference from adjacent areas, but these will be omitted here for the sake of convenience.

In both the write-once disc **1011** (BD-R, etc.) and the rewritable disc **1012** (BD-RE, etc.), the tracking direction (scanning direction of the optical spot) in the layer farther from the light source (**L0**) is from the innermost end to the outermost end (in FIG. **18,** left to right). The tracking direction in the layer closer to the light source (**L1**) is from the outermost end to the innermost end (in FIG. **18,** right to left) (opposite path). OPC0, which is the test recording area in the **L0** layer, and OPC1, which is the test recording area in the **L1** layer, are not provided at radial positions overlapping each other.

In the case of the write-once disc **1011,** the PIC area is provided in the **L0** layer but is not provided in the **L1** layer. OPC1 is located at such a radial position as to partially or entirely overlap the PIC area of the **L0** layer. OPC0 is located at a radial position outer to OPC1. A direction **1021** in which OPC0 is used is from the outer side to the inner side, whereas a direction **1031** in which OPC1 is used is from the inner side to the outer side.

In the case of the rewritable disc **1012,** the PIC area is provided both in the **L0** layer and the **L1** layer. OPC0 is located at a radial position inner to OPC1. Unlike the write-once optical disc **1011,** there is no restriction on the direction in which OPC is used.

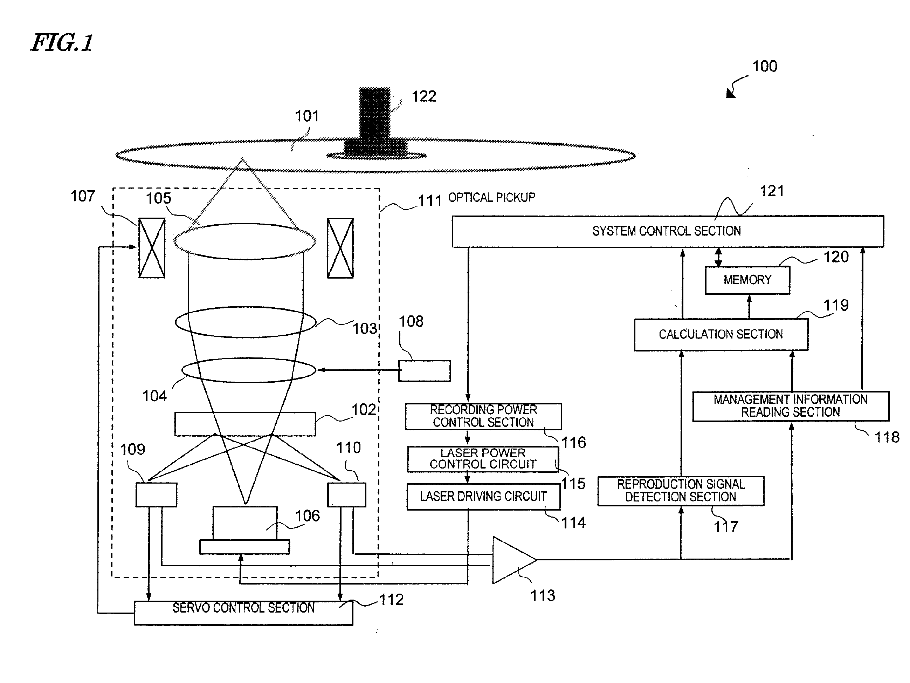

Now, TDMA (Temporary Disc Management Area) will be described. In the case where the optical disc is a write-once disc, the "DMA" in FIGS. **1** through **17** is strictly a TDMA. TDMA is an area unique to a write-once disc. For performing defect management or the like on a write-once disc, when defect information (DFL (defect list), etc.) which indicates, for example, the correspondence between the defect area and the area used instead of the defect area is updated, such updated information can be only written in a write-once manner. Therefore, such updated information is written in the TDMA.

When a write-once disc is finalized (closing processing, after which writing is prohibited and only reproduction is permitted, is executed), the final defect information in the TDMA is recorded in the DMA in the INFO area. The Next Available PSN information is different from the defect information and is necessary to manage the OPC areas. Therefore, the Next Available PSN information is recorded in the TDMA but is not recorded in the DMA in the INFO area because after the disc is finalized, test recording is not performed and so the OPC areas do not need to be managed. As can be seen, the amount of information managed in the TDMA is much larger than the amount of information recorded in the DMA in the INFO area. For this reason, a sufficient size of space is prepared for the TDMA; for example, 32 blocks are assigned for the DMA in the INFO area whereas 2048 blocks are assigned for the TDMA.

Regarding TDMA0 and TDMA1, TDMA0 is first used and then TDMA1 is used. Namely, when recording in TDMA0 becomes impossible for the reason that an empty space of TDMA0 becomes insufficient or the like, update processing is performed in TDMA1 of the **L1** layer.

Meanwhile in the case of a rewritable disc, information can be updated by rewriting. Therefore, the defect information is updated in the DMA in the INFO area. The areas at the radial positions substantially corresponding to TDMA1 and TDMA1 of the write-once disc are prepared as reserve areas, the use of which is not specifically determined. Thus, in the description of this specification up to the section regarding FIG. **17,** the area described as "DMA" regarding a rewritable disc does not need to be a DMA and may be a reserve area.

By comparing the structure in FIG. **17** and the structure in FIG. **18,** the following features of the positional relationship of OPC areas, DMAs (TDMAs) and the like in FIG. **17** can be made clearer.

In the structure of FIG. **17,** there are at least two information recording layers including an OPC area at a radial position at least partially overlapping the radial position of the PIC area. Namely, a part of the reproduction-only management data area (for example, the PIC area) is located to overlap at least a part of the test recording area (for example, the OPC area) of each of at least two other information recording layers. In the zone having a limited size, the OPC areas are located to overlap the PIC area. Owing to such an arrangement, the degree at which the OPC areas are located at the same radial position can be minimized. In addition, a large size of space can be provided for the OPC areas. This decreases the possibility of the OPC areas being used up. In the PIC area, the same information is recorded in repetition. Therefore, even if the OPC areas are damaged by the laser beam, information can be read with certainty from a part of the PIC area which does not overlap the damaged OPC areas.

In the structure of FIG. **17,** there are at least two information recording layers including a write-prohibited area (buffer area, etc.) at a radial position at least partially overlapping the radial position of the PIC area. Namely, at least a part of the reproduction-only management data area (for example, the PIC area) is located to overlap at least a part of the write-prohibited area (for example, the buffer area) of each of at least one other information recording layers. No data is written in the buffer area, and so the buffer area is not damaged by the laser beam. Therefore, information can be read with certainty from a part of the PIC area which overlaps the buffer area. If an area of another layer overlapping a part of the PIC area (for example, an OPC area) is damaged, information may possibly not be read from the part of the PIC area corresponding to the damaged area. However, even in such a case, information can be read with certainty from the part of the PIC area overlapping the buffer area because the same information is recorded in repetition in the PIC area. In the PIC area, disc management data on each information recording layer is recorded in units of blocks, and a unit block is recorded in the PIC area in repetition a plurality of times. Therefore, even if the disc management data in almost the entire area of the PIC area is made unreadable by the influence of the writing operation on the layer closer to the laser beam incidence side, this does not cause a problem. Namely, it is sufficient if the disc management data of at least one block among the plurality of blocks recorded in repetition is readable. It is sufficient if the disc management data in the PIC area at a position farther from the light beam incidence side than the buffer areas of **L1** through **L3** is readable with no problem. Namely, by locating the PIC area at a position farther from the light beam incidence side than the OPC areas of **L1** through **L3** and also locating the buffer areas of a sufficient size adjacent to the OPC areas of **L1** through **L3,** the space of the lead-in zone can be efficiently used such that the OPC areas of a sufficient size can be provided.

In the structure of FIG. **17,** there is an information recording layer in which the OPC area is located outer to the DMA (TDMA), not only inner thereto. DMAs are located inner and outer to the OPC area in a divided manner. By providing a recordable management data area (for example, TDMA) inner and outer to the OPC area, i.e., by providing two recordable management data areas in one information recording layer, the area size of a part of the OPC area overlapping the OPC area of another information recording layer can be reduced or made zero. If the recordable management data area (for example, TDMA) is provided as one block, the OPC area needs to be located as overlapping the OPC area of another information recording layer. However, where the recordable management data area is located inner and outer to the OPC area, i.e., at two positions in a divided manner, the degree at which the OPC areas are located at the same radial position can be minimized. In addition, a large size of space can be provided both for the OPC area and the recordable management data area. This decreases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

In the structure of FIG. **17,** there are a plurality of DMAs (TDMAs) located at radial positions at least partially overlapping one another. Namely, the management data area (for example, DMA (TDMA)) of one information recording layer and the management data area (for example, DMA (TDMA)) of another information recording layer are located at radial positions overlapping each other at least partially. By locating the DMAs (TDMAs) to overlap each other, the zone having a limited size can be effectively used. For example, where both of the OPC area and the DMA (TDMA) of an information recording layer far from the laser beam irradiation face and the DMA (TDMA) of an information recording layer close to the laser beam irradiation face are located at radial positions overlapping each other, the zone of the information recording layer close to the laser beam irradiation face can be effective used. The DMA (TDMA) is irradiated with post-power adjustment laser beam, and thus is not damaged by an excessively high recording power. Therefore, even where the DMAs (TDMAs) overlap each other, information recorded on the information recording layer far from the laser beam irradiation face can be normally read. Even if the OPC area of the information recording layer far from the laser beam irradiation face is damaged by the laser beam, information can be read with no problem from the DMA (TDMA), of the information recording layer close to the laser beam irradiation face, at the radial position corresponding to the damaged OPC area.

In the structure of FIG. **17,** there is an information recording layer including a plurality of DMAs (TDMAs). By providing recordable management data areas (for example, TDMA) at two positions in one information recording layer, the area size of a part of the OPC area in the one information recording layer overlapping the OPC area of another information recording layer can be reduced or made zero. If the recordable management data area (for example, TDMA) is provided as one block, the OPC area needs to be located as overlapping the OPC area of another information recording layer. However, where the recordable management data area is located as being divided into two locations sandwiching the OPC area, the degree at which the OPC areas are located at the same radial position can be minimized. In addition, a large size of space can be provided both for the OPC area and the recordable management data area. This decreases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

In the structure of FIG. **17,** there is an information recording layer including two DMAs (TDMAs) and an OPC area located between the TDMAs. Owing to this, the OPC area can be located at a position far from the user data zone. Because of this arrangement, for example, an OPC area of an information recording layer far from the laser beam irradiation face and a DMA (TDMA) of an information recording layer close to the laser beam irradiation face may occasionally be located at radial positions overlapping each other. In this case, even if the OPC area of the information recording layer far from the laser beam irradiation face is damaged by the laser beam, information can be read with no problem from the DMA (TDMA) of the information recording layer close to the laser beam irradiation face. In the case where the OPC area is located in the DMA (TDMA), the remaining area of the zone having a limited size can be effectively used by the area size of the DMA (TDMA).

In the structure of FIG. **17,** there are information recording layers including write-prohibited areas (buffer areas, etc.) at both ends of the OPC area. Adjacently inner to the OPC area, a first buffer area is located. Adjacently outer to the OPC area, a second buffer area is located. Adjacently inner to the first buffer area, a first DMA (TDMA) is located. Adjacently outer to the second buffer area, a second DMA (TDMA) is located. In the first and second DMAs (TDMAs), information of the same attribute is recorded. Namely, where the OPC area is located between two DMAs (TDMAs), a buffer area is located between each of the DMAs (TDMAs) and the OPC area. Owing to this, even if the OPC area is damaged by the laser beam, the DMAs (TDMA) are protected against the damage. Since information of the same attribute is recorded in the two DMAs (TDMAs), even if one of the DMAs (TDMAs) is damaged and the information therein becomes unreadable, information can be read with certainty from the other DMA (TDMA). By providing recordable management data areas (for example, TDMAs) at two positions sandwiching the OPC area in one information recording layer, the area size of a part of the OPC area overlapping the OPC area of another information recording layer can be reduced or made zero. If the recordable management data area (for example, TDMA) is provided as one block, the OPC areas need to be located as overlapping each other. However, where the recordable management data area is located as being divided into two locations sandwiching the OPC area, the degree at which the OPC areas are located at the same radial position can be minimized. In addition, a large size of space can be provided for the OPC area and the recordable management data area. This increases the possibility of the OPC area and the recordable management data area being used up. By contrast, where the OPC area is located in a divided manner, the number of buffer areas adjacent to the OPC areas needs to be increased in proportion to the number of the OPC areas. Where the recordable management data area is located in a divided manner, it is not necessary to provide a buffer area adjacent thereto. Therefore, the lead-in zone can be effectively used.

The information recording layer according to the present invention does not need to have all the features shown in FIG. **17**, and may have any one of these features or a plurality of these features in combination.

(EMBODIMENT 6)

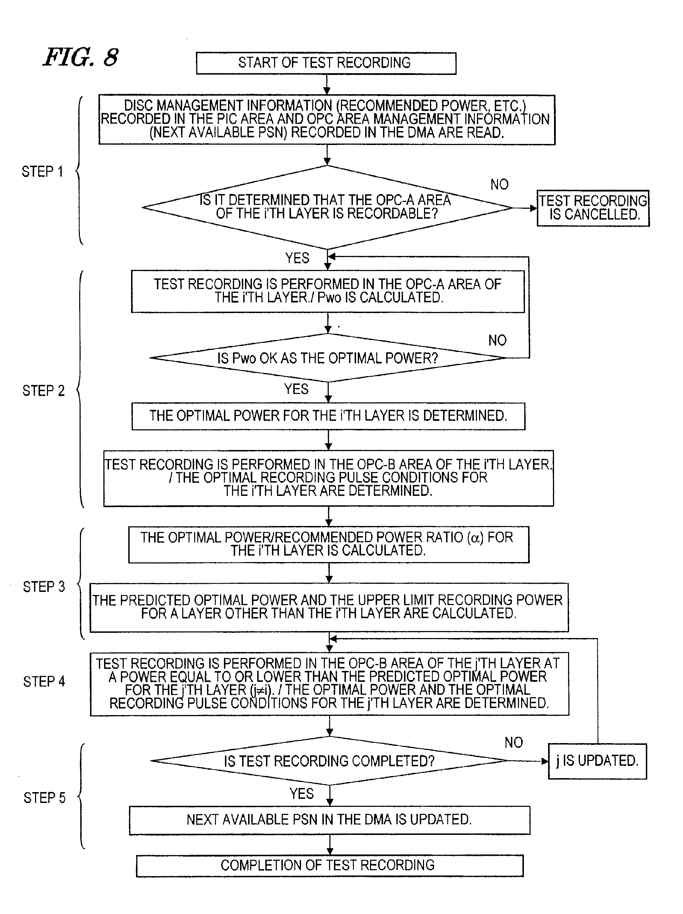

Now, a recording method for a multilayer optical information recording medium according to the present invention will be described with reference to the drawings. A procedure of test recording according to Embodiment 6 of the present invention will be described with reference to FIG. **8**. Any of the multilayer optical disc mediums used in Embodiments 1 through 4 is usable.

In a first step, the disc management information recorded in the PIC area and the OPC management information recorded in the DMA are read. What is to be read includes the recommended recording power for each information recording layer, various parameters required for OPC and the write strategy parameter, which are pre-recorded in the PIC area; and the positions of the OPC areas in each information recording layer, for example, information indicating the recording start addresses and/or recording end addresses, and Next Available PSN (Physical Sector Number), which are recorded in the DMA. The Next Available PSN is information indicating the currently usable position in each OPC area. When the optical disc is loaded on an optical recording/reproducing apparatus, the OPC area management information in the DMA is read. From the information, the positions of the OPC areas in the optical disc and the positions of the usable OPC areas are found, so that OPC can be performed in the OPC areas thus found. When it is determined from the read information that the OPC-A area of an i'th information recording layer (i is an integer of 0 through 3) is recordable, the procedure advances to the next step. When all the OPC-A areas are used up, it is determined that test recording is not possible and is cancelled.

In a second step, test recording is performed in the OPC-A area of the i'th information recording layer to find an optimal value of the recording power. Test recording is performed at a plurality of recording powers using the OPC parameters read from the PIC area, and the modulation signal degree characteristics of the recorded signals are measured. Based on the measurement results, a prescribed calculation is performed to find the optimal recording power. How to find the optimal recording power from the measurement results of the modulation signal degree will be described in a later embodiment.

Next, it is checked whether the optimal recording power found in the OPC-A area is the proper optimal recording power which is to be found. The optimal recording power (Pwoi) found in the OPC-A area in the above-described operation procedure of finding the optimal recording power is compared with the recommended recording power (Pwpi) read from the disc management information pre-recorded in the PIC area of the optical disc. When the optimal recording power (Pwoi) is higher than the recommended recording power (Pwpi) by, for example, more than 5% (Pwoi/Pwpi-1 > 5%), the found optimal recording power (Pwoi) is determined to be inappropriate and the write strategy is changed. Or, the OPC procedure described above is re-performed with the same write strategy in another attempt to find an optimal recording power (Pwoi).

There is another method for checking. In order to avoid such a situation that the optimal recording power found in the OPC-A area using the optical disc apparatus during the above-described operation procedure of finding the optimal recording power is substantially higher than the recording power assumed by the manufacturer of the optical disc at the time of production, the following is performed. The target modulation signal degree (Mmax) between the optimal recording power and the recommended recording power read from the disc management information pre-recorded in the PIC area of the optical disc is compared with the modulation signal degree (Mo) of the signal recorded with the optimal recording power. When the modulation signal degree of the signal recorded with the optimal recording power is higher than the target modulation signal degree (Mmax) (i.e., Mo > Mmax), the found optimal recording power (Pwoi) is determined to be too high and the write strategy is changed. Or, the OPC procedure described above is re-performed with the same write strategy in another attempt to find an optimal recording power (Pwoi). When it is determined as a result of the comparison that the modulation signal degree of the signal recorded with the optimal recording power (Mo) is equal to or lower than the target modulation signal degree (Mmax) (i.e., Mo ≤ Mmax), the found optimal recording power (Pwoi) is determined to be the optimal recording power.

Then, test recording is performed in the OPC-B area of the i'th information recording layer (when i = 0, the OPC-A area is also usable) using the optimal recording power to find optimal values of the recording pulse conditions (write strategy conditions). Thus, the test recording on the i'th layer is completed.

The above examples, which are described as the methods for checking the optimal recording power, may be combined, or another preferable method may be used. For example, jitter, MLSE, β, asymmetry and the like may be combined to be used as a determination basis.

In a third step, a preparation is made for test recording on a j'th layer, which is different from the i'th layer. The ratio $\alpha$ (= Pwoi/Pwpi) between the optimal recording power (Pwoi) and the recommended recording power (Pwpi) for the i'th information recording layer is found, and the optimal recording power predicted for the j'th information recording layer (Pwyj) is calculated from the recommended recording power (Pwpj) for the j'th information recording layer using

the following expression.

$$(Pwyj) = (Pwpj) \times \alpha$$

A value obtained by multiplying the optimal recording power predicted for the j'th information recording layer (Pwyj) by a predetermined coefficient X (for example, 1.1) is determined as the upper limit recording power for the j'th layer (Pwmaxj).

$$(Pwmaxj) = (Pwyj) \times X$$

In the above, $\alpha$ is the ratio between the optimal recording power found by the test recording and the recommended recording power. Namely, $\alpha$ is an index indicating how much the absolute value of the recording power which is set by the optical disc apparatus is deviated from the recommended recording power determined by the disc manufacturer at the time of production, due to dirt, dust or any other distortion caused to the optical disc apparatus. When $\alpha = 1$, the found optimal recording power matches the recommended recording power, namely, the recording power found by performing the test recording using the optical disc apparatus matches the power pre-recorded by the disc manufacturer at the time of production. When $\alpha > 1$, for example, dirt, dust or the like adheres to an element of an optical system, for example, an objective lens of the optical disc apparatus, and as a result, the recording power on the optical disc face is lower than the recording power immediately after a laser beam is emitted, due to a loss caused in the middle of the optical path. Or, when $\alpha > 1$, there may be an error in the calibration of the recording power performed by the optical disc apparatus. When $\alpha > 1$ is caused for such a reason, substantially the same loss of the recording power or calibration error also occurs in the other information recording layers. Therefore, the ratio $\alpha$ is used to correct an error between the recording power which is set by the optical disc apparatus and the actual power irradiating the information recording face of the optical disc.

In a fourth step, test recording is performed in the OPC-B area of the j'th information recording layer to find an optimal recording power and optimal recording pulse conditions for the j'th layer. Test recording is performed at a plurality of recording powers equal to or lower than the upper limit recording power (Pwmaxj) determined in the third step, and the modulation signal degree characteristics of the recorded signals are measured to find the optimal recording power for the j'th information recording layer (Pwoj). After the optimal recording power for the j'th information recording layer (Pwoj) is determined, test recording is performed in the OPC-B area of the j'th information recording layer at the optimal recording power (Pwoj) to find optimal values of the recording pulse conditions (write strategy conditions). Thus, the test recording on j'th information recording layer is completed. Although omitted here, a process of checking whether the found optimal recording power (Pwoj) is the proper optimal recording power which is to be found may be performed as in the second step.

In a fifth step, it is checked whether the test recording is completed on all the information recording layers. When the test recording is not completed on all the information recording layers, the procedure returns to the fourth step, and the test recording is performed on the remaining information recording layer(s) to find the optimal values of the recording power and the write strategy conditions. When test recording is completed on all the information recording layers, test recording completion processing is performed. Namely, the Next Available PSN information in the DMA is updated, and thus the test recording is finished.

In this embodiment, X = 1.1 as an example, but the value of X is not limited to 1.1. The value of X may be set to X = 1, in which case the recording is performed with the predicted optimal recording power as the upper limit.

When the optimal recording power found by the test recording performed in the OPC-B area exceeds the upper limit of the recording power found in the third step, the upper limit of the recording power may be updated to an appropriated value. However, before the optimal recording power is found, test recording cannot be performed with a recording power exceeding the upper limit determined previously.

This embodiment is explained as providing a description of a recording method. This is merely because the procedure of recording operation is mainly described. Substantially the same procedure is usable for reproduction as well as for recording, and this embodiment can be interpreted as describing an optical recording/reproducing method.

(EMBODIMENT 7)

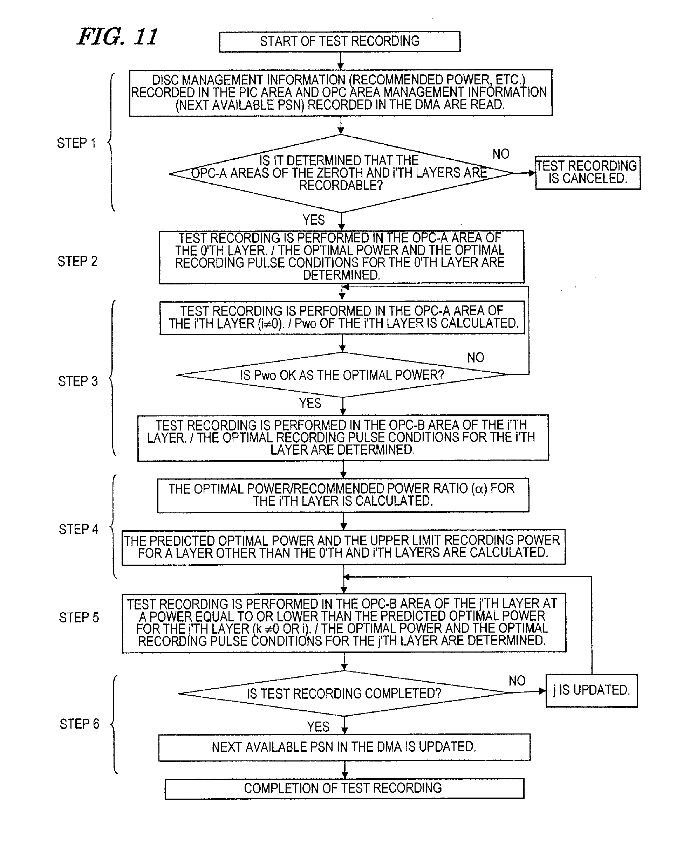

Now, a recording method for a multilayer optical information recording medium according to the present invention will be described with reference to the drawings. A procedure of test recording according to Embodiment 7 of the present invention will be described with reference to FIG. **11**. The multilayer optical disc medium used in Embodiment 5 is usable.

In a first step, the disc management information recorded in the PIC area and the OPC management information recorded in the DMA are read. What is to be read includes the recommended recording power for each information recording layer, various parameters required for OPC and the write strategy parameter, which are pre-recorded in the PIC area; and the positions of the OPC areas in each information recording layer, for example, information indicating the recording start addresses and/or recording end addresses, and Next Available PSN (Physical Sector Number), which are recorded in the DMA. The Next Available PSN is information indicating the currently usable position in each OPC area. When the optical disc is loaded on an optical recording/reproducing apparatus, the OPC area management information in the DMA is read. From the information, the positions of the OPC areas in the optical disc and the positions of the usable OPC areas are found, so that OPC can be performed in the OPC areas thus found. When it is determined from the read information that the OPC-A area of the zeroth information recording layer and the OPC-A area of the i'th information recording layer are recordable, the procedure advances to the next step. When the OPC-A area of the zeroth information recording layer is used up, or when all the OPC-A areas are used up, it is determined that test recording is not possible and is cancelled. When the OPC-A area of the zeroth information recording layer is recordable and the OPC-A areas of the first through third information recording layers are used up, test recording is performed in the procedure described in Embodiment 6.

In a second step, test recording is performed in the OPC-A area of the zeroth information recording layer to find an optimal value of the recording power. Test recording is performed at a plurality of recording powers using the OPC parameters read from the PIC area, and the modulation signal degree characteristics of the recorded signals are measured. Based on the measurement results, a prescribed calculation is performed to find the optimal recording power. In addition, test recording is performed at the optimal recording power to find the optimal recording pulse conditions (write strategy conditions) for the zeroth layer. Thus, the test recording on the zeroth information recording layer is completed. How to find the optimal recording power from the measurement results of the modulation signal degree will be described in a later embodiment.

In a third step, test recording is performed in the OPC-A area of the i'th information recording layer to find an optimal value of the recording power. Test recording is performed at a plurality of recording powers using the OPC parameters read from the PIC area, and the modulation signal degree characteristics of the recorded signals are measured. Based on the measurement results, a prescribed calculation is performed to find the optimal recording power.

Next, it is checked whether the optimal recording power found in the OPC-A area is the proper optimal recording power which is to be found. The optimal recording power (Pwoi) found in the OPC-A area of the i'th information recording layer in the above-described operation procedure of finding the optimal recording power is compared with the recommended recording power (Pwpi) read from the disc management information pre-recorded in the PIC area of the optical disc. When the optimal recording power (Pwoi) is higher than the recommended recording power (Pwpi) by, for example, a level equal to or more than 5% ($Pwoi/Pwpi-1 \geq 5\%$), the found optimal recording power (Pwoi) is determined to be inappropriate and the write strategy is changed. Or, the OPC procedure described above is re-performed with the same write strategy in another attempt to find an optimal recording power (Pwoi).

There is another method for checking. In order to avoid such a situation that the optimal recording power found in the OPC-A area using the optical disc apparatus during the above-described operation procedure of finding the optimal recording power is substantially higher than the recording power assumed by the manufacturer of the optical disc at the time of production, the following is performed. The target modulation signal degree (Mmax) between the optimal recording power and the recommended recording power read from the disc management information pre-recorded in the PIC area of the optical disc is compared with the modulation signal degree (Mo) of the signal recorded with the optimal recording power. When the modulation signal degree of the signal recorded with the optimal recording power is higher than the target modulation signal degree (Mmax) (i.e., Mo > Mmax), the found optimal recording power (Pwoi) is determined to be too high and the write strategy is changed. Or, the OPC procedure described above is re-performed with the same write strategy in another attempt to find an optimal recording power (Pwoi). When it is determined as a result of the comparison that the modulation signal degree of the signal recorded with the optimal recording power (Mo) is equal to or lower than the target modulation signal degree (Mmax) (i.e., $Mo \leq Mmax$), the found optimal recording power (Pwoi) is determined to be the optimal recording power.

Then, test recording is performed in the OPC-B area of the i'th information recording layer using the optimal recording power to find optimal values of the recording pulse conditions (write strategy conditions) for the i'th layer. Thus, the test recording on the i'th layer is completed.

The above examples, which are described as the methods for checking the optimal recording power, may be combined, or another preferable method may be used. For example, jitter, MLSE, β, asymmetry and the like may be combined to be used as a determination basis.

In a fourth step, a preparation is made for test recording on the j'th layer, which is different from the i'th layer. The ratio $\alpha$ (= Pwoi/Pwpi) between the optimal recording power (Pwoi) and the recommended recording power (Pwpi) for the i'th information recording layer is found, and the optimal recording power predicted for the j'th information recording layer (Pwyj) is calculated from the recommended recording power (Pwpj) for the j'th information recording layer using the following expression.

$$(Pwyj) = (Pwpj) \times \alpha$$

A value obtained by multiplying the optimal recording power predicted for the j'th information recording layer (Pwyj) by a predetermined coefficient X (for example, 1.1) is determined as the upper limit recording power for the j'th layer (Pwmaxj).

$$(Pwmaxj) = (Pwyj) \times X$$

In the above, $\alpha$ is the ratio between the optimal recording power found by the test recording and the recommended recording power. Namely, $\alpha$ is an index indicating how much the absolute value of the recording power which is set by the optical disc apparatus is deviated from the recommended recording power determined by the disc manufacturer at the time of production, due to dirt, dust or any other distortion caused to the optical disc apparatus. When $\alpha = 1$, the found optimal recording power matches the recommended recording power, namely, the recording power found by performing the test recording using the optical disc apparatus matches the power pre-recorded by the disc manufacturer at the time of production. When $\alpha > 1$, for example, dirt, dust or the like adheres to an element of an optical system, for example, an objective lens of the optical disc apparatus, and as a result, the recording power on the optical disc face is lower than the recording power immediately after a laser beam is emitted, due to a loss caused in the middle of the optical path. Or, when $\alpha > 1$, there may be an error in the calibration of the recording power performed by the optical disc apparatus. When $\alpha > 1$ is caused for such a reason, substantially the same loss of the recording power or calibration error also occurs in the other information recording layers. Therefore, the ratio $\alpha$ is used to correct an error between the recording power which is set by the optical disc apparatus and the actual power irradiating the information recording face of the optical disc.

In a fifth step, test recording is performed in the OPC-B area of the j'th information recording layer to find an optimal recording power and optimal recording pulse conditions for the j'th layer. Test recording is performed at a plurality of recording powers equal to or lower than the upper limit recording power (Pwmaxj) determined in the fourth step, and the modulation signal degree characteristics of the recorded signals are measured to find the optimal recording power for the j'th information recording layer (Pwoj). After the optimal recording power for the j'th information recording layer (Pwoj) is determined, test recording is performed in the OPC-B area of the j'th information recording layer at the optimal recording power (Pwoj) to find optimal values of the recording pulse conditions (write strategy conditions). Thus, the test recording on the j'th information recording layer is completed. Although omitted here, a process of checking whether the found optimal recording power (Pwoj) is the proper optimal recording power which is to be found may be performed as in the third step.

In a sixth step, it is checked whether the test recording is completed on all the information recording layers. When the test recording is not completed on all the information recording layers, the procedure returns to the fifth step, and the test recording is performed on the remaining information recording layer(s) to find the optimal values of the recording power and the write strategy conditions. When test recording is completed on all the information recording layers, test recording completion processing is performed. Namely, the Next Available PSN information in the DMA is updated, and thus the test recording is finished.

In this embodiment, X = 1.1 as an example, but the value of X is not limited to 1.1. The value of X may be set to X = 1, in which case the recording is performed with the predicted optimal recording power as the upper limit.

When the optimal recording power found by the test recording performed in the OPC-B area exceeds the upper limit of the recording power found in the fourth step, the upper limit of the recording power may be updated to an appropriated value. However, until the optimal recording power is found, test recording cannot be performed with a recording power exceeding the upper limit determined before.

This embodiment is explained as providing a description of a recording method. This is merely because the procedure of recording operation is mainly described. Substantially the same procedure is usable for reproduction as well as for recording, and this embodiment can be interpreted as describing an optical recording/reproducing method.

(EMBODIMENT 8)

Now, a recording/reproducing apparatus **100** for a multilayer optical information recording medium according to the present invention will be described with reference to the drawings. The apparatus **100** performs at least one of information recording on, and information reproduction from, the information recording medium **101**, and may be a reproduction-only apparatus.

FIG. **1** shows an overall structure of the recording/reproducing apparatus according to Embodiment 8 of the present invention usable for a multilayer optical information recording medium. An operation of performing test recording on each information recording layer using any of the multilayer optical discs in Embodiments 1 through 5 and any of the recording methods in Embodiments 6 and 7 will be described.

The multilayer optical disc **101** is, for example, a multilayer optical information recording medium such as a BD-R medium or the like. The recording/reproducing apparatus **100** includes an optical pickup **111**, a spindle motor **122**, and a servo control section **112**. The optical pickup **111** includes a diffraction element **102**, collimator lenses **103** and **104**, an objective lens **105**, a laser beam source **106**, an actuator **107**, photo detectors **109** and **110**, and the servo control section **112**.

The recording/reproducing apparatus **100** includes a recording section for reproducing management data from a management data area (PIC, DMA, TDMA, etc.) and recording information on the information recording medium based on the management data. The recording section includes a spherical aberration compensation section **108**, an RF signal calculation section **113**, a laser driving circuit **114**, a laser power control circuit **115**, a recording power control section **116**, a reproduction signal detection section **117**, a management information reading section **118**, a calculation section **119**, a memory **120**, and a system control section **121**. The recording section also adjusts a recording condition using a test recording area and records information on the multilayer optical disc **101** with the adjusted recording condition.

The optical pickup **111** including the laser beam source **106** and the photo detectors **109** and **110** acts as an irradiation section for irradiating each information recording layer of the multilayer optical disc **101** with a laser beam and also acts as a light receiving section for receiving light reflected by the information recording layer.

The RF signal calculation section **113**, the reproduction signal detection section **117**, the management information reading section **118**, the calculation section **119**, the memory **120** and the system control section **121** act as a reproducing section for reproducing information based on an electric signal obtained by receiving the reflected light.

A light beam emitted from the laser beam source **106** is converted into parallel light by the collimator lenses **103** and **104**, is incident on the objective lens **105** and is converged on an information recording face of the multilayer optical disc **101**. The light beam reflected by the multilayer optical disc **101** advances on the optical path mentioned above in the opposite direction to be collected by the collimator lenses **103** and **104** and is incident on the photo detectors **109** and **110** by beam splitting means of the diffraction element **102**. A servo signal (focusing error signal and tracking error signal) and information signal (RF signal) are generated from signals output from the photo detectors **109** and **110**. The servo control means **112** performs focusing control, which is positional control regarding a direction of an optical axis of the objective lens **105**, and tracking control, which is positional control regarding a direction vertical to the optical axis and also vertical to the scanning direction of the light beam, thereby controlling driving means such as a coil or a magnet to control the actuator **107**. An RF signal is generated by the RF signal calculation section **113**. The spherical aberration compensation section **108** drives the collimator lens **104** to perform optimal spherical aberration compensation in accordance with the distance of each information recording layer from the surface of the optical disc. The recording/reproducing apparatus also includes the following: the laser driving circuit **114** for driving the laser beam source **106** in the optical pickup **111**, the laser power control circuit **115** for performing power control on the laser driving circuit **114** at a desired laser output, the recording power control section **116** for setting a plurality of recording powers for the laser power control circuit **115** and issuing an instruction on test recording, data recording or reproduction, the reproduction signal detection section **117** for detecting the signal quality (modulation signal degree, asymmetry, β, jitter, MLSE, etc.) of a reproduction signal from the RF signal, the management information reading section **118** for reading, from the RF signal, the disc management information recorded in the PIC area of the multilayer optical disc **101** or OPC area management information recorded in the DMA of the multilayer optical disc **101**, and the calculation section **119** for calculating an optimal recording power based on the modulation signal degree characteristics detected by the reproduction signal detection means as a result of reproduction of a test-recorded signal, and also calculating the ratio between the optimal recording power (Pwoi) and the recommended recording power (Pwpi) to calculate an upper limit power for test recording. An operation of the calculation section **119** is as described above in the third step in Embodiment 6 or in the fourth step in Embodiment 7. Based on the results of the test recording, the optimal recording power or the upper limit recording power is calculated. The recording/reproducing apparatus also includes the memory **120** for storing any of, or all of, the optimal recording power for each information recording layer found by the test recording, the ratio (α) between the optimal recording power and the recommended recording power, and the upper limit recording power, and the system control section **121** for setting prescribed recording conditions on the recording power control section **116** based on the calculation results of the calculation section **119** or information read by the management information reading section **118**. The system control section **121** issues an instruction to the recording power control section **116** so that the test recording operation is repeated until the test recording is completed on all the information recording layers.

Now, an operation of calibration an optimal recording power using the recording/reproducing apparatus for the multilayer optical information recording medium will be described in detail.

Referring to FIG. **1**, the light beam emitted from the laser beam source **106** driven by the laser driving circuit **114** passes through the collimator lens **104** moved by the spherical aberration compensation section **108** and is collected to a desired information recording layer of the multilayer optical disc **101**, which is a multilayer optical information recording medium (BD-R medium). An optical spot is formed on the desired information recording layer by focusing control or tracking control performed by the servo control means **112**. The optical pickup **111** seeks to an inner periphery area of the multilayer optical disc **101** and reads the disc management information (DI: Disc Information) from the PIC area. The servo control means **112** allows the optical spot to seek to a test recording area of the multilayer optical disc **101** for performing focusing control or tracking control. The system control section **121** sets a plurality of recording powers within a range of ±10% around the target recording power (Pind), which is one of the OPC parameters in the DI information, and instructs the recording power control section **116** to perform test recording a plurality of times while changing the recording power. The laser power control circuit **115** provides power servo so that light is emitted at a desired recording power, the laser driving circuit **114** drives the laser beam source **106**, and a signal is recorded on a desired track (or a desired cluster) in a desired test recording area by the light beam collected by the objective lens **105**.

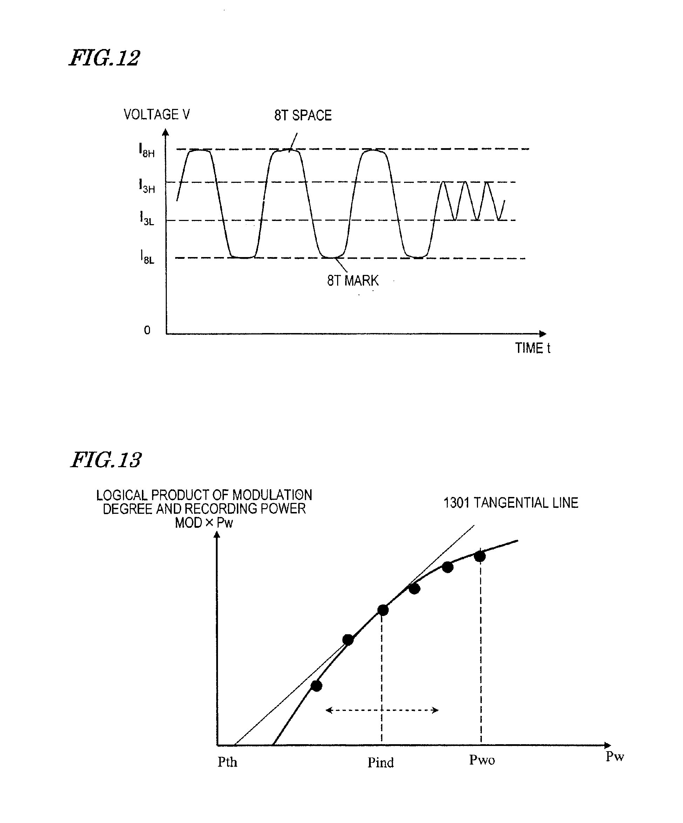

Now, a reproduction operation of a recorded signal will be described. The light reflected by the track (cluster) is received by the photo detectors **109** and **110** in the optical pickup **111** and is converted into an electric signal. Thus, an RF signal is generated by the RF signal calculation section **113**. The reproduction signal detection section **117** detects the modulation signal degree with respect to the plurality of recording powers used for the test recording. With reference to FIG. **12**, the modulation signal degree detected by the reproduction signal detection section **117** from the RF signal will be described. FIG. **12** shows a reproduction signal obtained from a recorded signal including a 8T signal. In an upper part of FIG. **12**, the voltage level for reproducing a 8T space formed on the optical disc is shown (I8H); and in a lower part of FIG. **12**, the voltage level for reproducing a 8T mark formed on the optical disc is shown (I8L). The reproduction signal detection section **117** detects the voltage level (I8H) of the 8T space, which is the longest space, and the voltage level (I8L) of the 8T mark, which is the longest mark, from the RF signal.

The calculation means **119** calculates the modulation signal degree (MOD) from the voltage levels (ISH, I8L) detected by the reproduction signal detection section **117**. The modulation signal degree is calculated by the calculation of MOD = (I8H - I8L)/I8H.

Now, a method for finding the optimal recording power, which is the optimal value of the recording power, from the modulation signal degree with respect to the plurality of recording powers will be described. Based on the measurement results of the modulation signal degree with respect to the plurality of recording powers used for the test recording, the calculation section **119** calculates a logical product of each recording power (Pw) and the modulation signal degree (MOD) with respect to the respective recording power (Pw). FIG. **13** illustrates an example of a logical product of a recording power (Pw) and the modulation signal degree with respect to the recording power (MOD × Pw). A tangential line **1301** is drawn using a plurality of measuring points in the vicinity of the target recording power (Pind). The intercept of the tangential line **1301** and the x axis (power axis) is set as the threshold recording power (Pth). The optimal recording power (Pwo) is calculated using the threshold recording power (Pth) and the power multiplication factors $\rho$ and $\kappa$. $\kappa$, $\rho$ and Pind are the OPC parameters mentioned above and are already recorded in the disc management area. The optimal recording power (Pwo) is calculated by the expression of Pwo - $\rho \times \kappa \times$ Pth. The calculation result is the optimal recording power Pwo of the respective information recording layer.

Next, the calculation section checks whether the optimal recording power found in the OPC-A area is the proper optimal recording power which is to be found. The optimal recording power (Pwoi) found in the OPC-A area of the i'th layer using the optical disc apparatus in the above-described operation procedure of finding the optimal recording power is compared with the recommended recording power (Pwpi) for the i'th layer determined by the optical disc manufacturer at the time of production. When the optimal recording power (Pwoi) is higher than the recommended recording power (Pwpi) by, for example, a level equal to or more than 5% (Pwoi/Pwpi-1 ≥ 5%), the found optimal recording power (Pwoi) is determined to be inappropriate and the write strategy is changed. Or, the OPC procedure described above is re-performed with the same write strategy in another attempt to find an optimal recording power (Pwoi).

There is another method for checking. In order to avoid such a situation that the optimal recording power found in the OPC-A area using the optical disc apparatus during the above-described operation procedure of finding the optimal recording power is substantially higher than the recording power assumed by the manufacturer of the optical disc at the time of production, the following is performed. The target modulation signal degree (Mmax) between the optimal recording power and the recommended recording power read from the disc management information pre-recorded in the PIC area of the optical disc is compared with the modulation signal degree (Mo) of the signal recorded with the optimal recording power. When the modulation signal degree of the signal recorded with the optimal recording power is higher than the target modulation signal degree (Mmax) (i.e., Mo > Mmax), the found optimal recording power (Pwoi) is determined to be too high and the write strategy is changed. Or, the OPC procedure described above is re-performed with the same write strategy in another attempt to find an optimal recording power (Pwoi). When it is determined as a result of the comparison that the modulation signal degree of the signal recorded with the optimal recording power (Mo) is equal to or lower than the target modulation signal degree (Mmax) (i.e., Mo ≤ Mmax), the found optimal recording power (Pwoi) is determined to be the optimal recording power.

The above examples, which are described as the methods for checking the optimal recording power, may be combined, or another preferable method may be used. For example, jitter, MLSE, β, asymmetry and the like may be combined to be used as a determination basis.

In Embodiment 8, the optimal value of the recording power is found by measuring the modulation signal degree of the signals recorded with a plurality of recording powers. The optimal recording power is not limited to be found by measuring the modulation signal degree. The optimal recording power may be found by measuring one of, or a combination of two or more of, other signal indices such as β, jitter, asymmetry, MLSE and the like. In the case of finding the optimal recording power using the modulation signal degree, the optimal value of the recording power may be found using an n·κ method, instead of using the logical product of the modulation signal degree and the recording power. By the n·κ method, the optimal value of the recording power is found using a logical product of the modulation signal degree and the power of n of the recording power.

Now, an operation of the calculation section for making a preparation for test recording on the j'th layer, which is different from the i'th layer, will be described. The ratio $\alpha$ (= Pwoi/Pwpi) between the optimal recording power (Pwoi) and the recommended recording power (Pwpi) for the i'th information recording layer is found, and the optimal recording power predicted for the j'th information recording layer (Pwyj) is calculated from the recommended recording power (Pwpj) for the j'th information recording layer using the following expression.

$$(\mathrm{Pwyj}) \;=\; (\mathrm{Pwpj}) \;\times\; \alpha$$

A value obtained by multiplying the optimal recording power predicted for the j'th information recording layer (Pwyj) by a predetermined coefficient X (for example, 1.1) is determined as the upper limit recording power for the j'th layer (Pwmaxj).

$$(\mathrm{Pwmaxj}) \;=\; (\mathrm{Pwyj}) \;\times\; X$$

In the above, $\alpha$ is the ratio between the optimal recording power found by the test recording and the recommended recording power. Namely, $\alpha$ is an index indicating how much the absolute value of the recording power which is set by the optical disc apparatus is deviated from the recommended recording power determined by the disc manufacturer at the time of production, due to dirt, dust or any other distortion caused to the optical disc apparatus. When $\alpha = 1$, the found optimal recording power matches the recommended recording power, namely, the recording power found by performing the test recording using the optical disc apparatus matches the power pre-recorded by the disc manufacturer at the time of production. When $\alpha > 1$, for example, dirt, dust or the like adheres to an element of an optical system, for example, an objective lens of the optical disc apparatus, and as a result, the recording power on the optical disc face is lower than the recording power immediately after a laser beam is emitted, due to a loss caused in the middle of the optical path. Or, when $\alpha > 1$, there may be an error in the calibration of the recording power performed by the optical disc apparatus. When $\alpha > 1$ is caused for such a reason, substantially the same loss of the recording power or calibration error also occurs in the other information recording layers. Therefore, the ratio $\alpha$ is used to correct an error between the recording power which is set by the optical disc apparatus and the actual power irradiating the information recording face of the optical disc.

Next, the system control section **121** instructs the recording power control section **116** to perform test recording in the OPC-B area of the j'th information recording layer and to find the optimal recording power and the optimal recording pulse conditions for the j'th layer. The test recording is performed at a plurality of recording powers equal to or lower than the upper limit recording power (Pwmaxj). The reproduction signal detection section **117** measures the modulation signal degree characteristics of the reproduction signals of the RF signal which are output from the RF signal generation section **113**.

The calculation section **119** finds the optimal recording power (Pwoj) for the j'th information recording layer. After the optimal recording power (Pwoj) for the j'th information recording layer is determined, test recording is performed in the OPC-B area of the j'th information recording layer to find optimal values of the recording pulse conditions (write strategy conditions). Thus, the test recording on the j'th information recording layer is completed. Although omitted here, the system control section **121** may perform a process of checking whether the found optimal recording power (Pwoj) is the proper optimal recording power which is to be found.

The system control section **121** checks whether the test recording is completed on all the information recording layers. When the test recording is not completed on all the information recording layers, the test recording is performed on the remaining information recording layer(s) to find the optimal recording power and the optimal values of the write strategy conditions. When test recording is completed on all the information recording layers, test recording completion processing is performed. Namely, the system control section instructs the recording power setting section to update the Next Available PSN information in the DMA, and performs recording in the DMA. Thus, the test recording is finished.

Information such as the optimal recording power found by test recording performed by the optical disc recording/reproducing apparatus, the upper limit value of the recording power for recording in an OPC-B area, the modulation signal degree which is to be the upper limit of the recording power, the optimal value of the recording pulse conditions or the like may be written in the area **1002** for DMA in the inner zone or any other prescribed area. Where such information is written, the next time when an operation on the optical information recording medium is started, the recording power or the recording pulse conditions can be corrected in accordance with the characteristics of the optical information recording medium without performing adjustment steps, which are otherwise necessary. This can shorten the adjustment time and efficiently improve the signal quality of the recording marks.

In the above embodiments, the present invention is described with an optical recording/reproducing apparatus and a write-once optical disc, as an example. The present invention is not limited to these and is also applicable to a rewritable optical disc.

In the above embodiments of the present invention, the upper limit on the recording power for recording in an OPC-B area is set. The "recording power" generally means the peak level power obtained when a laser beam is modulated into pulses. In accordance with the type of recording pulses, the upper limit may be set for a power level lower than the write peak power, such as middle power, space power, erase power, bottom power, cooling power or the like. A plurality of upper limits can be set in accordance with the speed of the optical disc. Specifically, in the case of an optical disc recordable both at a double speed (2X) and a four speed (4X), different upper limits can be set for the recording power for 2X and 4X.

(EMBODIMENT 9)

Now, a procedure for adjusting servo conditions including test recording on a multilayer optical information recording medium according to Embodiment 9 of the present invention will be described with reference to the figures. In the following description, the multilayer optical disc has the physical format used in Embodiment 1 of the present invention as an example, but the following procedure is adaptable to the physical format of the multilayer optical disc described in Embodiment 2, 3 or 4.

Here, the procedure for adjusting mainly servo-related parameters such as radial tilt, tangential tilt, focus offset, tracking offset, spherical aberration and the like will be described.

Radial tilt and tangential tilt are tilts determined by the scanning direction of the optical axis and spot. The tilts are adjusted such that the optical spot is incident vertically on the information recording face of the optical disc. Where the recording face of the optical disc is tilted, coma aberration occurs, which makes it difficult to record or reproduce a high quality signal on or from the optical disc. Therefore, before a signal is recorded or reproduced on or from the optical disc, it is necessary to accurately detect and correct the tilt angle between the disc and the laser beam axis.

In the case of an optical disc having a plurality of information recording layers, the distance from the laser beam incidence side to the information recording face is different among **L0**, **L1**, **L2** and **L3**. Therefore, when an optical spot is collected to each information recording layer, spherical aberration occurs in accordance with the distance. It is necessary to adjust the spherical aberration to be optimal to the respective information recording layer.

In order to raise the reliability of an optical disc system, the servo conditions need to be adjusted such that a high quality signal can be recorded or reproduced. According to one method for adjusting the servo conditions, an initial value of the servo conditions preset for the optical disc apparatus is used. It is recommended that the initial value of the servo conditions which is preset at the time of shipping should be individually adjusted in accordance with the type of the optical disc, eccentricity of the individual disc, variance in thickness, tilt, variance in attaching precision of the optical disc apparatus or the like. In this manner, a high quality signal can be recorded or reproduced. The procedure for adjusting the servo conditions is as follows. When the optical disc is loaded on the apparatus, in the state where the laser beam is focused on a desired information recording layer, a tracking error signal generated from the light reflected by the pre-formed groove track is detected by the servo control means **112**, and the radial tilt, the tangential tilt, the focus offset and the spherical aberration compensation value are adjusted such that the amplitude of the tracking error signal is maximized.

Referring to FIG. **1**, the servo control means **112** performs focusing control, which is positional control regarding a direction of an optical axis of the objective lens **105**, and tracking control, which is positional control regarding a direction vertical to the optical axis and also vertical to the scanning direction of the light beam, thereby controlling driving means such as a coil 1 or a magnet to control the actuator **107**. The spherical aberration compensation section **108** drives the collimator lens **104** to perform optimal spherical aberration compensation in accordance with the distance of each information recording layer from the surface of the optical disc. The servo conditions of a rewritable or write-once optical disc are adjusted as follows. While changing the servo conditions, a tracking error signal generated from the light reflected by the recording track of the optical disc is detected by the servo control means **112**, and the radial tilt, the tangential tilt and the focus offset are adjusted such that the amplitude of the tracking error signal is maximized.

For adjusting the servo conditions more precisely, the servo conditions are adjusted as follows. A track having information recorded in the past is searched for based on the OPC area management information in the DMA; the information is reproduced from the desired recorded track; an RF signal generated from the reflected light is read by the reproduction signal detection section **117**; the signal quality parameters of the reproduction signal (jitter, MLSE, error rate, modulation signal degree, etc.) are measured; and the servo conditions are adjusted such that the measured signal quality parameters are optimized. By adjusting the servo conditions using two signals, i.e., the tracking error signal and the RF signal in this manner, more precise servo conditions can be set and the signal quality can be improved.

In the case of an optical disc on which no data has been recorded yet, for example, a blank disc, there is no track having information recorded. Although the servo conditions can be adjusted by detecting the amplitude of a tracking error signal in the state where the laser beam is focused, more precise servo condition adjustment using the RF signal cannot be performed. Therefore, for adjusting the servo conditions, the recording power and the recording pulse condition are calibrated, and a provisional recording power and a provisional recording pulse condition are determined. A test recording track for optimizing the servo conditions under the provisional recording power and the recording pulse condition is formed, and thus the optimal servo conditions are determined. After the optimal servo conditions are determined, the recording power and the recording pulse condition are calibrated in the OPC area, and the optimal recording power and the optimal recording pulse condition are determined in the procedure described in Embodiment 6 of the present invention. With such a recording power and recording pulse condition, a test recording track is formed in the OPC area or the DMA.

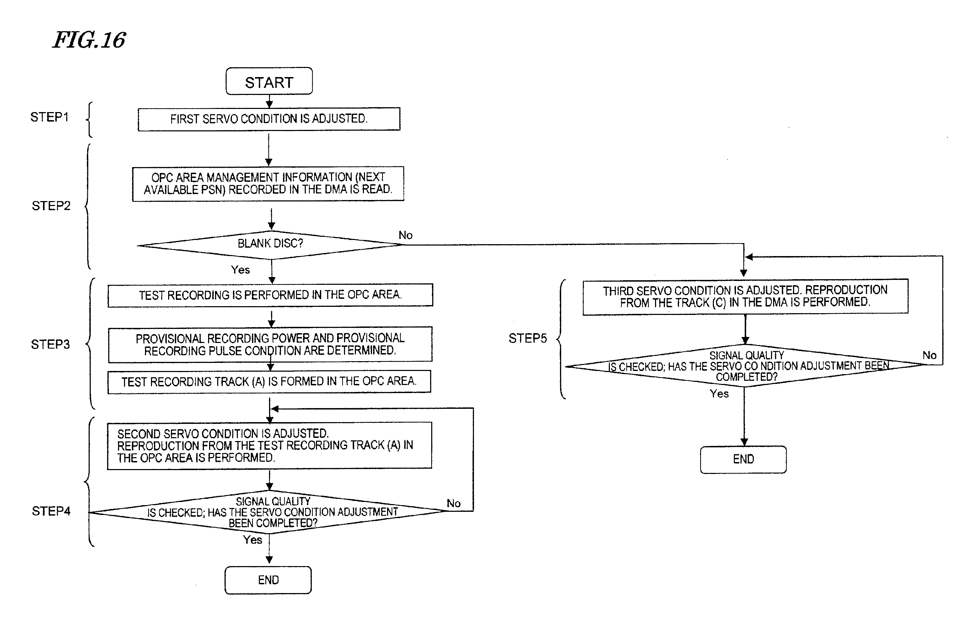

The procedure for adjusting the servo conditions in this embodiment will be described with reference to the flowchart in FIG. **16**. In a first step, when an optical disc is loaded on an optical disc apparatus, a first servo condition is adjusted. When the optical disc is loaded on the optical disc apparatus, in the state where the laser beam is focused on a desired information recording layer, a tracking error signal generated from the light reflected by the groove track pre-formed in the optical disc is detected by the servo control means **112**, and the radial tilt, the tangential tilt, the focus offset and the spherical aberration compensation value are adjusted such that the amplitude of the tracking error signal is maximized. The tracking offset is adjusted such that the control loop is closed at the center of the amplitude of the push-pull signal. The above procedure is performed for each of all the information recording layers, and thus the adjustment of the first servo condition for each information recording layer is completed.

Regarding the parameters which are not changed in accordance with the thickness of the information recording layer but are changed in accordance with the radial position, for example, radial tilt and tangential tilt, it is not absolutely necessary to perform the adjustment for all the information recording layers. Instead, a value obtained for any one information recording layer may be used while omitting the adjustment for the other information recording layers.

In a second step, it is determined whether or not the disc is a blank disc. The OPC area management information recorded in the DMA in the lead-in zone is read to check whether or not data is recorded in the DMA or the OPC area. When a signal is recorded in the past, the procedure goes to a fifth step described later. When no signal is recorded in the past (when the disc is a blank disc), the procedure goes to a third step.

In the third step, before a second servo condition is adjusted, a provisional recording power and a provisional recording pulse condition for each of the information recording layers **L0**, **L1**, **L2** and **L3** are found. The first servo condition is set, and OPC is performed in the OPC-A area of **L0** to determine the provisional recording power. The recording pulse condition is adjusted in the OPC-A area to determine a provisional value of the recording pulse condition. With the provisional recording power and the provisional write strategy, a test recording track (A) is formed in the OPC-A area. Then, OPC is performed in the OPC-B area of **L1** to determine a provisional recording power. The recording pulse condition is adjusted in the OPC-B area to determine a provisional value of the recording pulse condition. With the provisional recording power and the provisional write strategy, a test recording track (A) is formed in the OPC-B area. Similarly for **L2** and **L3**, a provisional recording power and a provisional recording pulse condition are determined in the same procedure, and a test recording track (A) is formed in the OPC-B area. The test recording in the OPC area for determining the provisional recording power and the provisional recording pulse condition is performed in the procedure described in Embodiment 6.

In a fourth step, a second servo condition is adjusted. Data in the test recording track (A) formed in the OPC area in the third step is reproduced to adjust the servo condition as follows. The reproduction signal quality is measured while changing the offset value of each servo condition. The reproduction signal quality parameters (jitter, MLSE, error rate, modulation signal degree, etc.) of an RF signal generated by reproducing the data in the test recording track (A) are read to adjust the servo condition such that the reproduction signal quality parameters are optimized. Thus, the optimal servo condition is determined. The above procedure is performed for each of all the information recording layers, and thus the adjustment of the second servo condition for each information recording layer is completed.

In a fifth step, a third servo condition is adjusted as follows. While changing the set value of the servo condition, the reproduction signal quality parameters (jitter, MLSE, error rate, modulation signal degree, etc.) of an RF signal generated by reproducing the data in a recorded track (C) formed in the DMA are measured, and the servo condition is determined such that the reproduction signal quality parameters are optimized. The above procedure is performed for each of all the information recording layers, and thus the adjustment of the third servo condition for each information recording layer is completed.

In the above, the recorded track (C) in the DMA is used to adjust the servo condition. A signal recorded in the DMA is not recorded by test recording but is recorded in a good state after the recording power and the recording pulse condition are adjusted. Therefore, such a signal is suitable for the servo condition adjustment which needs to be done at higher precision than the formation of a test recording track in the OPC area.

In the fifth step of this embodiment, data in the track (C) formed in the DMA in the lead-in zone is reproduced to determine the optimal third servo condition. In the case where the signal quality of a test recording track (B) formed in the OPC-B area in the lead-in zone is high, the test recording track (B) formed in the OPC-B area may be used to adjust the servo condition.

Tracks (C) formed in the DMAs both on the inner periphery side and on the outer periphery side may be used to adjust the servo condition. The servo conditions separately determined on the inner periphery side and on the outer periphery side of the optical disc are linear-interpolated in accordance with the radial position between the inner periphery and the outer periphery. Thus, recording and reproduction can be performed under good servo conditions over a radial direction range of the optical disc.

When the servo conditions for a multilayer optical disc according to the present invention are adjusted using a reproduction-only optical disc apparatus called a "player" which cannot write data, the servo conditions are adjusted using a recorded track formed in the OPC area or the DMA in the lead-in zone. A method for adjustment with a player corresponds to the procedure in the flowchart shown in FIG. 16 in the case where the optical disc is not a blank disc. Using a track (C) having data pre-recorded in advance is used to measure the reproduction signal quality parameters of an RF signal while changing the servo conditions. Thus, optimal servo conditions are determined. When the optical disc is determined to be a blank disc, it is determined that no data to be reproduced is recorded and the subsequent processing is not performed.

Adjusting the servo conditions in the lead-in zone, which is on the inner periphery side of the optical disc, provides the following effects. When a cover layer or a space layer of an optical disc is formed using spin-coating or the like, thickness non-uniformity occurs between the inner periphery to the outer inner periphery. When the inner periphery thickness of an optical disc has a specified precision, the servo conditions can be adjusted more precisely on the inner periphery side where there is a smaller thickness variance of the cover layer and the space layer and a smaller influence of the disc tilt. When the thickness of the optical disc is not uniform between the inner periphery and the outer periphery, the servo condition adjustment is performed in the state where the inner periphery has a thickness within a certain reference range. Regarding the outer periphery, the design guarantee is provided that the thickness and the tilt are within a certain range with respect to the reference values of the inner periphery. In this manner, the signal quality can be kept within a certain range.

When the servo condition adjustment is performed both in the lead-in zone on the inner periphery side and the lead-out zone on the outer periphery side, a wait time is needed for the optical pickup to seek from the inner periphery to the outer periphery. By adjusting the servo conditions in the lead-in zone on the inner periphery side, the seek time of the optical pickup can be shortened. Performing the OPC for adjusting the servo conditions, adjustment of the recording pulse condition, reading of disc management information and the like in the lead-in zone on the inner periphery side provides an effect of shortening the start time.

In a multilayer optical disc used in Embodiments 1 through 9 of the present invention, for the zeroth information recording layer which is located farthest from the laser beam incidence side of an optical disc including a plurality of information recording layers, no upper limit needs to be set because it is not necessary to consider the influence on any information recording layer farther from the laser beam incidence side than this information recording layer. An upper limit on the recording power needs to be set only for the first information recording layer and the information recording layer(s) closer to the laser beam incidence side than the first information recording layer. Accordingly, in the zeroth information recording layer (**L0**) of the multilayer optical disc used in Embodiments 1 through 9 of the present invention, the OPC-B area may be replaced with an OPC-A area. As the start point of the test recording, the OPC area of **L0** and the OPC-A area of an information recording layer other than **L0** may be used together.

In Embodiments 1 through 9 of the present invention, the OPC-B areas are located at generally the same radial position among the information recording layers. Since recording is not performed in the OPC-B areas according to the present invention at an excessively high recording power, the OPC-B areas may be positionally exchanged with a DMA or any other area, in the inner zone or the outer zone, in which recording is performed at an appropriate power, so that the OPC-B areas are located at shifted radial positions among the information recording layers. Alternatively, an OPC-B area in one information recording layer may be divided into two or more to be located both in the inner zone and the outer zone.

In Embodiments 1 through 9 of the present invention, two types of OPC areas are located in the inner zone. The OPC area may be located in the outer zone instead of the inner zone, or may be located both in the inner zone and the outer zone. In the case of a rewritable optical disc, the test recording area may be located in the data zone and may be erased by the DC power after the test recording is completed.

In the outer zone, either the OPC-A area or the OPC-B area may be located. By locating the OPC area both in the inner zone and the outer zone, the following is made possible. When high speed recording by which the rotation rate of the spindle motor at the inner radius exceeds 10,000 rpm is performed, even if test recording cannot be performed at a desired linear velocity due to the restriction on the rotation rate in the inner zone on the inner periphery side, test recording can be performed in the outer zone on the outer periphery side because the rotation rate is half of that in the inner zone. Thus, it is made possible to perform optimal recording power calibration or other types of calibration on the outer periphery side.

In Embodiments 1 through 9 of the present invention, an optical pickup substantially the same as the optical pickup used for BD is used. Alternatively, an optical pickup of any structure is usable as long as an optical recording medium is irradiated with a beam and a signal is output in accordance with the beam reflected by the optical recording medium.

In Embodiments 1 through 9 of the present invention, an optical disc including four stacked information recording layers is described as an example. The present invention is applicable to a multilayer optical disc including three, two, or five or more layers, instead of four layers, needless to say.

(Main parameters)

Examples of the recording mediums to which the present invention is applicable include Blu-ray disc (BD) and optical discs of other formats. Herein, BDs will be described. There are the following types of BD in accordance with the characteristics of the recording layers: reproduction-only BD-ROM, write once BD-R, rewritable BD-RE and the like. The present invention is applicable to any of the R (write once type) and the RE (rewritable type) of BDs and other format recording mediums. The main optical constants and physical formats of the Blu-ray disc are disclosed in "Illustrated Blu-ray Disc Reader" ("Zukai Blu-ray Disc Dokuhon") published by Ohmsha, Ltd. or the white papers put on the web site of the Blu-ray Association (http://www.blu-raydisc.com/).

For the BD, laser beam having a wavelength of about 405 nm (where the tolerable error range is $\pm 5$ nm with respect to the standard value of 405 nm, 400 to 410 nm) and an objective lens having a numerical aperture (NA) of about 0.85 (where the tolerable error range is $\pm 0.01$ nm with respect to the standard value of 0.85, 0.84 to 0.86) are used. The track pitch of the BD is about 0.32 $\mu$m (where the tolerable error range is 0.010 $\mu$m with respect to the standard value of 0.320 $\mu$m, 0.310 to 0.330 $\mu$m), and one or two recording layers are provided. One or two recording layers each having a recording surface are provided on the side on which the laser beam is incident. The distance from the surface of a protective layer of the BD to the recording surface is 75 $\mu$m to 100 $\mu$m.

As the modulation system for a recording signal, 17PP modulation is used. The length of the shortest mark to be recorded (2T mark; T is a cycle of the reference clock (the reference cycle of modulation in the case where a mark is recorded by a prescribed modulation rule)) is 0.149 $\mu$m (or 0.138 $\mu$m) (channel bit length T is 74.50 nm (or 69.00 nm)). The recording capacity is 25 GB (or 27 GB) (more precisely, 25.025 GB (or 27.020 GB) where one layer is provided on one side, or 50 GB (or 54 GB) (more precisely, 50.050 GB (or 54.040 GB) where two layers are provided on one side.

The channel clock frequency is 66 MHz (channel bit rate: 66.000 Mbits/s) at the standard transfer rate (BD1x), 264 MHz (channel bit rate: 264.000 Mbits/s) at the 4x transfer rate (BD4x), 396 MHz (channel bit rate: 396.000 Mbits/s) at the 6x transfer rate (BD6x) rate, and 528 MHz (channel bit rate: 528.000 Mbits/s) at the 8x transfer rate (BDBx).

The standard linear velocity (reference linear velocity, 1x) is 4.917 m/sec. (or 4.554 m/sec.). The linear velocity at 2x, 4x, 6x and 8x is respectively 9.834 m/sec., 19.668 m/sec., 29.502 m/sec., and 39.336 m/sec. A linear velocity higher than the reference linear velocity is generally a positive integral multiple of the reference linear velocity, but is not limited to an integral multiple and may be a positive real number multiple of the reference linear velocity. A linear velocity lower than the reference linear velocity, such as 0.5 times (0.5x), may also be defined.

The above description is regarding BDs already developed into commercial products, which include one layer or two layers and have a recording capacity per layer of, mainly, about 25 GB (or about 27 GB). For realizing a higher capacity, a high density BD having a recording capacity per layer of about 32 GB or about 33.4 GB and a BD including three or four layers are also under research, and these BDs will also be described below.

(Multiple layers)

In the case of a one-sided disc used for information reproduction and/or recording with laser beam incident on the side of the protective layer, where there are two or more recording layers, there are a plurality of recording layers between the substrate and the protective layer. An example of a general structure of such a multi-layer disc is shown in FIG. **19**. The disc shown here includes (n+1) information recording layers **502** (n is an integer of 0 or greater). A specific structure of the optical disc is as follows. A cover layer **501**, the (n+1) information recording layers (Ln through L0 layers) **502**, and a substrate **500** are sequentially stacked from a surface on which laser beam **505** is incident. Between each two adjacent layers of the (n+1) information recording layers **502**, an intermediate layer **503** acting as an optical buffer member is inserted. The reference layer (L0) is provided at a deepest position which is away from the light incidence surface by a prescribed distance (a position farthest from the light source), and the other layers (L1, L2, ... Ln) are stacked on the reference layer (L0) toward the light incidence surface.

The distance from the light incidence surface to the reference layer L0 of the multi-layer disc may be substantially the same as the distance from the light incidence surface to the recording layer of a single layer disc (e.g., about 0.1 mm). By keeping the distance to the deepest (farthest) layer the same regardless of the number of layers in this manner (i.e., by making the distance the same as the distance in the single layer disc), the following effects are provided. The compatibility can be maintained between a single layer disc and a multi-layer disc regarding the access to the reference layer. In addition, the influence of the tilt is prevented from being increased even when the number of layers increases, for the following reason. The deepest layer is most influenced by the tilt. However, in the case where the distance to the deepest layer is made the same as the distance in the single layer disc, the distance to the deepest layer is not increased even if the number of layers increases.

Regarding the spot scanning direction (also referred to as the "track direction or spiral direction"), either the parallel path or the opposite path is usable.

By the parallel path, the reproduction direction is the same in all the layers. Namely, the spot scanning direction is from the innermost end toward the outermost end in all the layers, or from the outermost end toward the innermost end in all the layers.

By the opposite path, the reproduction direction in one layer is opposite to the reproduction direction in a layer adjacent thereto. Specifically, where the spot scanning direction is from the innermost end toward the outermost end in the reference layer (L0) the reproduction direction is from the outermost end toward the innermost end in the recording layer L1 and is from the innermost end toward the outermost end in the recording layer L2. Namely, the reproduction direction is from the innermost end toward the outermost end in the recording layer Lm (m is 0 or an even number) and is from the outermost end toward the innermost end in the recording layer Lm+1. Alternatively, the reproduction direction is from the outermost end toward the innermost end in the recording layer Lm (m is 0 or an even number) and is from the innermost end toward the outermost end in the recording layer Lm+1.

The thickness of the protective layer (cover layer) is set to be smaller because the numerical aperture (NA) is higher and so the focal distance is shorter, and also in order to suppress the influence of the distortion of the spot caused by the tilt. The numerical aperture NA is set to about 0.85 for the BD whereas the numerical aperture NA is set to 0.45 for the CD and 0.65 for the DVD. For example, among the total thickness of the recording medium of about 1.2 mm, the thickness of the protective layer may be 10 to 200 $\mu$m. More specifically, on a substrate having a thickness of about 1.1 mm, a transparent protective layer having a thickness of about 0.1 mm may be provided in the case of a single layer disc, and a protective layer having a thickness of about 0.075 mm and an intermediate layer (spacer layer) having a thickness of about 0.025 mm may be provided in the case of a two-layer disc. For a disc including three or more layers, the thickness of the protective layer and/or space layer may be thinner.

(Structural examples of discs having one through four layers)

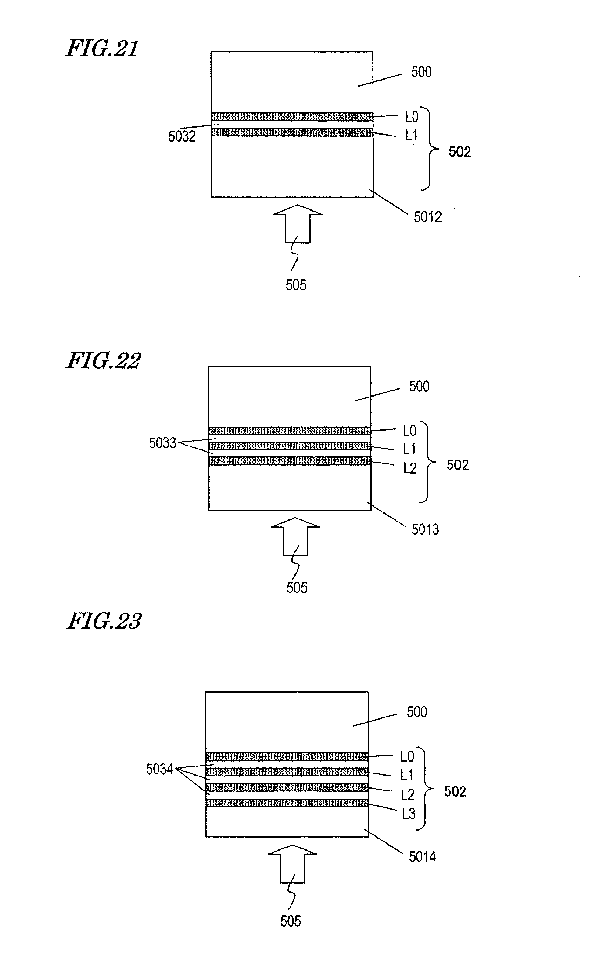

Now, FIG. **20** shows an example of a structure of a single layer disc, FIG. **21** shows an example of a structure of a two-layer disc, FIG. **22** shows an example of a structure of a three-layer disc, and FIG. **23** shows an example of a structure of a four-layer disc. As described above, where the distance from the light incidence surface to the reference layer L0 is made the same, the total thickness of the disc is about 1.2 mm (it is preferable that the total thickness is equal to or less than 1.40 mm including label printing or the like), the thickness of the substrate **500** is about 1.1 mm, and the distance from the light incidence surface to the reference layer L0 is about 0.1 mm in any of the discs shown in FIG. **21** through FIG. **23**. In the single layer disc shown in FIG. **20** (n = 0 in FIG. **19**), the thickness of a cover layer **5011** is about 0.1 mm. In the two-layer disc shown in FIG. **21** (n = 1 in FIG. **19**), the thickness of a cover layer **5012** is about 0.075 mm and the thickness of a space layer **5032** is about 0.025 mm. In the three-layer disc shown in FIG. **22** (n = 2 in FIG. **19**) and the four-layer disc shown in FIG. **23** (n = 3 in FIG. **19**), the thickness of cover layers 5013 and **5014** and/or the thickness of space layers **5033** and **5034** are still thinner.

(Production method of the optical disc)

These single layer or multi-layer discs (disc having k number of recording layers; k is an integer of 1 or greater) can be each produced by the following process.

A substrate having a thickness of about 1.1 mm is irradiated with laser beam having a wavelength of 400 nm or greater and 410 nm or less via an objective lens having a numerical aperture of 0.84 or greater and 0.86 or less. Thus, k number of recording layers from which information is reproduceable is formed.

Next, (k-1) number of space layers are formed between a recording layer and another recording layer. In the case of a single layer disc, k = 1. Since k - 1 = 0, no space layer is formed.

Next, on the k'th recording layer counted from the substrate side (in the case of a multi-layer disc, the recording layer farthest from the substrate), a protective layer having a thickness of 0.1 mm or less is formed.

During the step of forming the recording layers, when an i'th recording layer counted from the substrate side (i is an odd number of 1 or greater and k or less) is formed, a concentric or spiral track is formed such that the reproduction direction is from the innermost end toward the outermost end of the disc. When a j'th recording layer counted from the substrate side (j is an even number of 1 or greater and k or less) is formed, a concentric or spiral track is formed such that the reproduction direction is from the outermost end toward the innermost end of the disc. In the case of a single layer disc, k = 1. In the case where k = 1, i, which is an odd number that is 1 or greater and k or less, is only "1". Therefore, only one recording layer is formed as the i'th recording layer. In the case where k = 1, j, which is an even number that is 1 or greater and k or less, does not exist. Therefore, no layer is formed as the j'th recording layer.

In the track of the recording layers, various types of areas can be assigned.

(Reproducing apparatus of the optical disc)

Reproduction from such a single layer or multi-layer disc (disc having k number of recording layers; k is an integer of 1 or greater) is performed by a reproducing apparatus having the following structure.

The disc has a structure of including a substrate having a thickness of about 1.1 mm, k number of recording layers provided on the substrate, (k-1) number of space layers provided between a recording layer and another recording layer (in the case of a single layer disc, k = 1, and since k - 1 = 0, no space layer is formed), and a protective layer having a thickness of 0.1 mm or less and provided on the k'th recording layer counted from the substrate side (in the case of a multi-layer disc, the recording layer farthest from the substrate). A track is formed on each of the k number of recording layers, and in at least one of the tracks, various types of areas can be assigned.

An optical head irradiates the k number of recording layers with laser beam having a wavelength of 400 nm or greater and 410 nm or less via an objective lens having a numerical aperture of 0.84 or greater and 0.86 or less from the side of a surface of the protective layer. Thus, information is made reproduceable from each of the k number of recording layers.

On the i'th recording layer counted from the substrate side (i is an odd number of 1 or greater and k or less), a concentric or spiral track is formed. A control section for reproducing information from the innermost end toward the outermost end of the disc controls the reproduction direction, so that information can be reproduced from the i'th recording layer.

On the j'th recording layer counted from the substrate side (j is an odd number of 1 or greater and k or less), a concentric or spiral track is formed. The control section for reproducing information from the outermost end toward the innermost end of the disc controls the reproduction direction, so that information can be reproduced from the j'th recording layer.

(In-Groove/On-Groove)

Now, the recording system will be described. By forming a groove in a medium, groove parts and inter-groove parts between groove parts are formed. There are various recording systems; namely, data may be recorded in the groove parts, in the inter-groove parts, or both in the groove parts and the inter-groove parts. A system of recording on a convex side as seen from the light incidence surface, among the groove parts and the inter-groove parts, is called "on-groove system", whereas a system of recording on a concave side as seen from the light incidence surface is called "in-groove system". According to the present invention, it is not specifically limited whether the on-groove system is used, the in-groove system is used, or a system of permitting either one of the two systems is used.

In the case of using the system of permitting either one of the two systems, recording system identification information which indicates whether the on-groove system or the in-groove system is used may be recorded on the medium, so that the recording system of the medium, the on-groove system or the in-groove system, can be easily identified. For a multi-layer medium, recording system identification information on each layer may be recorded. In such a case, recording system identification information on all the layers may be recorded on a reference layer (the layer farthest from the light incidence surface (L0), the layer closest to the light incidence surface, the layer to which the optical head is determined to access first after the optical disc apparatus is started, etc.). Alternatively, recording system identification information on each layer may be recorded on the respective layer, or recording system identification information on all the layers may be recorded on each layer.

The areas in which the recording system identification information can be recorded include a BCA (Burst Cutting area), a disc information area (an area which is inner or/and outer to the data recording area and mainly stores control information; in the reproduction-only area, such an area may have a track pitch larger than that of the data recording area), a wobble (recorded in superimposition on the wobble), and the like. The recording system identification information may be recorded in any one of these areas, a plurality of areas among these areas, or all of these areas.

The wobble start direction may be opposite between the on-groove system and the in-groove system. Namely, where the wobble start direction in the on-groove system is from the innermost end toward the outermost end of the disc, the wobble start direction in the in-groove system may be from the outermost end of the disc (alternatively, where the wobble start direction in the on-groove system is from the outermost end of the disc, the wobble start direction in the in-groove system may be from the innermost end of the disc). By setting the wobble start direction to be opposite between the on-groove system and the in-groove system in this manner, the tracking polarity can be the same whichever system, the on-groove system or the in-groove system, may be used. The reason is as follows. In the on-groove system, the recording is made on the convex side as seen from the light incidence side, whereas in the in-groove system, the recording is made on the concave side as seen from the light incidence side. Therefore, if the groove depth is the same in these systems, the tracking polarity is opposite. By setting the wobble start direction to be opposite between the two systems, the tracking polarity can be made the same.

(High to Low/Low to High)

A recording film can have the following two recording characteristics because of the relationship between the reflectance of the recorded part and the reflectance of the unrecorded part. They are HtoL characteristic at which the reflectance of the unrecorded part is higher than the reflectance of the recorded part (High-to-Low), and LtoH characteristic at which the reflectance of the unrecorded part is lower than the reflectance of the recorded part (Low-to-High). According to the present invention, it is not specifically limited whether the HtoL characteristic is used, the LtoH characteristic is used, or either one of the two is permissible as the characteristic of the recording film of the medium.

In the case where either one of the two is permissible, recording film characteristic identification information which indicates whether the recording film has the HtoL characteristic or the LtoH characteristic may be recorded on the medium, so that it can be easily identified which characteristic the recording film has. For a multi-layer medium, recording film characteristic identification information on each layer may be recorded. In such a case, recording film characteristic identification information on all the layers may be recorded on a reference layer (the layer farthest from the light incidence surface (L0), the layer closest to the light incidence surface, the layer to which the optical head is determined to access first after the optical disc apparatus is started, etc.). Alternatively, recording film characteristic identification information on each layer may be recorded on the respective layer, or recording film characteristic identification information on all the layers may be recorded on each layer.

The areas in which the recording film characteristic identification information can be recorded include a BCA (Burst Cutting area), a disc information area (an area which is inner or/and outer to the data recording area and mainly stores control information; in the reproduction-only area, such an area may have a track pitch larger than that of the data recording area), a wobble (recorded in superimposition on the wobble), and the like. The recording film characteristic identification information may be recorded in any one of these areas, a plurality of areas among these areas, or all of these areas.

When the recording density increases, a plurality of recording densities may be possibly provided for optical disc mediums. In such a case, only a part of the various formats and methods described above may be adopted, or a part thereof may be replaced with another format or method.

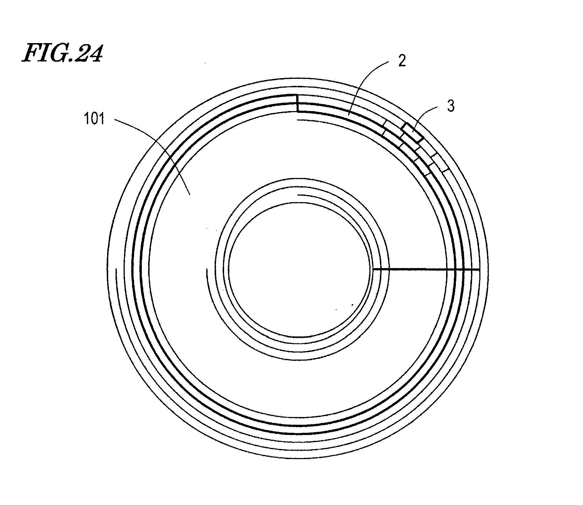

FIG. **24** shows a physical structure of an optical disc **1** according to this embodiment. On the discus-shaped optical disc **1**, a great number of tracks **2** are formed concentrically or in a spiral, for example. In each track **2**, a great number of tiny sectors are formed. As described later, data is recorded on each track **2** in units of blocks **3** each having a predetermined size.

The optical disc **1** according to this embodiment has an expanded recording capacity per information recording layer as compared with a conventional optical disc (for example, a BD of 25 GB). The recording capacity is expanded by raising the recording linear density, for example, by decreasing the length of a recording mark to be recorded on the optical disc. Here, the expression "raising the recording linear density" means to decrease the channel bit length. The "channel bit length" refers to a length corresponding to cycle T of the reference clock (the reference cycle T of modulation in the case where a mark is recorded by a prescribed modulation rule). The optical disc **1** may include a plurality of layers. In the following, only one information recording layer will be described for the convenience of explanation. Even where the width of the track is the same among a plurality of layers provided in the optical disc, the recording linear density may be varied on a layer-by-layer basis by making the mark length different among different layers while making the mark length the same in the same layer.

The track **2** is divided into blocks by a data recording unit of 64 kB (kilobytes), and the blocks are sequentially assigned block address values. Each block is divided into sub blocks each having a prescribed length. Three sub blocks form one block. The sub blocks are assigned sub block numbers of 0 through 2 from the first sub block.

(Recording density)

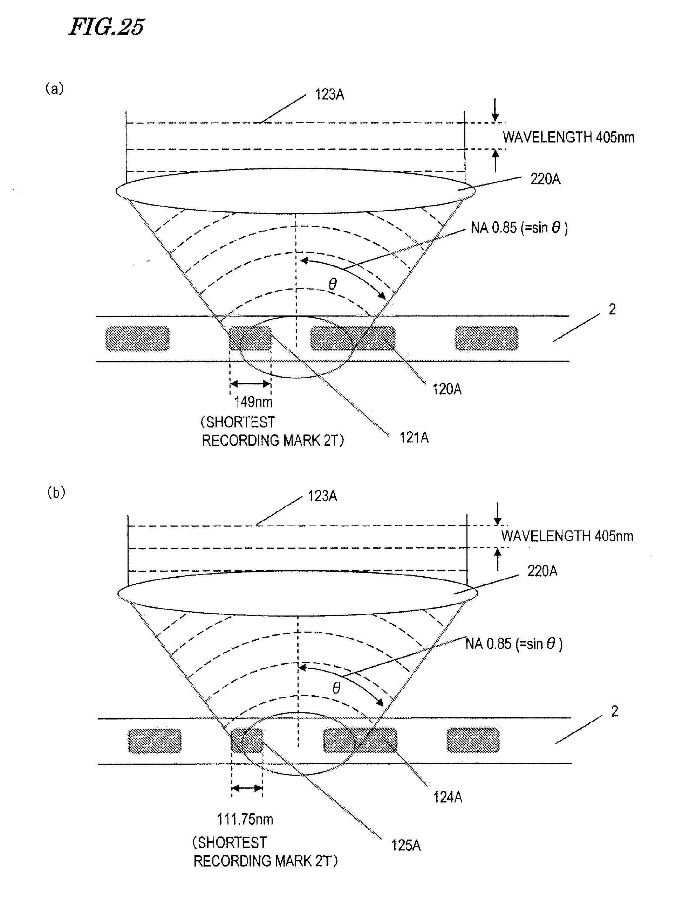

Now, the recording density will be described with reference to FIG. **25**, FIG. **26** and FIG. **27**.

FIG. **25(a)** shows an example of a 25 GB BD. For the BD, the wavelength of laser beam **123A** is 405 nm and the numerical aperture (NA) of an objective lens **220A** is 0.85.

Like in the case of a DVD, also in the case of a BD, the recording data is recorded as marks **120A** and **121A** formed by a physical change on the track **2** of the optical disc. A mark having the shortest length among these marks is referred to as the "shortest mark". In the figure, the mark **121A** is the shortest mark.

When the recording capacity is 25 GB, the physical length of the shortest mark **121A** is 0.149 $\mu$m. This corresponds to about 1/2.7 of that of a DVD. Even if the resolving power of the laser beam is raised by changing the wavelength parameter (405 nm) and the NA parameter (0.85) of the optical system, the physical length of the shortest mark is close to the limit of the optical resolving power, i.e., the limit at which a light beam can identify a recording mark.

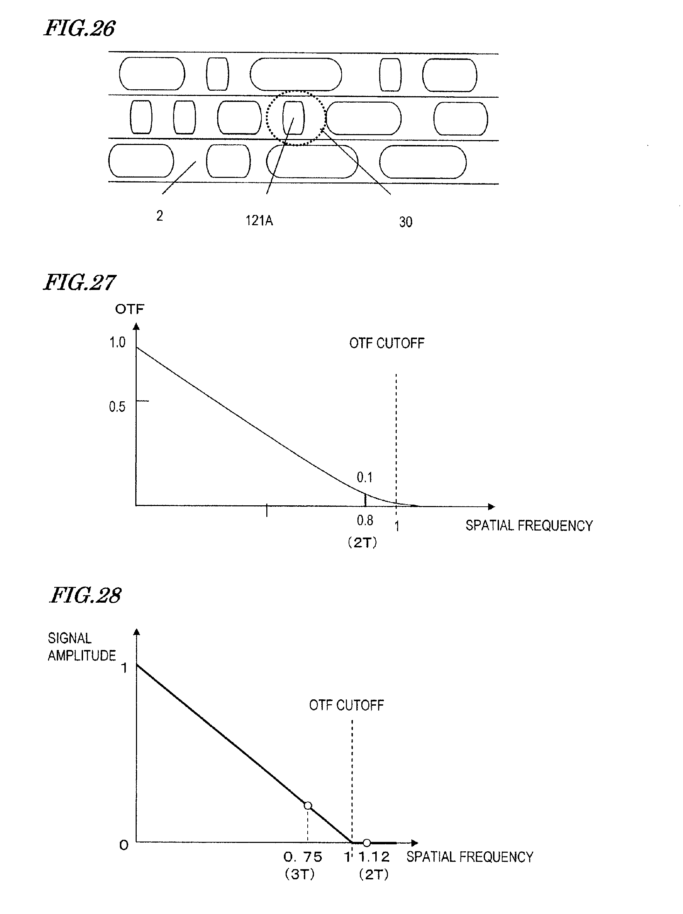

FIG. **26** shows how a mark sequence recorded on the track is irradiated with a light beam. In the case of a BD, an optical spot **30** has a diameter of about 0.39 $\mu$m because of the above-mentioned parameters of the optical system. When the recording linear density is raised without changing the structure of the optical system, the recording mark becomes smaller with respect to the diameter of the optical spot **30**, and therefore the resolving power for reproduction is declined.

For example, FIG. **25(b)** shows an example of an optical disc having a recording density higher than that of the 25 GB BD. For this disc also, the wavelength of the laser beam **123A** is 405 nm and the numerical aperture (NA) of the objective lens **220A** is 0.85. A mark shortest among the marks **125A** and **124A** of the disc, namely, the mark **125A**, has a physical length of 0.1115 $\mu$m. In the disc in FIG. **25(b)**, as compared with the disc shown in FIG. **25(a),** the diameter of the spot is the same at about 0.39 $\mu$m but the recording mark is smaller and the inter-mark gap is narrower. Therefore, the resolving power for reproduction is declined.

An amplitude of a reproduction signal obtained by reproducing a recording mark using a light beam decreases as the recording mark is shortened, and becomes almost zero at the limit of the optical resolving power. The inverse of the cycle of the recording mark is called "spatial frequency", and the relationship between the spatial frequency and the signal amplitude is called OTF (Optical Transfer Function). The signal amplitude decreases almost linearly as the spatial frequency increases. The critical frequency for reproduction at which the signal amplitude becomes zero is called "OTF cutoff".

FIG. **27** is a graph showing the relationship between the OTF and the shortest recording mark when the recording capacity is 25 GB. The spatial frequency of the shortest recording mark of the BD is about 80% with respect to the OTF cutoff, which is close to the OTF cutoff. It is also seen that the amplitude of the reproduction signal of the shortest mark is very small at about 10% of the maximum detectable amplitude. For the BD, the recording capacity at which the spatial frequency of the shortest recording mark is very close to the OTF cutoff, i.e., the recording capacity at which the reproduction amplitude of the shortest mark is almost zero, is about 31 GB. When the frequency of the reproduction signal of the shortest mark is around, or exceeds, the OFF cutoff frequency, the resolving power of the laser beam is close to the limit or may exceed the limit. In such an area, the amplitude of the reproduction signal decreases and the S/N ratio is drastically deteriorated.

Therefore, with the recording linear density which is assumed for the high density optical disc shown in FIG. **25(b)**, the frequency of the shortest mark of the reproduction signal is in the vicinity of the OTF cutoff (including a case where the frequency is equal to or lower than the OTF cutoff, but is not significantly lower than the OTF cutoff) or equal to or higher than the OTF cutoff.

FIG. **28** is a graph showing an example the relationship between the signal amplitude and the spatial frequency when the spatial frequency of the shortest mark (2T) is higher than the OTF cutoff frequency and the amplitude of a 2T reproduction signal is 0. In FIG. **28**, the spatial frequency of the shortest mark (2T) is 1.12 times of the OTF cutoff frequency.

(Relationship among the wavelength, numerical aperture and mark length)

The relationship among the wavelength, numerical aperture and length of a mark/space of a higher recording density disc B is as follows.

Where the shortest mark length is TM nm and the shortest space length is TS nm, (shortest mark length + shortest space length) P is represented as (TM + TS) nm. In the case of 17 modulation, P = 2T + 2T = 4T. Where the three parameters, i.e., the laser beam wavelength $\lambda$ (405 nm $\pm$ 5 nm, i.e., 400 to 410 nm), the numerical aperture (NA) (0.85 $\pm$ 0.01, i.e., 0.84 to 0.86), and the length P of the shortest mark + the shortest space (in the case of 17 modulation, P = 2T + 2T = 4T because the shortest length is 2T) are used, when the reference T decreases to fulfill P $\leq$ $\lambda$/2NA, the spatial frequency of the shortest mark exceeds the OTF cutoff frequency.

The reference T corresponding to the OTF cutoff frequency when NA = 0.85 and $\lambda$ = 405 nm is:

T = 405/(2 × 0.85)/4 = 59.558 nm. (When P > $\lambda$/2NA, the spatial frequency of the shortest mark is lower than the OTF cutoff frequency.)

In this manner, merely by increasing the recording linear density, the S/N ratio is deteriorated by the limit of the optical resolution. The deterioration of the S/N ratio caused by increasing the number of information recording layers may be occasionally intolerable from the viewpoint of the system margin. As described above, the deterioration of the S/N ratio is conspicuous especially where the frequency of the shortest mark is higher than the OTF cutoff frequency.

In the above, the frequency of the reproduction signal of the shortest mark and the OTF cutoff frequency are compared in relation with the recording density. When the density improvement is more advanced, a recording density (recording linear density, recording capacity) corresponding to each case can be set by the principle described above based on the relationship between the frequency of the reproduction signal of the second shortest mark (also the third shortest mark (also the second shortest or longer mark) and the OTF cutoff frequency.

(Recording density and the number of layers)

For a BD usable with laser beam having a wavelength of 405 nm and an objective lens having a numerical aperture of 0.85, the following can be considered as a specific recording capacity per layer in the case where the spatial frequency of the shortest mark is in the vicinity of the OTF cutoff: about 29 GB (e.g., 29.0 GB ± 0.5 GB or 29 GB ± 1 GB, etc.) or larger, about 30 GB (e.g., 30.0 GB ± 0.5 GB or 30 GB ± 1 GB, etc.) or larger, about 31 GB (e.g., 31.0 GB ± 0.5 GB or 31 GB ± 1 GB, etc.) or larger, about 32 GB (e.g., 32.0 GB ± 0.5 GB or 32 GB ± 1 GB, etc.) or larger, and the like.

In the case where the spatial frequency of the shortest mark is equal to or higher than the OTF cutoff, the following can be considered as a recording capacity per layer: about 32 GB (e.g., 32.0 GB ± 0.5 GB or 32 GB ± 1 GB, etc.) or larger, about 33 GB (e.g., 33.0 GB ± 0.5 GB or 33 GB ± 1 GB, etc.) or larger, about 33.3 GB (e.g., 33.3 GB ± 0.5 GB or 33.3 GB ± 1 GB, etc.) or larger, about 33.4 GB (e.g., 33.4 GB ± 0.5 GB or 33.4 GB ± 1 GB, etc.) or larger, about 34 GB (e.g., 34.0 GB ± 0.5 GB or 34 GB ± 1 GB, etc.) or larger, about 35 GB (e.g., 35.0 GB ± 0.5 GB or 35 GB ± 1 GB, etc.) or larger, and the like.

Especially where the recording density is about 33.3 GB, a recording capacity of about 100 GB (99.9 GB) is realized with three layers. Where the recording density is about 33.4 GB, a recording capacity of 100 GB or greater (100.2 GB) is realized with three layers. This generally matches the recording capacity of a BD including four layers each having a recording density of 25 GB. For example, where the recording density is 33 GB, 33 × 3 = 99 GB, which is different from 100 GB by 1 GB (equal to or less than 1 GB). Where the recording density is 34 GB, 34 × 3 = 102 GB, which is different from 100 GB by 2 GB (equal to or less than 2 GB). Where the recording density is 33.3 GB, 33.3 × 3 = 99.9 GB, which is different from 100 GB by 0.1 GB (equal to or less than 0.1 GB). Where the recording density is 33.4 GB, 33.4 × 3 = 100.2 GB, which is different from 100 GB by 0.2 GB (equal to or less than 0.2 GB).

As described above, when the recording density is significantly expanded, precise reproduction becomes difficult because of the influence of the reproduction characteristic of the shortest mark. As a recording density which is suppressed from being expanded significantly but realizes a recording capacity of 100 GB or greater, about 33.4 GB is realistically usable.

In this situation, there are the following alternatives for the disc structure: including four layers each having 25 GB, or including three layers each having 33 to 34 GB. When the number of layers increases, the reproduction signal amplitude of each recording layer is decreased (the S/N ratio is deteriorated) or the influence of multi-layer stray light (signal from an adjacent recording layer) is exerted, for example. A disc including three layers each having 33 to 34 GB, as opposed to a disc including four layers each having 25 GB, can realize a recording capacity of about 100 GB while suppressing the influence of the stray light as much as possible, i.e., with a smaller number of layers (with three layers as opposed to four layers). Thus, a disc manufacture wishing to realize about 100 GB while avoiding the increase of the number of the layers as much as possible can choose a disc including three layers each having 33 to 34 GB. By contrast, a disc manufacturer wishing to realize about 100 GB while keeping the conventional format (the recording density of 25 GB) can choose a disc including four layers each having 25 GB. In this manner, manufacturers with different purposes can realize the respective purposes with different structures. This provides a certain degree of freedom in disc designing.

Where the recording density per layer is about 30 to 32 GB, a recording capacity of 120 GB or greater is realized with a four-layer disc although 100 GB is not reached by a three-layer disc (about 90 to 96 GB). Where the recording density is about 32 GB, a four-layer disc realizes a recording capacity of about 128 GB. The numerical value of 128 matches a power of 2 (seventh power of 2) which is convenient to be processed by a computer. As compared to the disc realizing about 100 GB with three layers, the disc realizing about 128 GB with four layers has less influence on the reproduction characteristic of the shortest mark.

Based on this, for expanding the recording density, a plurality of recording densities may be provided (for example, about 32 GB and about 33.4GB) and combined with a plurality of numbers of layers. In this manner, the disc manufacturers can be provided with a certain degree of freedom in designing. For example, a manufacturer wishing to increase the capacity while suppressing the influence of a larger number of layers can choose to produce a three-layer disc of about 100GB in which each of three layers has 33 to 34GB. A manufacture wishing to increase the capacity while suppressing the influence on the reproduction characteristic can choose to produce a four-layer disc of about 120GB in which each of four layers has 30 to 32GB.

An information recording medium according to the present invention includes three or more information recording layers. Each of the plurality of information recording layers includes a test recording area usable for adjusting a recording condition; one of the plurality of information recording layers includes a reproduction-only management data area in which management data usable for managing the information recording medium is pre-recorded; and each of the other two or more information recording layers among the plurality of information recording layers includes a test recording area at a radial position partially overlapping the radial position of the management data area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. One of the plurality of information recording layers includes a reproduction-only management data area in which management data usable for managing the information recording medium is pre-recorded; and each of the other two or more information recording layers among the plurality of information recording layers includes a write-prohibited area, in which writing is prohibited, at a radial position at least partially overlapping the radial position of the reproduction-only management data area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the reproduction-only management data area and recording information on the information recording medium based on the management data.

An information recording medium according to the present invention includes three or more information recording layers Each of the plurality of information recording layers includes a test recording area usable for adjusting a recording condition; one of the plurality of information recording layers includes a recordable management data area in which management data usable for managing the information recording medium is newly writable and a test recording area; and the recordable management data area is located inner and outer to the test recording area.

A reproducing apparatus according to the present invention for reproducing information recorded on the above information recording includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. At least two of the plurality of information recording layers each include a recordable management data area in which management data usable for managing the information recording medium is newly writable; and the recordable management data area of one of the information recording layers and the recordable management data area of at least one other of the plurality of information recording layers are located at radial positions at least partially overlapping each other.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the recordable management data area and recording information on the information recording medium based on the management data.

An information recording medium according to the present invention includes three or more information recording layers. One of the plurality of information recording layers includes a plurality of blocks of recordable management data areas in which management data usable for managing the information recording medium is newly writable.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for reproducing the management data pre-recorded in the recordable management data area and recording information on the information recording medium based on the management data.

An information recording medium according to the present invention includes three or more information recording layers. One of the plurality of information recording layers includes a plurality of recordable management data areas in which management data usable for managing the information recording medium is newly writable; and a test recording area usable for adjusting a recording condition is located between two of the recordable management data areas.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers. One of the plurality of information recording layers includes a test recording area usable for adjusting a recording condition; a first write-prohibited area in which writing is prohibited, the first write-prohibited area being located adjacently inner to the test recording area; a second write-prohibited area in which writing is prohibited, the second write-prohibited area being located adjacently outer to the test recording area; a first area located adjacently inner to the first write-prohibited area; and a second area located adjacently outer to the second write-prohibited area; and information of the same attribute is recorded in the first area and the second area.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the test recording area and recording information on the information recording medium with the adjusted recording condition.

An information recording medium according to the present invention includes three or more information recording layers Each of at least one of the plurality of information recording layers includes first and second test recording areas usable for adjusting a recording condition; first test recording is performed in the first test recording area; after the first test recording, second test recording based on a result of the first test recording is performed in the second test recording area; and the second test recording area has a physical size larger than the physical size of the first test recording area.

Each of at least two of the plurality of information recording layers includes first and second test recording areas; and the test recording using the first test recording is performed sequentially from on the information recording layer farthest from a laser beam incidence face of the information recording medium.

A reproducing apparatus according to the present invention for reproducing information recorded on the above information recording medium includes an irradiation section for irradiating the plurality of information recording layers with a laser beam; a light receiving section for receiving reflected light of the laser beam used for the irradiation; and a reproducing section for reproducing information based on a signal obtained by the light receiving.

A recording apparatus according to the present invention for recording information on the above information recording medium includes an irradiation section for irradiating the plurality of information recording layers with a laser beam; and a recording section for adjusting the recording condition using the first and second test recording areas and recording information on the information recording medium with the adjusted recording condition.

According to an embodiment, a multilayer optical information recording medium according to the present invention includes a plurality of information recording layers. Each of the information recording layers includes an inner zone, a data zone and an outer zone located along a radial direction from an inner periphery thereof; the plurality of information recording layers include a first information recording layer, and second through N'th information recording layers (N is an integer of two or larger) which are provided closer to a laser beam incidence side than the first information recording layer and sequentially located from the side closer to the first recording layer; at least one of the first through N'th information recording layers includes a reproduction-only management data area (control data area) pre-formed at the time of production of the disc; each of the first through N'th information recording layers in at least one of the inner zone and the outer zone includes at least one category of test recording area among at least two categories of test recording areas (OPC-A area and OPC-B area) for performing test recording for data recording and/or reproduction conditions; and in the OPC-B area, an upper limit value is set on a recording power for the test recording.

According to an embodiment, in the OPC-B area, the test recording is performed after the test recording is performed in the OPC-A area of any one of the first through N'th information recording layers.

According to an embodiment, the upper limit value in the OPC-B area is set based on a ratio between an optimal recording power which is found in the OPC-A area of at least one of the first through N'th information recording layers, and a recommended recording power which is pre-recorded in the management data area.

According to an embodiment, the OPC-A areas of M'th (M is an integer of equal to or larger than 1 and equal to or smaller than N) through N'th information recording layers, among the first through N'th information recording layers, are partially or entirely located physically at generally the same radial position in an overlapped manner with one another.

According to an embodiment, M is M = 1 or M = 2.

According to an embodiment, the management data (control data) area is partially or entirely overlapped with the OPC-B area in terms of physical radial position thereof.

According to an embodiment, the test recording area of the first information recording layer has a physical size larger than the physical size of the OPC-A area of each of the second through N'th information recording layers.

According to an embodiment, the OPC-B area has a physical size larger than the physical size of the OPC-A area in the same information recording layer as the OPC-B area.

According to an embodiment, in the management data area, an upper limit value of the recording power for the test recording in the OPC-B area is pre-recorded.

According to an embodiment, in the management data area, an upper limit value of a modulation signal degree with which recording can be performed in the OPC-B area, or a modulation signal degree regarding the recommended recording power is pre-recorded.

According to an embodiment, the multilayer optical information recording medium is a write-once optical disc.

According to an embodiment, the present invention is directed to a recording method for a multilayer optical information recording medium. The multilayer optical information recording medium includes a plurality of information recording layers, in which each of the information recording layers includes an inner zone, a data zone and an outer zone located along a radial direction from an inner periphery thereof; the plurality of information recording layers include a first information recording layer, and second through N'th information recording layers (N is an integer of two or larger) which are provided closer to a laser beam incidence side than the first information recording layer and sequentially located from the side closer to the first recording layer; at least one of the first through N'th information recording layers includes a reproduction-only management data area (control data area) pre-formed at the time of production of the disc, and a recordable or rewritable management data area (DMA); each of the first through N'th information recording layers in at least one of the inner zone and the outer zone includes at least one category of test recording area among at least two categories of test recording areas (OPC-A area and OPC-B area) for performing test recording for data recording and/or reproduction conditions; and in the OPC-B area, an upper limit value is set on a recording power for the test recording. The method includes the steps of reading a recommended power pre-recorded at the time of production of the disc from the control data area; reading OPC area management information from the DMA; determining that a recordable OPC-A area is an i'th (i is an integer of 1 through N) information recording layer based on the OPC area management information; performing test recording in the OPC-A area of the i'th information recording layer and determining an optimal recording power for the i'th information recording layer; calculating a ratio ($\alpha$) between the optimal recording power of the i'th information recording layer and the recommended recording power, calculating a predicted optimal recording power, which is an optimal recording power predicted for an information recording layer other than the i'th information recording layer, and calculating an upper limit value on the recording power for test recording in the OPC-B area in the information recording layer other than the i'th information recording layer based on the predicted optimal recording power; and performing the test recording at a recording power equal to or lower than the upper limit value in the OPC-B area of an arbitrary j'th (j≠i and j is an integer of 1 through N) information recording layer other than the i'th information recording layer, and determining an optimal recording power for the arbitrary j'th information recording layer.

According to an embodiment, in the OPC-B area, the test recording is performed after the test recording is performed in the OPC-A area of any one of the first through N'th information recording layers.

According to an embodiment, the upper limit value in the OPC-B area is set using a ratio ($\alpha$) between an optimal recording power which is found in the OPC-A area of the i'th information recording layer, which is at least one of the first through N'th information recording layers, and a recommended recording power which is pre-recorded in the management data area; and based on a value obtained by expression (1):

$$\texttt{the predicted optimal power for the j'th layer} = \alpha \times \texttt{the}$$

$$\texttt{recommended recording power for the j'th layer} \times \texttt{X} \quad \dots \quad \texttt{(1)}.$$

According to an embodiment, wherein X is 1.1

According to an embodiment, the test recording in the OPC-A areas in the information recording layers is sequentially performed in the order from the OPC-A area of the layer farthest from the laser incidence side to the OPC-A area of the layer closest to the laser incidence side among the recordable OPC-A areas.

According to an embodiment, the test recording in the OPC-B areas in the information recording layers is performed in an arbitrary order among recordable OPC-B areas.

According to an embodiment, the optical information recording medium including the plurality of information recording layers is a write-once optical disc.

According to an embodiment of the present invention, a cording/reproducing apparatus for a multilayer optical information recording medium includes light irradiation means for irradiating, with laser beam, each information recording layer of the multilayer optical information recording medium including a plurality of information recording layers to record data to, and reproduce data from, the information recording layer; management information reading means for reading a recommended recording power pre-recorded in a reproduction-only disc management area of the multilayer information recording medium at the time of production thereof, and recordable or rewritable OPC area management information; recording power control means for controlling a laser power of the laser beam irradiating each information recording layer of the multilayer optical information recording medium to perform test recording at a plurality of recording powers; reproduction signal detection means for detecting a signal quality of a reproduction signal obtained from light reflected by the multilayer optical information recording medium; and calculation means for calculating an optimal recording power, which is an optimal value of the recording power, from a value detected by the reproduction signal detection means, calculating a ratio ($\alpha$) between the optimal recording power and the recommended recording power, and calculating a predicted optimal recording power, which is an optimal recording power predicted for an arbitrary information recording layer.

According to an embodiment, the recording/reproducing apparatus includes memory means for storing any one of, or all of, the optimal recording power for each information recording layer determined by the test recording, the ratio ($\alpha$), and the predicted optimal recording power.

According to an embodiment, a multilayer optical information recording medium according to the present invention includes a plurality of information recording layers. The multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; each of the information recording layers includes, in at least one of the inner zone and the outer zone, at least one category of test recording area among at least two categories of test recording areas (first test recording area and second test recording area) usable for performing test recording in order to obtain a data recording and/or reproduction condition; and in the second test recording area, test recording is performed after test recording is performed in the first test recording area.

According to an embodiment, in at least two information recording layers among the first through N'th information recording layers, the first test recording areas are partially located physically at generally the same radial position as each other in an overlapped manner.

According to an embodiment, the first test recording areas are sequentially used for test recording from the first test recording area of the information recording layer farthest from the laser beam incidence side.

According to an embodiment, the test recording area of the first information recording layer has a physical size larger than the physical size of the first test recording area of each of the second through N'th information recording layers.

According to an embodiment, at least one of the first through N'th information recording layers includes both the first test recording area and the second test recording area; and the second test recording area has a physical size larger than the physical size of the first test recording area.

According to an embodiment, the multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; each of the information recording layers includes, in at least one of the inner zone and the outer zone, a test recording area usable for performing test recording in order to obtain a data recording and/or reproduction condition; and in at least one of the test recording areas, an upper limit value on a recording power for test recording is set.

According to an embodiment, at least one of the first through N'th information recording layers includes a read-only management data area pre-formed at the time of production of the disc; and the upper limit value on the recording power for test recording is set based on a ratio between an optimal recording power which is found by test recording performed on at least one of the first through N'th information recording layers, and a recommended recording power which is pre-recorded in the management data area.

According to an embodiment, at least one of the first through N'th information recording layers includes a read-only management data area pre-formed at the time of production of the disc; and the test recording area of at least one of the first through N'th information recording layers is at least partially located physically at generally the same radial position as the management data area in an overlapped manner.

According to an embodiment, at least one of the first through N'th information recording layers includes a read-only management data area pre-formed at the time of production of the disc; and in the management data area, the upper limit value on the recording power for performing test recording in the test recording area is pre-recorded.

According to an embodiment, at least one of the first through N'th information recording layers includes a read-only management data area pre-formed at the time of production of the disc; and in the management data area, the upper limit value on a modulation signal degree at which test recording is allowed to be performed in the test recording area or a modulation signal degree of a recommended recording power is pre-recorded.

According to an embodiment, in at least two information recording layers among the first through N'th information recording layers, the test recording areas are partially located physically at generally the same radial position as each other in an overlapped manner.

According to an embodiment, the multilayer optical information recording medium is a write-once optical disc.

According to an embodiment directed to a recording method for a multilayer optical information recording medium including a plurality of information recording layers, the multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; and each of the information recording layers includes, in at least one of the inner zone and the outer zone, at least one category of test recording area among at least two categories of test recording areas (first test recording area and second test recording area) usable for performing test recording in order to obtain a data recording and/or reproduction condition. The recording method includes the steps of performing test recording in the first test recording area of an i'th (i is an integer of 1 through N) information recording layer and determining a recording power for the i'th information recording layer; and performing test recording in the second test recording area df the i'th information recording layer and determining a recording pulse condition for the i'th information recording layer.

According to an embodiment directed to a recording method for a multilayer optical information recording medium including a plurality of information recording layers, the multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; and each of the information recording layers includes, in at least one of the inner zone and the outer zone, at least one category of test recording area among at least two categories of test recording areas (first test recording area and second test recording area) usable for performing test recording in order to obtain a data recording and/or reproduction condition. The recording method includes the steps of performing test recording in the first test recording area of an i'th (i is an integer of 1 through N) information recording layer and determining a recording power for the i'th information recording layer; and performing test recording in the second test recording area of a j'th ($j \neq i$; and j is an integer of 1 through N) information recording layer, which is any one information recording layer other than the i'th information recording layer, and determining a recording power for the j'th information recording layer.

According to an embodiment, at least one of the first through N'th information recording layers further includes a read-only management data area (control data area) pre-formed at the time of production of the disc and a write-once or rewritable management data area (DMA). The recording method includes the steps of reading a recommended power pre-recorded at the time of production of the disc from the control data area; reading test recording area management information from the DMA; determining that a recordable first test recording area is in the i'th (i is an integer of 1 through N) information recording layer based on the test recording area management information; performing test recording in the first test recording area of the i'th information recording layer and determining an optimal recording power for the i'th information recording layer; calculating a ratio (α) between the optimal recording power and the recommended recording power for the i'th information recording layer, calculating a predicted optimal recording power, which is an optimal recording power predicted for an information recording layer other than the i'th information recording layer, and calculating an upper limit value on the recording power for test recording performed in the second test recording area of the information recording layer other than the i'th information recording layer based on the predicted optimal recording power; and performing test recording at a recording power equal to or lower than the upper limit value in the second test recording area of a j'th (j≠i and j is an integer of 1 through N) information recording layer, which is any one information recording layer other than the i'th information recording layer, and determining an optimal recording power for the j'th information recording layer.

According to an embodiment, in the second test recording area, test recording is performed after test recording is performed in the first test recording area of any one of the first through N'th information recording layers.

According to an embodiment, the upper limit value for the second test recording area is set using a ratio (α) between an optimal recording power which is found in the first test recording area of the i'th information recording layer, which is at least one of the first through N'th information recording layers, and the recommended recording power which is pre-recorded in the management data area; and based on a value obtained by expression (1):

$$\texttt{the predicted optimal power for the j'th layer} = \alpha \times \texttt{the}$$

$$\texttt{recommended recording power for the j'th layer} \times X \quad ... \quad (1).$$

According to an embodiment, X is 1.1

According to an embodiment, the test recording in the first test recording areas of the information recording layers is sequentially performed in the order from the first test recording area of the layer farthest from the laser beam incidence side to the first test recording area of the layer closest to the laser beam incidence side among the recordable first test recording areas.

According to an embodiment, the test recording in the second test recording areas of the information recording layers is allowed to be performed in an arbitrary order among recordable second test recording areas.

According to an embodiment, the optical information recording medium including the plurality of information recording layers is a write-once optical disc.

According to an embodiment directed to a reproducing method for a multilayer optical information recording medium including a plurality of information recording layers, the multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; and each of the information recording layers includes, in at least one of the inner zone and the outer zone, at least one category of test recording area among at least two categories of test recording areas (first test recording area and second test recording area) usable for performing test recording in order to obtain a data recording and/or reproduction condition and a write-once or rewritable management data area (DMA). The reproducing method includes the steps of performing test recording in a first test recording area of an i'th (i is an integer of 1 through N) information recording layer and determining a recording power for the i'th information recording layer; performing test recording in a second test recording area of the i'th information recording layer and determining a recording pulse condition for the i'th information recording layer; performing writing in the first test recording area, the second test recording area or the management data area (DMA) of the i'th information recording layer; performing reproduction from a recording track, on which the writing has been performed, under a plurality of servo conditions to check a quality of the reproduction signal; and adjusting the servo conditions based on the quality of the reproduction signal.

According to an embodiment directed to a reproducing method for a multilayer optical information recording medium including a plurality of information recording layers, the multilayer optical information recording medium includes a first information recording layer, and second through N'th information recording layers (N is an integer of two or larger) which are provided closer to a laser beam incidence side than the first information recording layer and sequentially located from the side closer to the first recording layer; each of the information recording layers includes an inner zone, a data zone and an outer zone sequentially located along a radial direction from an inner periphery thereof; and each of the information recording layers includes, in at least one of the inner zone and the outer zone, at least one category of test recording area among at least two categories of test recording areas (first test recording area and second test recording area) usable for performing test recording in order to obtain a data recording and/or reproduction condition and a write-once or rewritable management data area (DMA). The reproducing method includes the steps of performing test recording in a first test recording area of an i'th (i is an integer of 1 through N) information recording layer and determining a recording power for the i'th information recording layer; performing test recording in the second test recording area of a j'th (j≠i and j is an integer of 1 through N) information recording layer, which is any one information recording layer other than the i'th information recording layer, and determining an optimal recording power for the j'th information recording layer; performing test recording in the second test recording area of the j'th information recording layer and determining an optimal recording pulse condition for the j'th information recording layer; performing writing in the first test recording area, the second test recording area or the management data area (DMA) of the i'th information recording layer or the j'th information recording layer; performing reproduction from a recording track, on which the writing has been performed, under a plurality of servo conditions to check a quality of the reproduction signal; and adjusting the servo conditions based on the quality of the reproduction signal.

According to an embodiment, a recording/reproducing apparatus for a multilayer optical information recording medium includes light irradiation means for irradiating, with a laser beam, each information recording layer of the multilayer optical information recording medium including a plurality of information recording layers and collecting the laser beam to record data to, and reproduce data from, the information recording layer; management information reading means for reading a recommended recording power pre-recorded in a reproduction-only disc management area of the multilayer information recording medium at the time of production thereof, and write-once or rewritable test recording area management information; recording power control means for controlling a laser power of the laser beam irradiating each information recording layer of the multilayer optical information recording medium to perform test recording at a plurality of recording powers; reproduction signal detection means for detecting a signal quality of a reproduction signal obtained from light reflected by the multilayer optical information recording medium; and calculation means for calculating an optimal recording power, which is an optimal value of the recording power, from a value detected by the reproduction signal detection means, calculating a ratio ($\alpha$) between the optimal recording power and the recommended recording power, and calculating a predicted optimal recording power, which is an optimal recording power predicted for an arbitrary information recording layer.

According to an embodiment, the recording/reproducing apparatus includes memory means for storing any one of, or all of, the optimal recording power, the ratio ($\alpha$), and the predicted optimal recording power for each information recording layer found by test recording.

## INDUSTRIAL APPLICABILITY

The optical recording/reproducing method and the optical recording/reproducing apparatus for an optical disc according to the present invention provide an effect of realizing high density recording on an optical recording medium, and are usable for, for example, the electric/electronics appliance industry including digital home appliances and information processing apparatuses.

## REFERENCE SIGNS LIST

| 101 | multilayer optical disc medium |
| 102 | diffraction element |
| 103 | collimator lenses |
| 105 | objective lens |
| 106 | laser beam source |
| 107 | actuator |
| 108 | spherical aberration compensation section |
| 109 | photo detectors |
| 111 | optical pickup |
| 112 | servo control section |
| 113 | RF signal calculation section |
| 114 | laser driving circuit |
| 115 | laser power control circuit |
| 116 | recording power control section |
| 117 | reproduction signal detection section |
| 118 | management information reading section |
| 119 | calculation section |
| 120 | memory |
| 121 | system control section |

**122** spindle motor

**Claims**

1. An information recording medium including three or more information recording layers, wherein:

    each of the plurality of information recording layers includes a test recording area usable for adjusting a recording condition;
    one of the plurality of information recording layers includes a reproduction-only management data area in which management data usable for managing the information recording medium is pre-recorded; and
    each of the other two or more information recording layers among the plurality of information recording layers includes a test recording area at a radial position partially overlapping the radial position of the management data area.

2. A reproducing apparatus for reproducing information recorded on the information recording medium of claim 1, the reproducing apparatus comprising:

    an irradiation section for irradiating the plurality of information recording layers with a laser beam;
    a light receiving section for receiving reflected light of the laser beam used for the irradiation; and
    a reproducing section for reproducing information based on a signal obtained by the light receiving.

3. A recording apparatus for recording information on the information recording medium of claim 1, the recording apparatus comprising:

    an irradiation section for irradiating the plurality of information recording layers with a laser beam; and
    a recording section for adjusting the recording condition using the test recording area and recording information on the information recording medium with the adjusted recording condition.

4. An information recording medium including three or more information recording layers, wherein:

    one of the plurality of information recording layers includes a reproduction-only management data area in which management data usable for managing the information recording medium is pre-recorded; and
    each of the other two or more information recording layers among the plurality of information recording layers includes a write-prohibited area, in which writing is prohibited, at a radial position at least partially overlapping the radial position of the reproduction-only management data area.

5. A reproducing apparatus for reproducing information recorded on the information recording medium of claim 4, the reproducing apparatus comprising:

    an irradiation section for irradiating the plurality of information recording layers with a laser beam;
    a light receiving section for receiving reflected light of the laser beam used for the irradiation; and
    a reproducing section for reproducing information based on a signal obtained by the light receiving.

6. A recording apparatus for recording information on the information recording medium of claim 4, the recording apparatus comprising:

    an irradiation section for irradiating the plurality of information recording layers with a laser beam; and
    a recording section for reproducing the management data pre-recorded in the reproduction-only management data area and recording information on the information recording medium based on the management data.

7. An information recording medium including three or more information recording layers, wherein:

    each of the plurality of information recording layers includes a test recording area usable for adjusting a recording condition;
    one of the plurality of information recording layers includes a recordable management data area in which management data usable for managing the information recording medium is newly writable and a test recording area; and

the recordable management data areas are located inner and outer to the test recording area.

8. A reproducing apparatus for reproducing information recorded on the information recording medium of claim 7, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

9. A recording apparatus for recording information on the information recording medium of claim 7, the recording apparatus comprising:

an irradiation section for irradiating the plurality of information recording layers with a laser beam; and
a recording section for adjusting the recording condition using the test recording area and recording information on the information recording medium with the adjusted recording condition.

10. An information recording medium including three or more information recording layers, wherein:

at least two of the plurality of information recording layers each include a recordable management data area in which management data usable for managing the information recording medium is newly writable; and
the recordable management data area of one of the information recording layers and the recordable management data area of at least one other of the plurality of information recording layers are located at radial positions at least partially overlapping each other.

11. A reproducing apparatus for reproducing information recorded on the information recording medium of claim 10, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

12. A recording apparatus for recording information on the information recording medium of claim 10, the recording apparatus comprising:

an irradiation section for irradiating the plurality of information recording layers with a laser beam; and
a recording section for reproducing the management data pre-recorded in the recordable management data area and recording information on the information recording medium based on the management data.

13. An information recording medium including three or more information recording layers, wherein:

one of the plurality of information recording layers includes a plurality of blocks of recordable management data areas in which management data usable for managing the information recording medium is newly writable.

14. A reproducing apparatus for reproducing information recorded on the information recording medium of claim 13, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

15. A recording apparatus for recording information on the information recording medium of claim 13, the recording apparatus comprising:

an irradiation section for irradiating the plurality of information recording layers with a laser beam; and
a recording section for reproducing the management data pre-recorded in the recordable management data area and recording information on the information recording medium based on the management data.

16. An information recording medium including three or more information recording layers, wherein:

one of the plurality of information recording layers includes a plurality of recordable management data areas in which management data usable for managing the information recording medium is newly writable; and
a test recording area usable for adjusting a recording condition is located between two of the recordable management data areas.

**17.** A reproducing apparatus for reproducing information recorded on the information recording medium of claim 16, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

**18.** A recording apparatus for recording information on the information recording medium of claim 16, the recording apparatus comprising:

an irradiation section for irradiating the plurality of information recording layers with a laser beam; and
a recording section for adjusting the recording condition using the test recording area and recording information on the information recording medium with the adjusted recording condition.

**19.** An information recording medium including three or more information recording layers, wherein:

one of the plurality of information recording layers includes:
a test recording area usable for adjusting a recording condition,
a first write-prohibited area in which writing is prohibited, the first write-prohibited area being located adjacently inner to the test recording area,
a second write-prohibited area in which writing is prohibited, the second write-prohibited area being located adjacently outer to the test recording area,
a first area located adjacently inner to the first write-prohibited area, and
a second area located adjacently outer to the second write-prohibited area; and
information of the same attribute is recorded in the first area and the second area.

**20.** A reproducing apparatus for reproducing information recorded on the information recording medium of claim 19, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

**21.** A recording apparatus for recording information on the information recording medium of claim 19, the recording apparatus comprising:

an irradiation section for irradiating the plurality of information recording layers with a laser beam; and
a recording section for adjusting the recording condition using the test recording area and recording information on the information recording medium with the adjusted recording condition.

**22.** An information recording medium including three or more information recording layers, wherein:

each of at least one of the plurality of information recording layers includes first and second test recording areas usable for adjusting a recording condition;
first test recording is performed in the first test recording area;
after the first test recording, second test recording based on a result of the first test recording is performed in the second test recording area; and
the second test recording area has a physical size larger than the physical size of the first test recording area.

**23.** The information recording medium of claim 22, wherein:

each of at least two of the plurality of information recording layers includes the first and second test recording areas; and

the test recording using the first test recording is performed sequentially from on the information recording layer farthest from a laser beam incidence face of the information recording medium.

24. A reproducing apparatus for reproducing information recorded on the information recording medium of claim 22, the reproducing apparatus comprising:

an irradiation section for irradiating the plurality of information recording layers with a laser beam;
a light receiving section for receiving reflected light of the laser beam used for the irradiation; and
a reproducing section for reproducing information based on a signal obtained by the light receiving.

25. A recording apparatus for recording information on the information recording medium of claim 22, the recording apparatus comprising:

an irradiation section for irradiating the plurality of information recording layers with a laser beam; and
a recording section for adjusting the recording condition using the first and second test recording areas and recording information on the information recording medium with the adjusted recording condition.

## FIG.1

EP 2 341 500 A1

*FIG.2*

Inner Zone | Data Zone

BCA | Pre-recorded area | Recordable area

Layer0
Straight groove | HFM groove | Wobbled groove | Tracking Direction

Layer1 | Tracking Direction

Layer2 | Tracking Direction

Layer3 | Tracking Direction

Connection area | Connection area

EP 2 341 500 A1

FIG.3

101

|  | INNER ZONE | | | | | DATA ZONE | | OUTER ZONE | |
|---|---|---|---|---|---|---|---|---|---|

ZEROTH LAYER (L0)

| BCA | PIC | OPC0b | DMA | OPC0a | DATA Area | | OPC0c | |
|---|---|---|---|---|---|---|---|---|
|  |  |  |  |  | RECORDING DIRECTION | | | |
|  | Buffer |  |  |  | TEST RECORDING START POINT | | | |

FIRST LAYER (L1)

| Buffer | OPC1b | DMA | OPC1a | DATA Area | | OPC1c |
|---|---|---|---|---|---|---|
|  |  |  |  | RECORDING DIRECTION | | |

SECOND LAYER (L2)

| Buffer | OPC2b | DMA | OPC2a | DATA Area | | OPC2c |
|---|---|---|---|---|---|---|
|  |  |  |  | RECORDING DIRECTION | | |

THIRD LAYER (L3)

| Buffer | OPC3b | DMA | OPC3a | DATA Area | | OPC3c |
|---|---|---|---|---|---|---|
|  |  |  |  | RECORDING DIRECTION | | |

EP 2 341 500 A1

EP 2 341 500 A1

# FIG.4

101

| | INNER ZONE | | | | DATA ZONE | | | OUTER ZONE | |
|---|---|---|---|---|---|---|---|---|---|

| | | INNER ZONE | | | | DATA ZONE | | OUTER ZONE |
|---|---|---|---|---|---|---|---|---|
| ZEROTH LAYER (L 0) | BCA | PIC | OPC0b | DMA | OPC0a | DATA Area | | OPC0c |

TEST RECORDING START POINT

| FIRST LAYER (L 1) | | OPC1b | | DMA | OPC1a | DATA Area | | OPC1c |
|---|---|---|---|---|---|---|---|---|
| SECOND LAYER (L 2) | | OPC2b | | DMA | OPC2a | DATA Area | | OPC2c |
| THIRD LAYER (L 3) | | OPC3b | | DMA | OPC3a | DATA Area | | OPC3c |

## FIG.5

| | INNER ZONE | | | | DATA ZONE | | OUTER ZONE | |
|---|---|---|---|---|---|---|---|---|
| ZEROTH LAYER (L0) | BCA | PIC | OPC0a | DMA/INFO | DATA Area | | | OPC0c |
| | | | | TEST RECORDING START POINT | | | | |
| FIRST LAYER (L1) | | OPC1b | OPC1a | | DATA Area | | | OPC1c |
| SECOND LAYER (L2) | | OPC2b | OPC2a | | DATA Area | | | OPC2c |
| THIRD LAYER (L3) | | OPC3b | OPC3a | | DATA Area | | | OPC3c |

101

EP 2 341 500 A1

## FIG.6

| | INNER ZONE | | | | DATA ZONE | | OUTER ZONE | |
|---|---|---|---|---|---|---|---|---|
| ZEROTH LAYER (L 0) | BCA | PIC | OPC0a | | DMA | DATA Area | | OPC0c |

TEST RECORDING START POINT

| | | | | | | | | |
|---|---|---|---|---|---|---|---|---|
| FIRST LAYER (L 1) | | OPC1b | DMA | | | DATA Area | | OPC1c |
| SECOND LAYER (L 2) | | OPC2b | DMA | | | DATA Area | | OPC2c |
| THIRD LAYER (L 3) | | OPC3b | DMA | | | DATA Area | | OPC3c |

EP 2 341 500 A1

## FIG.7

| | INNER ZONE | | | | | DATA ZONE | | OUTER ZONE | |
|---|---|---|---|---|---|---|---|---|---|
| ZEROTH LAYER (L0) | BCA | PIC | OPC0a | DMA | Buffer | DATA Area | | OPC0c | |
| | | | | TEST RECORDING START POINT | | | | | |
| FIRST LAYER (L1) | | OPC1b | DMA | OPC1a | | DATA Area | | OPC1c | |
| | | | TEST RECORDING START POINT | | | | | | |
| SECOND LAYER (L2) | | OPC2b | DMA | OPC2a | | DATA Area | | OPC2c | |
| THIRD LAYER (L3) | | OPC3b | DMA | OPC3a | | DATA Area | | OPC3c | |

101

EP 2 341 500 A1

*FIG. 8*

```
┌──────────────────────────────────────┐
│        START OF TEST RECORDING        │
└──────────────────────────────────────┘
```

**STEP 1**

DISC MANAGEMENT INFORMATION (RECOMMENDED POWER, ETC.) RECORDED IN THE PIC AREA AND OPC AREA MANAGEMENT INFORMATION (NEXT AVAILABLE PSN) RECORDED IN THE DMA ARE READ.

IS IT DETERMINED THAT THE OPC-A AREA OF THE i'TH LAYER IS RECORDABLE? — NO → TEST RECORDING IS CANCELLED.

YES

**STEP 2**

TEST RECORDING IS PERFORMED IN THE OPC-A AREA OF THE i'TH LAYER./ Pwo IS CALCULATED.

IS Pwo OK AS THE OPTIMAL POWER? — NO

YES

THE OPTIMAL POWER FOR THE i'TH LAYER IS DETERMINED.

TEST RECORDING IS PERFORMED IN THE OPC-B AREA OF THE i'TH LAYER. / THE OPTIMAL RECORDING PULSE CONDITIONS FOR THE i'TH LAYER ARE DETERMINED.

**STEP 3**

THE OPTIMAL POWER/RECOMMENDED POWER RATIO ($\alpha$) FOR THE i'TH LAYER IS CALCULATED.

THE PREDICTED OPTIMAL POWER AND THE UPPER LIMIT RECORDING POWER FOR A LAYER OTHER THAN THE i'TH LAYER ARE CALCULATED.

**STEP 4**

TEST RECORDING IS PERFORMED IN THE OPC-B AREA OF THE j'TH LAYER AT A POWER EQUAL TO OR LOWER THAN THE PREDICTED OPTIMAL POWER FOR THE j'TH LAYER (j≠i). / THE OPTIMAL POWER AND THE OPTIMAL RECORDING PULSE CONDITIONS FOR THE j'TH LAYER ARE DETERMINED.

**STEP 5**

IS TEST RECORDING COMPLETED? — NO → j IS UPDATED.

YES

NEXT AVAILABLE PSN IN THE DMA IS UPDATED.

COMPLETION OF TEST RECORDING

*FIG.9*

101

ROTATION
DIRECTION

901 L0

902 L1

903 L2

904 L3

905 SUBSTRATE

906

907

908

909

LASER INCIDENCE
DIRECTION

*FIG.10*

101

INNER ZONE 1004

PIC AREA 1003

OPC/DMA AREA 1002

DATA ZONE 1001

OUTER ZONE 1005

*FIG. 11*

START OF TEST RECORDING

**STEP 1**

DISC MANAGEMENT INFORMATION (RECOMMENDED POWER, ETC.) RECORDED IN THE PIC AREA AND OPC AREA MANAGEMENT INFORMATION (NEXT AVAILABLE PSN) RECORDED IN THE DMA ARE READ.

IS IT DETERMINED THAT THE OPC-A AREAS OF THE ZEROTH AND i'TH LAYERS ARE RECORDABLE? —NO→ TEST RECORDING IS CANCELED.

YES

**STEP 2**

TEST RECORDING IS PERFORMED IN THE OPC-A AREA OF THE 0'TH LAYER. / THE OPTIMAL POWER AND THE OPTIMAL RECORDING PULSE CONDITIONS FOR THE 0'TH LAYER ARE DETERMINED.

**STEP 3**

TEST RECORDING IS PERFORMED IN THE OPC-A AREA OF THE i'TH LAYER (i≠0). / Pwo OF THE i'TH LAYER IS CALCULATED.

IS Pwo OK AS THE OPTIMAL POWER? —NO

YES

TEST RECORDING IS PERFORMED IN THE OPC-B AREA OF THE i'TH LAYER. / THE OPTIMAL RECORDING PULSE CONDITIONS FOR THE i'TH LAYER ARE DETERMINED.

**STEP 4**

THE OPTIMAL POWER/RECOMMENDED POWER RATIO (α) FOR THE i'TH LAYER IS CALCULATED.

THE PREDICTED OPTIMAL POWER AND THE UPPER LIMIT RECORDING POWER FOR A LAYER OTHER THAN THE 0'TH AND i'TH LAYERS ARE CALCULATED.

**STEP 5**

TEST RECORDING IS PERFORMED IN THE OPC-B AREA OF THE j'TH LAYER AT A POWER EQUAL TO OR LOWER THAN THE PREDICTED OPTIMAL POWER FOR THE j'TH LAYER (k ≠0 OR i). / THE OPTIMAL POWER AND THE OPTIMAL RECORDING PULSE CONDITIONS FOR THE j'TH LAYER ARE DETERMINED.

**STEP 6**

IS TEST RECORDING COMPLETED? —NO→ j IS UPDATED.

YES

NEXT AVAILABLE PSN IN THE DMA IS UPDATED.

COMPLETION OF TEST RECORDING

*FIG.12*

VOLTAGE V     8T SPACE

$I_{8H}$

$I_{3H}$

$I_{3L}$

$I_{8L}$

8T MARK

0       TIME t

*FIG.13*

LOGICAL PRODUCT OF MODULATION
DEGREE AND RECORDING POWER
MOD × Pw

1301 TANGENTIAL LINE

Pth      Pind      Pwo      Pw

## FIG.14

| LO | N | N-1 | N-2 | <<<< | 3 | 2 | 1 |
|---|---|---|---|---|---|---|---|

ORDER OF ADDRESSES
RECORDING ORDER OF OPC CLUSTERS

| L1 | 1 | 2 | 3 | >>>> | N-2 | N-1 | N |
|---|---|---|---|---|---|---|---|

ORDER OF ADDRESSES
RECORDING ORDER OF OPC CLUSTERS

| L2 | N | N-1 | N-2 | <<<< | 2 | 1 | 0 |
|---|---|---|---|---|---|---|---|

ORDER OF ADDRESSES
RECORDING ORDER OF OPC CLUSTERS

RECORDING ORDER OF OPC CLUSTERS

1401

| L3 | 1 | 2 | 3 | >>>> | N-2 | N-1 | N |
|---|---|---|---|---|---|---|---|

ORDER OF ADDRESSES
RECORDING ORDER OF OPC CLUSTERS

RECORDING ORDER OF OPC CLUSTERS

1402  1403  1404

FIG.15

*FIG.16*

```
                              ┌─────────────┐
                              │    START    │
                              └─────────────┘
                                     │
STEP1  {          ┌──────────────────────────────────────┐
                  │    FIRST SERVO CONDITION IS ADJUSTED. │
                  └──────────────────────────────────────┘
                                     │
STEP2  {   ┌──────────────────────────────────────────────┐
           │ OPC AREA MANAGEMENT INFORMATION (NEXT        │
           │ AVAILABLE PSN) RECORDED IN THE DMA IS READ.  │
           └──────────────────────────────────────────────┘
                                     │
                              ◇ BLANK DISC? ◇ ──── No ───────────────┐
                                   │ Yes                             │
STEP3  {   ┌──────────────────────────────────────────┐             │
           │ TEST RECORDING IS PERFORMED IN THE OPC AREA. │          │
           └──────────────────────────────────────────┘             │
           ┌──────────────────────────────────────────┐             │
           │ PROVISIONAL RECORDING POWER AND PROVISIONAL │           │
           │ RECORDING PULSE CONDITION ARE DETERMINED.   │           │
           └──────────────────────────────────────────┘             │
           ┌──────────────────────────────────────────┐             │
           │ TEST RECORDING TRACK (A) IS FORMED IN THE OPC AREA. │   │
           └──────────────────────────────────────────┘             │
                                     │                               │
```

STEP5 { THIRD SERVO CONDITION IS ADJUSTED. REPRODUCTION FROM THE TRACK (C) IN THE DMA IS PERFORMED.

SIGNAL QUALITY IS CHECKED; HAS THE SERVO CO NDITION ADJUSTMENT BEEN COMPLETED? — No / Yes

END

STEP4 { SECOND SERVO CONDITION IS ADJUSTED. REPRODUCTION FROM THE TEST RECORDING TRACK (A) IN THE OPC AREA IS PERFORMED.

SIGNAL QUALITY IS CHECKED; HAS THE SERVO CONDITION ADJUSTMENT BEEN COMPLETED? — No / Yes

END

# FIG.17

EP 2 341 500 A1

101

|  | INNER ZONE | | | | | | DATA ZONE | | OUTER ZONE |
|---|---|---|---|---|---|---|---|---|---|

**ZEROTH LAYER (L0)**

| BCA | PIC | OPC 0a | DMA | OPC 0a | DMA | DATA Area | | OPC0c |
|---|---|---|---|---|---|---|---|---|

RECORDING DIRECTION →

Buffer

Buffer

TEST RECORDING START POINT

**FIRST LAYER (L1)**

| OPC 1a | Buffer | OPC 1b | DMA | DATA Area | | OPC1c |
|---|---|---|---|---|---|---|

← RECORDING DIRECTION

TEST RECORDING START POINT

**SECOND LAYER (L2)**

| OPC 2a | Buffer | OPC 2b | DMA | DATA Area | | OPC2c |
|---|---|---|---|---|---|---|

RECORDING DIRECTION →

Buffer

**THIRD LAYER (L3)**

| OPC 3a | Buffer | OPC 3b | DMA | DATA Area | | OPC3c |
|---|---|---|---|---|---|---|

← RECORDING DIRECTION

*FIG.18*

(a)

1021

1011

| L0 | BCA | PIC | INFO | OPC0 | TDMA0 | INFO | Data Zone | ... |
|---|---|---|---|---|---|---|---|---|

| L1 | | OPC1 | | INFO | TDMA1 | Reserve | INFO | Data Zone | ... |
|---|---|---|---|---|---|---|---|---|---|

1031

1012

(b)

| L0 | BCA | PIC | INFO | OPC0 | Reserve | INFO | Data Zone | ... |
|---|---|---|---|---|---|---|---|---|

| L1 | | PIC | INFO | Reserve | OPC1 | INFO | Data Zone | ... |
|---|---|---|---|---|---|---|---|

*FIG.19*

500

503

L0
L1
L2
...
Ln

502

501

505

*FIG.20*

500

L0

502

5011

505

*FIG.21*

*FIG.22*

*FIG.23*

*FIG.24*

*FIG.25*

(a)

123A

WAVELENGTH 405nm

220A

NA 0.85 (=sin θ)

θ

2

149nm
(SHORTEST
RECORDING MARK 2T)

120A

121A

(b)

123A

WAVELENGTH 405nm

220A

NA 0.85 (=sin θ)

θ

2

111.75nm
(SHORTEST
RECORDING MARK 2T)

124A

125A

*FIG.26*

2          121A          30

*FIG.27*

OTF

1.0

0.5

OTF CUTOFF

0.1

0.8    1
(2T)

SPATIAL FREQUENCY

*FIG.28*

SIGNAL
AMPLITUDE

1

OTF CUTOFF

O

0. 75    1  1.12    SPATIAL FREQUENCY
(3T)       (2T)

| | INTERNATIONAL SEARCH REPORT | International application No. |
|---|---|---|
| | | PCT/JP2009/005457 |

A.  CLASSIFICATION OF SUBJECT MATTER
*G11B7/007*(2006.01)i, *G11B7/004*(2006.01)i, *G11B7/0045*(2006.01)i, *G11B7/125* (2006.01)i

According to International Patent Classification (IPC) or to both national classification and IPC

B.  FIELDS SEARCHED

Minimum documentation searched (classification system followed by classification symbols)
G11B7/00-7/013, G11B7/12-7/22, G11B7/24, G11B7/28-7/30, G11B20/12, G11B20/18, G11B27/00

Documentation searched other than minimum documentation to the extent that such documents are included in the fields searched

| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2005-38584 A  (Matsushita Electric Industrial Co., Ltd.),<br>10 February 2005 (10.02.2005),<br>paragraphs [0030], [0031], [0061] to [0071];<br>fig. 3, 6 to 8<br>& JP 2009-87531 A        & US 2004/0264339 A1<br>& EP 1492098 A2          & CA 2472075 A<br>& KR 10-2005-0001458 A   & CN 1577552 A<br>& CA 2472075 A1 | 1-6<br>19-21 |

☒  Further documents are listed in the continuation of Box C.    ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 December, 2009 (16.12.09) | Date of mailing of the international search report<br>    28 December, 2009 (28.12.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/005457

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2006-527457 A (Samsung Electronics Co.,<br>Ltd.),<br>30 November 2006 (30.11.2006),<br>paragraphs [0046] to [0048]; fig. 5A<br>& US 2005/0013222 A1 & EP 1631956 A<br>& EP 1914737 A1 & WO 2004/112007 A1<br>& KR 10-2004-0107345 A & CA 2513449 A<br>& BRA PI0407244 & CN 1757062 A<br>& TW 273581 B & RU 2327231 C<br>& SG 152943 A | 10-12<br>7-9,13-18 |
| Y | WO 2007/099835 A1 (Panasonic Corp.),<br>07 September 2007 (07.09.2007),<br>paragraphs [0089] to [0117]; fig. 10 to 14<br>& US 2009/0016188 A1 & CN 101395665 A | 7-9,13-18 |
| Y | JP 2004-206849 A (Matsushita Electric<br>Industrial Co., Ltd.),<br>22 July 2004 (22.07.2004),<br>paragraphs [0122] to [0130]; fig. 9<br>& US 2003/0137915 A1 & EP 1468417 A<br>& EP 1950748 A2 & WO 2003/063144 A2<br>& DE 60321539 D & CN 1639778 A<br>& KR 10-2008-0016970 A & ES 2307892 T | 7-9,13-21 |
| Y | JP 2007-58989 A (Pioneer Corp.),<br>08 March 2007 (08.03.2007),<br>paragraphs [0090] to [0108]; fig. 2<br>(Family: none) | 7-9,13-18 |
| X | WO 2007/004821 A1 (LG ELECTRONICS INC.),<br>11 January 2007 (11.01.2007),<br>entire text; fig. 4 to 7<br>& JP 2009-514127 A & US 2007/0002483 A1<br>& EP 1897086 A & KR 10-2007-0003511 A<br>& CN 101213594 A | 10-12 |
| X<br>Y | JP 2008-41224 A (Taiyo Yuden Co., Ltd.),<br>21 February 2008 (21.02.2008),<br>paragraphs [0014] to [0016], [0019], [0022] to<br>[0056], [0076] to [0089]; fig. 1 to 3, 19<br>(Family: none) | 22,24,25<br>23 |
| Y | JP 2003-30842 A (Toshiba Corp.),<br>31 January 2003 (31.01.2003),<br>paragraphs [0019] to [0024]; fig. 3, 4<br>(Family: none) | 23 |

Form PCT/ISA/210 (continuation of second sheet) (April 2007)

**INTERNATIONAL SEARCH REPORT**

| International application No. |
| --- |
| PCT/JP2009/005457 |

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
| --- | --- |

This International Searching Authority found multiple inventions in this international application, as follows:

The technical feature of the invention in claims 1-3, 7-9 and 16-18 is an arrangement relationship between a management data region and a test recording region.

The technical feature of the invention in claims 4-6 and 10-15 is arrangement of the management data region.

The technical feature of the invention in claims 19-23 is arrangement of the test recording region.

Therefore, the invention in claims 1-3, 7-9 and 16-18, the invention in claims 4-6 and 10-15, and the invention in claims 19-23 have different technical features, respectively, and do not fulfill the requirement of unity of invention.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 341 500 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004362748 A
- JP 2005038584 A
- JP 2002023542 A
- JP 2007521606 PCT
- JP 2007526595 PCT
- JP 2007521589 PCT
- JP 2008527602 PCT